# EUROPÄISCHE PATENTANMELDUNG

(11) **EP 4 625 576 A1**
(43) Veröffentlichungstag der Anmeldung: **01.10.2025**
(21) Anmeldenummer: 25164376.3
(22) Anmeldetag: 18.03.2025
(51) Int. Cl.: H01M 10/0525, H01M 10/0562

(54) **VERFAHREN ZUR OBERFLÄCHENMODIFIKATION VON METALLOXIDSUBSTRATEN**

(30) Priorität: 18.03.2024 DE 102024107590
(71) Anmelder: Forschungszentrum Jülich GmbH, 52428 Jülich (DE)
(72) Erfinder: LIU, Xiaochen, 52428 Jülich (DE); FINSTERBUSCH, Martin, 52428 Jülich (DE); FATTAKHOVA-ROLFING, Dina, 81547 München (DE); GUILLON, Martin, 52428 Jülich (DE)
(74) Vertreter: Gille Hrabal Partnerschaftsgesellschaft mbB Patentanwälte

(57) **Zusammenfassung**

Die vorliegende Erfindung betrifft ein Verfahren zur Oberflächenmodifikation von Metalloxidsubstraten, das dadurch gekennzeichnet ist, dass das Metalloxidsubstrat
(1) zunächst in Anwesenheit von Li⁺-Ionen mit einer organischen Säure, bei der es sich um eine Carbonsäure oder eine vinyloge Carbonsäure handelt, in Kontakt gebracht wird, und anschließend
(2) mit einer anorganischen Säure, bei der sich nicht um Fluorwasserstoff oder Flusssäure handelt, in Kontakt gebracht wird,
und dass die Verfahrensschritte (1) und (2) in Anwesenheit eines Lösungsmittels durchgeführt werden.

Die Erfindung betrifft weiterhin ein oberflächenmodifiziertes Metalloxidsubstrat, das durch das Verfahren erhalten wird, sowie dessen Verwendung zur Herstellung einer Batterie oder einer Batteriekomponente, und eine Batterie oder Batteriekomponente, die dieses oberflächenmodifizierte Metalloxidsubstrat umfasst.

## Beschreibung

Die Erfindung betrifft Metalloxidsubstrate mit einer modifizierten Oberfläche, ein nasschemisches Verfahren zu deren Herstellung, deren Verwendung in Batterien und Batteriekomponenten sowie die unter Verwendung derselben hergestellten Batterien und Batteriekomponenten.

### Beschreibung

Bei der Entwicklung von Batterien (Akkus), beispielsweise für Elektro-Fahrzeuge, aber auch für andere Einsatzzwecke wie tragbare elektronische Geräte und große Energiespeicher, stehen zwei Faktoren im Vordergrund: die Leistungsfähigkeit, die bei Elektrofahrzeugen die Reichweite der Fahrzeuge bestimmt, und die Kosten, die ausschlaggebend für die Wettbewerbsfähigkeit sind. Weiter spielt die Sicherheit eine große Rolle.

Li-lonen-Batterien, die einen flüssigen Elektrolyten beinhalten, bergen ein Sicherheitsrisiko, da der Elektrolyt bei hohen Temperaturen flüchtig ist und zu Bränden oder Explosionen führen kann. Zudem kann ihre Effizienz durch Ungleichmäßigkeiten und Instabilitäten in den anderen Batteriekomponenten eingeschränkt werden.

Ein vielversprechender Ansatz für kleinere, leichtere, deutlich leistungsstärkere und sicherere Akkus sind Festkörper-Zellen mit Anoden aus metallischem Lithium - statt aus Graphit. Anders als bei konventionellen Lithiumionen-Akkus, die einen flüssigen organischen Elektrolyten und eine Polymerfolie zur Trennung von Anoden- und Kathodenraum enthalten, sind bei Festkörperzellen alle Bestandteile Feststoffe. Eine dünne keramische Schicht fungiert gleichzeitig als Festelektrolyt und Separator. Sie wirkt sehr effektiv gegen gefährliche Kurzschlüsse durch das Wachstum von Lithium-Dendriten und thermisches Durchgehen. Zudem enthält sie keine leicht entflammbaren Flüssigkeiten.

Feststoff-Batterien mit Lithium-Metall als Anode werden als die nächste Generation von Energiespeichervorrichtungen angesehen, da Li-Metall eine 10-fach höhere Kapazität aufweist als traditionelle Graphit-Anoden. Feste Li-Ionen-Leiter-Elektrolyte bildeten daher in den vergangenen Jahren den Gegenstand des Interesses. Bei diesen Materialien handelt es sich vorwiegend um Metalloxidmaterialien. Der Lithium-Granat Li₇La₃Zr₂O₁₂ (LLZO) ist diesbezüglich ein sehr interessantes Material aufgrund der hohen Ionenleitfähigkeit von bis zu 10⁻³ S cm⁻¹, einer geringen elektronischen Leitfähigkeit von ≅ 10⁻⁸ S cm⁻¹, und des breiten elektrochemischen Stabilitätsfensters von 0-6 V gegen Li⁺/Li, mit Stabilität gegen Li-Metall und Kathoden mit hohem Potential. Außerdem ist LLZO wegen der hohen thermischen und mechanischen Stabilität ein interessantes Material für Feststoffbatterien.

Dotieren von LLZO mit Al, Nb, Ta, Ga etc., um Vakanzen zu erzeugen, und Sintern bei über 1000 °C sind wirksame üblicherweise eingesetzte Mittel, um kubisches LLZO bei Raumtemperatur (25 °C) zu stabilisieren.

Ein Nachteil von LLZO ist, dass es auch gemeinsam mit der Kathode bei mehr als 1050 °C gesintert werden muss, um es ausreichend zu verdichten und fest an die Elektrode zu binden. Temperaturen ab 600 °C destabilisieren jedoch nachhaltige Kobalt-reduzierte und Kobalt-freie Kathodenmaterialien und treiben zudem Produktionskosten sowie Energieverbrauch in die Höhe. Neue kostengünstigere, nachhaltigere Herstellungswege sind daher für eine Kommerzialisierung unabdingbar.

Bei Granat handelt es sich um eine große Materialfamilie der allgemeinen Formel X₃Y₂(ZO₄)₃. X und Y sind in dieser Schreibweise keine chemischen Elemente, sondern definierte Plätze im Kristallgitter. X sind vorwiegend zweiwertige Kationen, dodekaedrisch umgeben von acht Sauerstoffanionen, meist Mg²⁺, Fe²⁺, Mn²⁺ und Ca²⁺, aber auch Y³⁺ (hier bedeutet Y Yttrium) oder Na⁺. Y sind vorwiegend dreiwertige Kationen, oktaedrisch umgeben von 6 Sauerstoffanionen, meist Al³⁺, Fe³⁺, Cr³⁺ und V³⁺, aber auch Ti⁴⁺, Zr⁴⁺, Sn⁴⁺, Sb⁵⁺ oder Mg²⁺, Mn²⁺. Z sind vorwiegend vierwertige Kationen, tetraedrisch umgeben von vier Sauerstoffanionen, meist Si⁴⁺, aber auch Al³⁺, Fe³⁺, Ti⁴⁺, P⁵⁺, As⁵⁺, V⁵⁺. Als Anion fungiert meist O²⁻, selten auch (OH)⁻ oder F⁻.

Die ersten 2003 entwickelten Lithium-Granat-Verbindungen hatten die nominelle Formel Li₅La₃M₂O₁₂, wobei M = Nb, Ta. Seitdem wurden zahlreiche Li-Granat-Verbindungen mit der Formel LiₓA₃B₂O₁₂ (x = 5-7; A = La, Bi, Y, Al; B = Sc, Zr, Ti, Hf, Ta, Nb) untersucht. Relevant für feste Li-Ionenleiter ist die kubische Form der Li-Granate, die eine etwa 100-fach höhere Leitfähigkeit der Li-Ionen verglichen mit der tetragonalen Modifikation aufweist.

Bei Lithium-LLZO-Granaten handelt es sich um eine große Familie von Mischoxiden der Metalle Lithium, Lanthan, Zirkonium, die darüber hinaus Metall-Dopanden, ausgewählt aus Al, Ta, Ga, Nb, Ca und weiteren Metallen enthalten können.

Bevorzugt handelt es sich um Granate mit der allgemeinen Formel

Li_{7-3x-z}BₓLa_{3-y}A_{y}Zr_{2-z}M_{z}O₁₂,

wobei
A = Ba, Ca, Mg,
B = Al, Ga und
M = Nb, Ta,
0 ≤y <1,
0,05 ≤ x < 0,5, und
0 ≤ z <2.

Li, Zr und das Metall B liegen neben La also zwingend vor, während A und M optional sind.

Kubisches LLZO ist anfällig gegen Auslaugen von Li aufgrund von Protonenaustausch Li⁺→H⁺ und reagiert mit CO₂ und anderen in der Umgebung vorhandenen Verbindungen, insbesondere H₂O, und vor allem bei nasschemischer Behandlung mit protischen Lösungsmitteln. Dies führt zu Oberflächenabtragungen und Umstrukturierungen unter Bildung von Schichten mit hohem Widerstand. Weiterhin können dadurch pH-Änderungen z.B. von Lösungsmitteln bei der Bearbeitung eintreten, wie z.B. beim Siebdrucken oder Foliengießen (Tape Casting). Außerdem können Abbaureaktionen oder chemische Reaktionen mit weiteren Komponenten im Lauf der Herstellung von Batteriekomponenten eintreten, wie mit Bindemitteln, Dispergiermitteln oder Weichmachern (insbesondere mit Polymeren). LLZO weist eine schlechte Benetzbarkeit mit Lithium-Metall auf, hauptsächlich verursacht durch das Vorliegen einer Li-lonen-Isolationsschicht an der LLZO-Oberfläche, welche aus LiOH und Li₂CO₃ besteht. Diese führt zu einem Anstieg des Li/LLZO-Grenzflächenwiderstands und dadurch zu Hochspannungs-Polarisation beim Li-Plating/Stripping. Schlimmstenfalls resultiert sie in der Bildung von Li-Dendriten.

Um diese Probleme zu vermeiden, werden häufig Beschichtungen auf das LLZO aufgebracht, entweder auf das LLZO-Pulver oder aber auf die daraus hergestellten Komponenten, wie z.B. poröse Separatoren. Typische dafür aus der Literatur bekannte Verfahren sind:
- Aufbringen von ZnO-Nano-Filmen mit Hilfe von ALD (atomic layer deposition) (C. Wang et al., Conformal, Nanoscale ZnO Surface Modification of Garnet-Based Solid-State Electrolyte for Lithium Metal Anodes, Nano Lett. 2017, 17, 1, 565-571, veröffentlicht am 12. Dezember 2016). Das ALD-Verfahren ist teuer und zeitaufwendig und für Pulver schwer anzuwenden.
- Aufbringen von Al₂O₃-Beschichtungen mit Hilfe von Hochfrequenz-Sputtern (HF-Sputtern, RF sputtering, radio-frequency sputtering) oder ALD, ebenfalls teuer, nicht skalierbar und für Pulver unmöglich. (Y. Ren et al., All Solid-State Li/LLZO/LCO Battery Enabled by Alumina Interfacial Coating, J. Electrochem. Soc. 169, 2022, 040529, veröffentlicht am 14. April 2022).
- Aufbringen einer Au-Nanopartikel-Beschichtung (Au-Cluster) durch Sputtern und Erhitzen (C. Haslam et al., Stable Lithium Plating in "Lithium Metal-Free" Solid-State Batteries Enabled by Seeded Lithium Nucleation, J. Electrochem. Soc. 2023, 170, 040524, veröffentlicht am 25. April 2023). Das Verfahren ist teuer, nicht skalierbar und nicht für Pulver anwendbar.
- Aufbringen von Sb-Metall-Dünnfilmen durch HF-Sputtern, mit denselben Nachteilen wie die der vorgenannten Verfahren (R. Dubey et al., Building a Better Li-Garnet Solid Electrolyte/Metallic Li Interface with Antimony, Adv. Energy Mater. 2021, 11, 2102086, veröffentlicht am 1. September 2021)
- Aufbringen von amorphem LLZO auf LLZO durch Sputtern ohne Glühen, um eine amorphe Phase zu erhalten (J. Sastre et al., Blocking lithium dendrite growth in solid-state batteries with an ultrathin amorphous Li-La-Zr-O solid electrolyte, Communications Materials https://doi.org/10.1038/s43246-021-00177-4, veröffentlicht online am 14. Juli 2021). Das Verfahren ist teuer und nicht für Pulver anwendbar.
- Aufbringen von SnO₂, Graphit, Mg, Ge, Si oder Sn als dünne Beschichtungen (s. R. Dubey et al., a.a.O., S. 1 von 12, rechte Spalte)
- Mechanisches Polieren (s. J. Leng et al., A facile and low-cost wet-chemistry artificial interface engineering for garnet-based solid-state Li metal batteries, Nano Energy 101, October 2022, 107603)
- Kurze Säurebehandlung (1 M HCl während 30 s) zur Entfernung oberflächlicher Li₂Co₃-Schichten (Leng et al., a.a.O.)
- Einbringen sekundärer Interphasen durch in-situ-Reaktionen mit Li-Metall einschließlich Legierungen (Si, Al, Au, Sn), anorganischer Verbindungen (MoS₂, Cu₃N, AgNO₃, C₃N₄, Graphit und fester Elektrolyte (Li₃PO₄, PEO, Li₃N). Als Verfahren zum Aufbringen dieser Interphasen werden ALD, Magnet-Sputtern, Elektronenstrahlevaporation, Plasma-verstärkte chemische Dampfabscheidung (plasma-enhanced chemical vapor deposition (PECVD) und thermische Evaporation angewendet (Leng et al., a.a.O.)

Diese bekannten Verfahren zur Stabilisierung von LLZO oder LLZTO sind zeitaufwendig und teuer. Die Verfahren können (außer im Fall der Gold- bzw. Sb-Beschichtung) nur Metalloxidbeschichtungen ausbilden, die nur nach Reaktion mit Lithium-Metall wirken können und den Li-Ionentransport verlangsamen. Die Metalloxidbeschichtungen haben außerdem negative Auswirkungen auf die Kathodenseite oder Hybridmembranen aus Polymer-Keramik-Hybridmaterialien, die durch eine solchen Beschichtung beschädigt werden Die Verfahren sind nur auf LLZO-Pellets oder -Bauteilen anwendbar, nicht auf LLZO-Pulvern.

Die Behandlung von LLZO mit Säuren wird beispielsweise in den Patentschriften US 2021/0242495 A1 und US 2023/0125144 A1 beschrieben.

In US 2021/0242495 A1 erfolgt durch die Durchführung eines oder zweier Säurebehandlungsschritte, gegebenenfalls mit der nachfolgenden Reinigung durch ein Reinigungsmittel wie z.B. Ethanol, eine Oberflächenreinigung, bei der an der Oberfläche gebildetes Lithiumcarbonat entfernt und die Oberfläche der LLZO-Substrate protoniert wird, also ein Austausch von Li-Kationen gegen Protonen stattfindet.

In US 2023/0125144 A1 wird ebenfalls die Behandlung der Oberfläche eines Lithiumgranats mit einer Säure beschrieben, wobei die Behandlung zur Schaffung einer porösen Struktur und der Entfernung von LiOH und/oder Li₂CO₃ von der Oberfläche und der Bereitstellung einer weniger Luft-, Feuchtigkeit und CO₂-empfindlichen protonierten Oberfläche dient.

Die Zielsetzung der Säurebehandlung in den beiden genannten Anmeldungen, nämlich die Bildung einer protonierten Oberfläche und gegebenenfalls der Schaffung poröser Strukturen durch Ätzung, also durch Abtragung des Lithiumgranat-Materials, unterscheidet sich damit grundsätzlich von der Zielsetzung des vorliegenden Verfahrens, bei dem sowohl die Bildung protonierter Oberflächen sowie die Ätzung der verwendeten Substrate vermieden werden soll.

Darüber hinaus gibt es nasschemische Verfahren zum Beschichten und Stabilisieren von LLZO oder LLZTO wie folgt:
- Nasschemisches Beschichten mit InCl/LiCl unter Verwendung einer 0,05 M InCl₃-Lösung in Isopropanol, H₂O ≤ 40 ppm. Es werden Pellets aus Li_{6,4}La₃Zr_{1,4}Ta_{0,6}O₁₂ (LLZTO) durch Eintauchen für nur 30 s beschichtet, wobei eine homogene und fest anhaftende lithiophile Grenzfläche aus InLiₓ-Nanopartikeln, eingebettet in eine LiCI-Matrix, gebildet wird (S. Leng et al., a.a.O).
- Nasschemisches Beschichten mit Li-Halogeniden (Z. Zhang et al., Lithium halide coating as an effective intergrain engineering for garnet-type solid electrolytes avoiding high temperature sintering, Electrochim. Acta 289, 2018, 254-263, veröffentlicht 1. November 2018). Hier wird Al- und Ta-co-dotiertes Li_{6,5}La₃Zr_{1,75}Ta_{0,25}O₁₂ (LLZTO), mit LiCl, LiBr oder LiI beschichtet, indem die LLZTO-Pulver mit einer geeigneten Menge an LiX in Ethanol oder Wasser gleichmäßig angefeuchtet wurden und das Lösungsmittel im Anschluss bei 160 °C verdampft wurde.

Diese Verfahren sind zwar kostengünstig, einfach durchführbar und für LLZO-Pulver anwendbar, die beschichteten Pulver sind jedoch nicht geeignet für die weitere Verarbeitung, da die Halogenide sich im Lösungsmittel der nachfolgenden Bearbeitungsschritte lösen würden.

US 2021/0257656 A1 offenbart ein nasschemisches Verfahren zur Herstellung von Li₃PO₄-beschichtetem dotiertem LLZO. Das LLZO in Pulverform, an dessen Oberfläche sich durch Luftkontakt eine Schicht oder eine Doppelschicht aus LiOH und/oder Li₂CO₃ gebildet hat, wird in wässrige Phosphorsäure, ggf. mit Ethanol und NaOH, gegeben und gerührt, bis keine CO₂-Bläschen mehr erkennbar sind, und anschließend abfiltriert, mit wasserfreiem Ethanol gewaschen und bei 80 °C über Nacht getrocknet. Das hier offenbarte LLZO hat insbesondere die Formel Li_{7-3x-y}AlₓLa₃Zr_{2-y}M_{y}O₁₂, wobei M = Ta, Nb oder eine Kombination davon, 0 ≤ x ≤1, und 0 ≤ y ≤ 1; Li_{6,5}La₃Zr_{1,5}M_{0,5}=12, wobei M = Nb, Ta oder eine Kombination davon; Li₇₋ₓLa₃Zr₂₋ₓBiₓO₁₂, wobei 0 ≤ x ≤ 1; Li_{6,2}Ga_{0,3}La_{2,95}Rb_{0,05}Zr₂O₁₂, Li_{6,65}Ga_{0,15}La₃Zr_{1,9}Sc_{0,1}.

Lee et al.: "Suppressing Unfavorable Interfacial Reactions Using Polyanionic Oxides as Efficient Buffer Layers: Low-Cost Li3PO4 Coatings for Sulfide-Electrolyte-Based All-Solid-State Batteries", ACS Applied Materials & Interfaces 15 (10), veröffentlicht am 7. März 2023, offenbart die Bildung von Li₃PO₄ als Beschichtungsmaterial für Bestandteile von Festkörperbatterien, insbesondere für Li-haltige Metalloxidkathodenmaterialien, die mit Sulfid-Elektrolyten in Kontakt stehen, unter Verwendung von Ausgangsmaterialien wie Polyphosphorsäure und Lithiumacetat. Speziell wird die Bildung einer Li₃PO₄-Schicht auf Lithium-Nickel-Kobalt-Mangan-Oxid-Teilchen durch das Auflösen einer der drei Lithium-Quellen Lithiumethoxid, Lithiumacetat und Lithiumnitrat mit Polyphosphorsäure in Ethanol, die Zugabe der Lithium-Nickel-Kobalt-Mangan-Oxid-Teilchen und anschließendes Rühren bei 70 °C bis zum Verdampfen des Lösungsmittels, gefolgt von Trocknung im Vakuumofen und einer Wärmebehandlung bei 400 °C, offenbart. Die so beschichteten Teilchen wurden in Sulfidelektrolyt-basierten Festkörperbatterien getestet.

Neben den oben beschriebenen Materialien, die Li-lonen-Leitfähigkeit aufweisen und zumeist selbst Li⁺-Ionen enthalten, finden in Feststoffzellen, Energiespeichern und anderen energietechnischen oder elektrochemischen Vorrichtungen und deren Bauteilen auch Metalloxidmaterialien Verwendung, die keine Li⁺-Ionen enthalten und zumeist keine Li-lonen-Leitfähigkeit aufweisen. Diese Materialien, etwa inerte Füllstoffe wie Al₂O₃ oder TiO₂, sind zumeist wesentlich einfacher und günstiger erhältlich als die oben beschriebenen Li-lonen-leitenden Materialien, wie z.B. LLZO, und ihre Verwendung als Füllstoffe etwa in gesinterten Bauelementen oder Separatoren auf Polymerbasis kann die Menge benötigter Li-lonen-leitender Materialien und somit die Kosten senken.

Croce, F.et al.: "Nanocomposite polymer electrolytes for lithium batteries", Nature 394, 456-458 (1998) offenbart die Verwendung von nicht beschichteten Al₂O₃- und TiO₂-Pulvern mit Teilchengrößen im ein- und niedrigen zweistelligen Nanometerbereich als inaktive Füllstoffe in Polymerelektrolyten, bei denen es sich um Komplexe eines Lithiumsalzes (LiX) mit einem Polyethylenoxid (PEO)-Polymer handelt.

Bei der Untersuchung der temperaturabhängigen Leitfähigkeit wurde bei der Verwendung der keramischen Pulver als feste Weichmacher für das PEO-Polymer eine Verbesserung der Leitfähigkeit beobachtet, da die Kristallisation des PEO-Polymers unterhalb 60 °C so unterbunden wird.

Grundsätzlich kann bei der Verwendung nicht-Li⁺-haltiger Metalloxidmaterialien jedoch die Funktionalität der erhaltenen Bauteile durch die mangelnde Leitfähigkeit reduziert oder vollständig gestört werden. Die Bereitstellung von Nicht-Li⁺-haltigen Metalloxiden, die eine verbesserte Grenzflächenleitfähigkeit aufweisen und bei Verwendung die Funktionalität der sie enthaltenden Bauelemente weniger einschränken, ist daher technisch erstrebenswert.

In DE102012000910 A1 wird ein Separator für eine elektrochemische Zelle offenbart, der eine poröse Schicht umfasst, die mindestens ein Blockcopolymer als Binder und als Hauptbestandteil ein Aluminiumoxid oder -hydroxid enthält. Um die Dispergierbarkeit der Aluminiumoxidpartikel in Lösungsmitteln zu erhöhen und so die Kombinierbarkeit mit Blockcopolymeren als Bindemitteln, die in organischen Lösungsmitteln löslich sind, zu verbessern, wird die Oberfläche der Aluminiumoxidpartikel mit Silanen oder durch anorganische oder organische Säuren modifiziert.

Vor diesem Hintergrund besteht die Aufgabe der Erfindung in der Bereitstellung eines einfach durchführbaren, kostengünstigen Verfahrens zur Modifikation der Oberfläche von Metalloxidsubstraten, zum Beispiel der Oberfläche von LLZO und LLZTO, insbesondere in Pulverform, zwecks Stabilisierung der Oberfläche in Luft, insbesondere feuchtigkeitshaltiger Luft, in verschiedenen Lösungsmitteln und unter verschiedenen Verarbeitungsbedingungen.

Eine Aufgabe besteht in der Bereitstellung eines Verfahrens zur Modifikation der Oberfläche, die die Zersetzung bzw. Abbau des Materials der Metalloxidsubstrate verringert und die Grenzflächenleitfähigkeit bei der Verwendung in einem das Metalloxidsubstrat beinhaltenden Bauteil verbessert, und somit einen günstigen

Einfluss auf die Leitereigenschaften des Bauteils ausübt. Die Aufgabe besteht weiterhin in der Bereitstellung der resultierenden oberflächenmodifizierten Metalloxidsubstrate, insbesondere von oberflächenmodifziertem LLZO-Pulver oder Al₂O₃-Pulver.

Die Aufgabe der Erfindung wird gelöst durch das Verfahren nach Anspruch 1 und die Ausführungsformen des erfindungsgemäßen Verfahrens, die im Folgenden beschrieben werden. Bevorzugte Ausführungsformen sind in den Ansprüchen 2 bis 19 definiert.

Die oberflächenmodifizierten Teilchen weisen eine höhere Beständigkeit bei der Lagerung an der Umgebungsluft ohne besondere Schutzmaßnahmen sowie bei der Verwendung in Bauteilen von Feststoffbatterien auf, weiterhin weisen sie eine verbesserte Leitungsfähigkeit gegenüber herkömmlichen Metalloxidsubstraten auf oder eine gleichwertige Leitungsfähigkeit gegenüber Metalloxidsubstraten, die mit aufwändigeren und kostspieligeren Verfahren bearbeitet wurden.

### Zusammenfassung der Erfindung

Die vorliegende Erfindung betrifft ein Verfahren zur Oberflächenmodifikation von Metalloxidsubstraten, dadurch gekennzeichnet, dass das Metalloxidsubstrat
(1) zunächst in Anwesenheit von Li⁺-Ionen mit einer organischen Säure, bei der es sich um eine Carbonsäure oder eine vinyloge Carbonsäure handelt, in Kontakt gebracht wird, und anschließend
(2) mit einer anorganischen Säure, bei der sich nicht um Fluorwasserstoff oder Flusssäure handelt, in Kontakt gebracht wird,
und dass die Verfahrensschritte (1) und (2) in Anwesenheit eines Lösungsmittels durchgeführt werden.

Darüber hinaus betrifft die Erfindung ein oberflächenmodifiziertes Metalloxidsubstrat, das durch das erfindungsgemäße Verfahren erhalten wird, die Verwendung des erfindungsgemäßen oberflächenmodifizierten Metalloxidsubstrates zur Herstellung einer Batterie oder einer Batteriekomponente, sowie eine Batterie oder Batteriekomponente, die das erfindungsgemäße oberflächenmodifizierte Metalloxidsubstrat umfasst.

### Detaillierte Beschreibung der Erfindung

### Metalloxidsubstrate:

Im Sinn der vorliegenden Erfindung bezeichnet der Begriff "Metalloxidsubstrat" jede Form, in der ein Metalloxid vorliegt, das dem erfindungsgemäßen Verfahren unterworfen wird. Hierzu muss das Metalloxid im festen Zustand vorliegen, wobei die Größe der zusammenhängenden Einheiten des Metalloxids nicht allgemein beschränkt ist. Der Begriff umfasst somit makroskopische Bauteile und Bauelemente, die beispielsweise durch Sintern kleinerer Einheiten wie Pulver in einer Form erhalten werden können, als auch Pellets, Granulate und Pulver mit mittleren Teilchengrößen im Mikrometer- und Nanometerbereich.

Die Bestimmung der mittleren Teilchengröße erfolgt bei Pulvern und Granulaten erfindungsgemäß bevorzugt durch laserdiffraktometrische Analyse der Teilchengrößenverteilung, speziell mittels Laserdiffraktometrie nach ISO-13320 unter Nutzung des Gerätes Horiba LA-950-V2 und der zugehörigen Software Version 9.3.

Der Begriff "mittlere Teilchengröße" bezieht sich erfindungsgemäß auf den D50-Wert (auch als "d50" bezeichnet) der Teilchengrößenverteilung eines Pulvers oder Granulats. Der Begriff "D50-Wert der Teilchengrößenverteilung" bedeutet, dass 50% (nach Volumen) der Teilchen eine Teilchengröße über dem D50-Wert des Pulvers oder Granulats, und 50% (nach Volumen) der Teilchen eine Teilchengröße unter dem D50-Wert des Pulvers oder Granulats, ausgedrückt in nm, µm oder mm, haben.

Der Begriff "Metalloxid" bezeichnet hierbei zunächst eine chemische Verbindung, die eine Verbindung zwischen einem oder mehreren Metallen und Sauerstoff ist. Die Verbindung kann darüber hinaus auch Atome bzw. Ionen von Nichtmetallelementen enthalten.

Als Metall werden im Sinn der vorliegenden Erfindung alle Elemente betrachtet, die aus allen Alkali- und Erdalkalimetallen, allen Nebengrupenelementen sowie den Elementen Al, Si, Ga, Ge, As, In, Sn, Sb, TI, Pb und Bi ausgewählt sind.

Zu den Metalloxiden zählen im Sinn der vorliegenden Erfindung Verbindungen zwischen Metallatomen und Sauerstoffatomen mit der allgemeinen Formel MₓO_{y}, wobei M für ein Metallatom steht, O für Sauerstoff und x und y die Stöchiometrie der Verbindung angeben. Wenn alle Metallatome Atome des gleichen Elements sind, handelt es sich um ein binäres Metalloxid; enthält das Metalloxid zwei oder mehr Metallelemente, handelt es sich um ein Mischoxid. Darüber hinaus zählen zu den Metalloxiden gemäß der vorliegenden Erfindung auch Verbindungen, die Metallatome und Sauerstoffatome kovalent gebunden in Oxoanionen, bevorzugt in Form von Phosphat-Ionen und/oder Silikat-Ionen, enthalten.

Bevorzugt weisen die Metalloxidsubstrate gemäß der vorliegenden Erfindung eine kristalline Bulk-Struktur auf, da solche Metalloxidsubstrate über eine hohe Leitfähigkeit verfügen können. Die Struktur kann ebenfalls amorph sein oder ein Gemisch aus amorphem und kristallinem Material bzw. Materialbereichen sein.

Bei den Metalloxiden der Metalloxidsubstrate gemäß der Erfindung kann es sich um dotierte Metalloxide handeln, bei denen geringe Mengen von Fremdatomen, bevorzugt Metallatomen, in das Grundmaterial eingebracht wurden, um die Leitfähigkeit oder die Stabilitätseigenschaften des Materials zu verändern.

In Bezug auf die Li-Ionenleitfähigkeit der Metalloxidsubstrate, die dem erfindungsgemäßen Verfahren unterworfen werden, wird zwischen aktiven Grundmaterialien und inerten Grundmaterialien unterschieden. Diese Bezeichnungen nehmen Bezug auf die Fähigkeit der Teilnahme der Materialien an der Lithiumionenleitung, beispielsweise bei der Verwendung in Separatorenmaterialien für Festkörperbatterien mit Li-Anoden. Aktive Metalloxidsubstrate weisen Lithiumionenleitfähigkeit auf, inerte Metalloxidsubstrate weisen keine Lithiumionenleitfähigkeit auf. Hierbei zeichnen sich aktive Metalloxidsubstrate über eine Li-Ionenleitfähigkeit bei Raumtemperatur (25 °C) im Bereich von 1*10⁻⁷ bis 1*10⁻¹ S/cm, bevorzugt 1*10⁻⁵ bis 1*10⁻¹ S/cm, und am bevorzugtesten 1*10⁻³ bis 1*10⁻¹ S/cm aus, inerte Metalloxidsubstrate weisen eine Li-Ionenleitfähigkeit bei Raumtemperatur (25 °C) unter 1*10⁻⁷ S/cm auf.

Die Li-Ionenleitfähigkeit von Metalloxidsubstraten und oberflächenmodifizierten Metalloxidsubstraten kann mit dem Fachmann geläufigen Verfahren bestimmt werden. Erfindungsgemäß bevorzugt wird die Li-Ionenleitfähigkeit der Metalloxidsubstrate bei Raumpemperatur (25 °C) mittels Impedanzanalyse mit blockierenden Elektroden (z.B. Ni, Au oder Pt, bevorzugt Ni), bevorzugt am dichten Material (>90% theoretische Dichte) im Bereich 3 MHz bis 0,01 Hz mit einer Amplitude von 10 mV und mindestens 5 Messpunkten pro Dekade bei 25 °C gemessen, z.B. mit einem "VMP300 Potentiostat/EIS" der Firma "Biologic" und Analyse mittels der Software "RelaxIS Version 3").

Während viele Materialien, die gute Li-Ionenleitfähigkeit aufweisen und damit aktive Metalloxidsubstrate sind, selbst Li-Ionen enthalten, gibt es auch Materialien, die aktive Metalloxidsubstrate sind, jedoch selbst keine Li-Ionen enthalten, z.B. β"-Aluminat, oder FePO₄ in Olivinstruktur (Li₁₋ₓFePO₄ mit x=1).

Ebenso gibt es Li-lonen-haltige inerte Metalloxidsubstrate, die zwar Li-Ionen enthalten, jedoch trotzdem, z.B. wegen der geringen Mobilität von Li-Ionen in dem Material, keine oder nur geringe Li-lonen-Leitfähigkeit aufweisen und daher inerte Metalloxidsubstrate darstellen, z.B. Li₄Ti₅O₁₂ mit einer Leitfähigkeit bei Raumtemperatur (25 °C) von < 1*10⁻⁹ S/cm oder undotiertes Li₇La₃Zr₂O₁₂ in einer tetragonalen Kristallstruktur (t-LLZO) mit einer Leitfähigkeit bei Raumtemperatur (25 °C) von < 1*10⁻⁷ S/cm.

Im Zusammenhang mit der vorliegenden Erfindung wird besonders zwischen Li⁺-haltigen Metalloxidsubstraten und nicht-Li⁺-haltigen Metalloxidsubstraten unterschieden.

Dementsprechend werden vor allem Li⁺-haltige Metalloxidsubstrate in Pulverform bei der Verwendung in Festelektrolyten für Festkörperakkumulatoren und -Batterien als aktive Füllstoffe verwendet, nicht-Li⁺-haltige Metalloxidsubstrate häufig als inerte Füllstoffe.

Beispiele für aktive Li⁺-haltige Metalloxidsubstrate sind kubisches Lithium-Lanthan-Zirkoniumoxid (c-LLZO), Lithium-Lanthan-Titanat (LLTO), Lithium-Aluminium-Titanphosphat (LATP) und Lithium-Aluminium-Germanium-Phosphat (LAGP), wobei c-LLZO bevorzugt ist. Diese aktiven Li⁺-haltigen Metalloxidsubstrate können mit Al, Ta, Ga, Ba, Ca, Nb, In, Sn, Bi, Ge, Sr und weiteren Metallen dotiert sein, wobei Al, Ta und Ga als Dotierstoffe bevorzugt sind. LLZO, das mit Al, Ta oder Ga dotiert ist, stellt besonders bevorzugte Metalloxidsubstrate dar, z.B. Lithium-Lanthan-Zirkonium-Tantaloxid (LLZTO).

Beispiele für Li⁺-haltige inerte Metalloxidsubstrate sind Li₄Ti₅O₁₂ (LTO) und tetragonales LLZO (t-LLZO) mit der Formel Li₇La₃Zr₂O₁₂. LTO stellt hierbei ein bevorzugtes Li⁺-haltiges inertes Metalloxidsubstrat dar.

Beispiele für nicht-Li⁺-haltige, inerte Metalloxidsubstrate sind TiO₂, ZrO₂, MgO, SiO₂ und Al₂O₃, wobei Al₂O₃ besonders bevorzugt ist.

Während im erfindungsgemäßen Verfahren mindestens ein Metalloxidsubstrat den Bedingungen gemäß der vorstehenden Definition unterworfen wird, können auch zwei oder mehr verschiedene Metalloxidsubstrate gleichzeitig dem Verfahren unterworfen werden.

### Oberflächenmodifikation

Die Oberflächenmodifikation der Metalloxidsubstrate erfolgt durch die Anwendung des erfindungsgemäßen Verfahrens auf die Metalloxidsubstrate.

Die Oberflächenmodifikation bewirkt den Effekt einer Verbesserung der Leitfähigkeit und der Haltbarkeit von Separatorenmaterialien, die das modifizierte Metalloxidsubstrat enthalten, in Festkörperbatterien gegenüber den entsprechenden nicht modifizierten oder nach herkömmlichen Verfahren modifizierten Metalloxidsubstraten. Die oberflächenmodifizierten Teilchen selbst zeichnen sich durch eine erhöhte Stabilität gegenüber Luftfeuchtigkeit, Lösungsmitteln und den Bedingungen in verschiedenen Verarbeitungsverfahren aus, wodurch die Zersetzung bzw. Umwandlung der Teilchen bei der Lagerung und Verarbeitung verringert wird, und die Grenzflächenleitfähigkeit zwischen den Teilchen und einem umgebenden Medium verbessert wird.

Auch wenn die genaue Ursache für diese Effekt noch Gegenstand von Untersuchungen ist, besteht derzeitig die Annahme, dass das Verfahren durch die Auswahl der Verfahrensbedingungen, insbesondere der Säuren und der vorgegebenen Abfolge der Zugabe der Säuren, gewährleistet, dass sich an der Oberfläche des Metalloxidsubstrates eine Li⁺-Kationen und Anionen der anorganischen Säure enthaltende Schichtstruktur bzw. Anordnung bildet, die eine gute Stabilität gegenüber Feuchtigkeit und Lösungsmitteln aufweist, deren Aufbau das Material der oberflächenmodifizierten Metalloxidsubstrate vor äußeren Einflüssen abschirmt und zugleich einen günstigen Einfluss auf die Lithiumionenleitung hat.

Es besteht die Theorie, dass durch die Zugabe einer organischen Säure in Anwesenheit eines Lösungsmittels zunächst an der Oberfläche des Metalloxidsubstrats anhaftendes LiOH, Li₂CO₃ oder ähnliche Salze entfernt und in das entsprechende Lithiumsalz der organischen Säure überführt werden. Diese liegen im Anschluss an das in-Kontakt-bringen des Metalloxidsubstrates mit der organischen Säure in dem Lösungsmittel und, in nicht genau bekannter Weise adsorbiert, an der Oberfläche des Metalloxidsubstrates vor.

Die Oberflächenmodifikation des erfindungsgemäßen Verfahrens unterscheidet sich daher grundlegend von literaturbekannten Oberflächenmodifikationen durch Ätz- und Reinigungsverfahren mit meist starken Säuren, die der Oberflächenreinigung und dem Ätzen poröser Strukturen dienen und das Ziel haben, durch Li-H-Austausch eine weitgehend protonierte Oberfläche zu schaffen und/oder durch Abtrag des LLZO-Materials poröse Strukturen zu ätzen.

Im vorliegenden Verfahren ist die Schaffung protonierter Oberflächen keine Voraussetzung, und der Abtrag des Materials des Metalloxidsubstrats soll verhindert werden, was durch die Wahl geeigneter Säuren, geeigneter Konzentrationen derselben in den Verfahrensschritten und geeigneter Kontaktdauern gewährleistet wird. Wesentlich ist vielmehr die Anwesenheit von Li⁺-Ionen in dem Lösungsmittel und/oder an der Oberfläche des Metalloxidsubstrates bei dem In-Kontakt-bringen mit einer organischen Säure im ersten Verfahrensschritt, auf den im zweiten Verfahrensschritt das In-Kontakt-bringen mit der gewählten anorganischen Säure folgt.

In dem Fall der nicht-Li⁺-haltigen Metalloxidsubstrate, die selbst keine Li⁺-Ionen enthalten und folglich zunächst auch keine Oberflächenschicht von LiOH, Li₂CO₃ oder anderen Lithiumsalzen aufweisen können, wird der oben für die Li⁺-haltigen Metalloxidsubstrate beschriebene Zustand dadurch erreicht, dass erfindungsgemäß zum Zeitpunkt der Zugabe der organischen Säure ein Li⁺-Salz in dem Lösungsmittel und/oder an der Oberfläche des Metalloxidsubstrates vorliegen muss. Dieses Salz muss also vor oder während der Zugabe der organischen Säure zu dem Metalloxidsubstrat zugegeben werden.

Nach der Zugabe der organischen Säure liegt das Lithiumsalz der organischen Säure im Lösungsmittel und teilweise adsorbiert an der Oberfläche des Metalloxidsubstrates vor.

Mit der anschließenden Zugabe der anorganischen Säure werden die Anionen der organischen Säure teilweise oder ganz aus dem Lithiumsalz der organischen Säure verdrängt, und eine Anordnung von Li⁺-Kationen und den Anionen der organischen Säure, zum Beispiel H₃PO₄, bildet sich im Bereich der Oberfläche des Metalloxidsubstrates. Es wird angenommen, dass es sich bei dieser vermutlich schichtartigen Anordnung um die Oberflächenmodifikation handelt, die für die beschriebenen Effekte der Anwendung des Verfahrens auf die Metalloxidsubstrate verantwortlich ist.

Im Fall der nicht-Li⁺-haltigen Metalloxidsubstrate weisen Materialien, insbesondere Polymerelektrolyte wie beispielsweise Polyethylenoxid (PEO)-Polymere oder Poly(vinylidenfluorid-co-hexafluorpropylen) (PVDF)-Polymere, die die oberflächenmodifizierten Metalloxidsubstrate enthalten, gegenüber den entsprechenden Medien mit unbehandelten nicht-Li⁺-haltigen Metalloxidsubstraten eine verbesserte Leitfähigkeit auf, was vermutlich auf die beschriebene Form der Beschichtung der Metalloxidsubstrate und deren Beteiligung an der Lithiumionenleitung zurückzuführen ist. Im Fall der Li⁺-haltigen Metalloxidsubstrate weisen Medien, die die Metalloxidsubstrate enthalten, ebenfalls eine verbesserte Leitfähigkeit auf, zusätzlich jedoch eine erhöhte Stabilität der Lithiumionenleitfähigkeit beim Durchlaufen einer Vielzahl von Leitungszyklen, da es zu weniger Abbauerscheinungen des Materials der Metalloxidsubstrate im Bereich von Grenzflächen kommt, und sich dort keine Schichten mit hohen Widerständen bilden.

Zur Durchführung des erfindungsgemäßen Verfahrens wird im ersten Verfahrensschritt (1) das Metalloxidsubstrat in Anwesenheit eines Lösungsmittels und in Anwesenheit von Li⁺-Ionen mit einer organischen Säure in Kontakt gebracht.

### Anwesenheit eines Lösungsmittels

Gemäß der vorliegenden Erfindung handelt es sich bei einem Lösungsmittel um eine Verbindung, die unter den Bedingungen des Verfahrens flüssig ist, oder eine Mischung von zwei oder mehr Verbindungen, die unter den Bedingungen des Verfahrens flüssig ist. Auch der zweite Schritt (2) des Verfahrens findet in der Anwesenheit eines solchen Lösungsmittels statt.

Entsprechend liegt in dem Fall, dass es sich bei dem Metalloxidsubstrat um ein Pulver handelt, in den Schritten (1) und (2) des erfindungsgemäßen Verfahrens typischerweise eine Dispersion bzw. eine Suspension des Metalloxidsubstrates in dem Lösungsmittel vor, im Folgenden auch als Aufschlämmung bezeichnet. Wenn das Metalloxidsubstrat in Form größerer Einheiten wie makroskopischen Bauteilen, Pellets oder einem Granulat vorliegt, befinden sich dieses typischerweise in einem Behälter zur Durchführung des Verfahrens, etwa einem Tauchbad, in dem die Oberfläche des Metalloxidsubstrates vollständig mit Lösungsmittel bedeckt wird. Unabhängig von der Form des Metalloxidsubstrates ist es bevorzugt, dass das Lösungsmittel während des Verfahrens bewegt wird, etwa durch Umwälzung, Rühren oder Schütteln. In dem Fall, dass das Metalloxidsubstrat als Pulver in einer Aufschlämmung vorliegt, wird diese bevorzugt während des Verfahrens gerührt, wobei je nach Größe des Reaktionsgefäßes oder Reaktors ein dem Fachmann bekannter geeigneter Rührmechanismus gewählt wird. Neben dieser bevorzugten Form der Anwesenheit des Lösungsmittels durch vollständiges permanentes Eintauchen kann das Lösungsmittel auch durch kontinuierliches Besprenkeln, Besprühen oder wiederholtes Eintauchen erzielt werden, wobei entscheidend ist, dass die Oberfläche des Metalloxidsubstrates vollständig mit dem Lösungsmittel in Kontakt stehen kann.

Grundsätzlich kann jede Verbindung, die bei der Verfahrenstemperatur flüssig vorliegt, als Lösungsmittel verwendet werden. Bevorzugt sind protische oder aprotische polare Lösungsmittel, die neben Wasser, Alkoholen, Ethern und Polyethern auch organische Ester, Polyester, Ketone, z.B. Aceton oder Methylethylketon (MEK), organische Amide, z.B Dimethylformamid (DMF), Sulfoxide, z.B. Dimethylsulfoxid (DMSO), oder organische Carbonate, z.b. Dimethylcarbonat oder Ethylencarbonat, sowie Gemische dieser Arten von Lösungsmitteln beinhalten.

Polare Lösungsmittel sind auch deshalb bevorzugt, weil sowohl die organischen als auch die anorganischen Säuren gemäß der vorliegenden Erfindung und deren Salze grundsätzlich eine gute Löslichkeit in diesen Lösungsmitteln aufweisen.

Als Lösungsmittel geeignete Alkohole sind Alkohole mit 1 bis 10 Kohlenstoffatomen, bevorzugt Mono-oder Dialkohole mit 1 bis 10 Kohlenstoffatomen, weiter bevorzugt Alkanole und Alkandiole mit 2 bis 10 Kohlenstoffatomen, wobei die Alkylgruppen der Alkanole und die Alkylengruppen der Alkandiole linear, verzeigt oder cyclisch sein können. Hierin weiter bevorzugt sind Methanol, Ethanol, n-Propanol, i-Propanol, n-Butanol, i-Butanol, sec-Butanol, tert-Butanol, n-Pentanol und entsprechende Isomere, Cyclopentanol, n-Hexanol und entsprechende Isomere, Cyclohexanol, Heptanol und entsprechende Isomere und Octanol und entsprechende Isomere, Ethandiol, Propandiol, Butandiol, Pentandiol, Hexandiol und Diethylenglycol.

Als Lösungsmittel bevorzugte Etherverbindungen sind lineare oder cyclische Mono-, Di- und Trietherverbindungen, also Verbindungen, die eine, zwei oder drei Ethergruppen enthalten, bevorzugter sind Mono-, Di- und Trietherverbindungen mit 4 bis 12 Kohlenstoffatomen. Hierin weiter bevorzugt sind Diethylether, Methyl-tert-butylether, Diisopropylether, Dibutylether, Tetrahydrofuran, Methyltetrahydrofuran, 1,4-Dioxan, 1,2-Dimethoxyethan und Diethylenglycoldimethylether.

Als Lösungsmittel bevorzugte Polyetherverbindungen sind Polyethylenglycole und Polypropylenglycole sowie EO/PO-Blockcopolymere jeweils mit einer mittleren Molekülmasse von zwischen 200 und 1500 g/mol, die jeweils OH- oder alkyl-terminiert sein können, oder Gemische derselben.

Als Lösungsmittel bevorzugte organische Ester sind Verbindungen der allgemeinen Formel

R¹-C(O)-OR² (II),

worin R¹ und R² unabhängig voneinander Alkyl-, Alkenyl, Aryl-, Alkylaryl- oder Arylalkylgruppen mit 1 bis 12 Kohlenstoffatomen darstellen, bevorzugt stellen R¹ und R² jeweils unabhängig voneinander Alkylgruppen mit 1 bis 8 Kohlenstoffatomen dar. Hierin weiter bevorzugt sind Methylacetat, Ethylacetat, n-Propylacetat, isoPropylacetat, n-Butylacetat, i-Butylacetat, sec-Butylacetat, tert-Butylacetat, iso-Pentylacetat, Hexylacetat, Ethylbutyrat und Methylpropionat.

Als Lösungsmittel bevorzugte Ketone sind Aceton, Methylethylketon, Cyclopentanon, Cyclohexanon, Methylisopropylketon, Ethylisopropylketon, 2-Hexanon, Methylisobutylketon, 3-Methyl-2-pentanon, 2-Pentanon und 3-Pentanon.

Als Lösungsmittel bevorzugte organische Amide sind ausgewählt aus Alkyl-N-dialkylamiden und N-Alkyl-Lactamen mit 2 bis 12 Kohlenstoffatomen, bevorzugter sind Alkyl-N-dimethylamide und N-Methyl-Lactame, noch bevorzugter C1-, C2-, C3-, C4-, C5-, C6-, C7-, C8-, C9- and C10-Alkyl-N-dimethylformamid und N-Methyl-Lactame, in denen der Lactamring 4, 5, 6, 7 oder 8 Kohlenstoffatome enthält. Hierin weiter bevorzugt sind Dimethylformamid (DMF), Dimethylacetamid (DMA) und N-Methyl-2-pyrrolidon (NMP).

Als Lösungsmittel bevorzugte organische Carbonate, auch als Kohlensäureester bezeichnet, haben die Formel

R³-O-C(O)-O-R⁴ (III),

worin R³ und R⁴ unabhängig voneinander Alkylgruppen mit 1 bis 12 Kohlenstoffatomen darstellen, worin R³ und R⁴ miteinander verbunden sein können, um eine Alkylengruppe zu bilden. Hierin weiter bevorzugt sind Kohlensäuredimethylester, Kohlensäurediethylester, Ethylencarbonat und Propylencarbonat.

Für nicht-Li⁺-haltige Metalloxidsubstrate besonders bevorzugte Lösungsmittel sind Wasser, Methanol, Ethanol, Isopropanol und Mischungen derselben.

Für Li⁺-haltige Metalloxidsubstrate sind Methanol, Ethanol und Isopropanol bevorzugte Lösungsmittel, worin Ethanol besonders bevorzugt ist, während reines Wasser und Gemische von Lösungsmitteln mit einem hohen Wasseranteil über 50 Gew.-% bezogen auf das Gesamtgewicht des Gemischs nicht bevorzugt sind.

Die Menge des Lösungsmittels wird so gewählt, dass die Oberfläche des Metalloxidsubstrates vollständig bedeckt wird. Um eine vollständige Bedeckung der Oberfläche des Metalloxidsubstrats zu gewährleisten, beträgt die Menge des Lösungsmittels in den Verfahrensschritten (1) und (2) bevorzugt mindestens 1 Gewichts-% bezogen auf das Gewicht des Metalloxidsubstrates.

### Anwesenheit von Li⁺-Ionen

Gemäß dem erfindungsgemäßen Verfahren müssen bei der Durchführung des ersten Verfahrensschrittes (1) Li⁺-Ionen vorliegen, was bedeutet, dass bei der Zugabe der organischen Säure zu dem System des Verfahrensschrittes (1), das mindestens das Metalloxidsubstrat und ein Lösungsmittel umfasst, darüber hinaus auch Li⁺-Ionen vorliegen müssen. Diese Li⁺-Ionen müssen entweder in dem verwendeten Lösungsmittel und/oder an der Oberfläche des Metalloxidsubstrates lokalisiert, bevorzugt als Kation von Li₂CO₃ und/oder LiOH, vorliegen.

Während Li⁺-Ionen in dem Lösungsmittel vor allem dann vorliegen, wenn dem Lösungsmittel ein Li⁺-haltiges Salz zugesetzt wird, beschreibt der zweite Fall (Vorliegen von Li⁺ auf der Oberfläche des Metalloxidsubstrates) vor allem den Zustand von Li⁺-Ionen-haltigen Substraten, bei denen sich durch Alterungsvorgänge, beispielsweise das Aufbewahren des Metalloxidsubstrates in CO₂- und H₂O-haltiger Umgebungsluft, an der Oberfläche des Metalloxidsubstrates unter Einbeziehung von Li⁺-Ionen des Metalloxidgrundmaterials LiOH und/oder Li₂CO₃ gebildet hat.

Dem Fachmann ist bei Betrachtung des erfindungsgemäßen Verfahrens klar, dass es sich bei den beiden formulierten Fällen um Extremfälle handelt, da mit der Anwesenheit von LiOH und/oder LiCO₃ an der Oberfläche des Metalloxidsubstrates, insbesondere bei der Verwendung eines polaren Lösungsmittels, Li⁺-Ionen von der Oberfläche in das Lösungsmittel übergehen, und sich bei dem Vorliegen von Li⁺-Ionen eines zugegebenen Li-Salzes im Lösungsmittel zwangsläufig Li⁺-Ionen auf der Oberfläche des Substrates und in deren unmittelbarer Umgebung befinden.

Während die Anwesenheit von Li⁺-Ionen an der Oberfläche des Metalloxidsubstrates und/oder in dem Lösungsmittel bei der Verwendung eines Li⁺-haltigen Metalloxidsubstrates durch die Bildung einer Li₂CO₃- und/oder LiOH-haltigen Schicht durch die Reaktion des Materials des Metalloxidsubstrates mit Luftfeuchtigkeit und CO₂ in der Luft gewährleistet sein kann, ist die Zugabe eines Li⁺-haltigen Salzes vor oder während des Verfahrensschritt (1) bei der Verwendung von nicht-Li⁺-haltigen

Metalloxidsubstraten in dem Verfahren zwingend erforderlich, um die Anwesenheit von Li⁺-Ionen zu gewährleisten.

Im Fall der Li⁺-haltigen Metalloxidsubstrate ist die Zugabe eines Li⁺-Salzes dann erforderlich, wenn an der Oberfläche des Metalloxidsubstrates keine verfügbaren Li⁺-Ionen vorliegen, beispielsweise wenn es sich um ein frisch gemahlenes Pulver handelt, dessen Oberflächen nicht der Umgebungsluft, die eine gewisse Luftfeuchtigkeit enthält, ausgesetzt gewesen ist. Die Zugabe eines Li⁺-Salzes vor oder während der Zugabe der organischen Säure kann bei der Verwendung eines Li⁺-haltigen Metalloxidsubstrates auch dann erfolgen, wenn, beispielsweise durch Alterung an der Luft, eine Schicht aus LiOH und/oder Li₂CO₃ vorliegt.

Die Zugabe des Li⁺-Salzes vor dem Schritt (1) des Verfahrens kann durch das Aufbringen einer Lösung des Li⁺-Salzes auf das Metalloxidsubstrat erfolgen, durch das Lösen des Li+-Salzes in einem Lösungsmittel, in dem sich das Metalloxidsubstrat befindet, etwa einer Dispersion, oder durch das Aufbringen des Salzes in fester Form auf das Metalloxidsubstrat, wobei es bevorzugt als Pulver zu dem Metalloxidsubstrat gegeben und darauf aufgebracht wird. Um einen möglichst vollständigen Kontakt des Li⁺-Salzes mit dem Metalloxidsubstrat zu ermöglichen ist es bevorzugt, das feste Li⁺-Salz in Form eines möglichst fein gemahlenen Pulvers mit dem Metalloxidsubstrat in Kontakt zu bringen, und/oder das Pulver gemeinsam mit dem Metalloxidsubstrat in einem Mörser zu verreiben, in einem Mahlwerk oder einer Kugelmühle zu mahlen, oder in einem Schüttler zu mischen.

Eine solche Zugabe eines Li⁺-Salzes vor dem Schritt (1) des Verfahrens dient ausdrücklich der Erhöhung der Menge verfügbarer Li⁺-Ionen an der Oberfläche des Metalloxidsubstrates, und es erfolgt keine Reaktion mit dem Material des Metalloxidsubstrates. Dementsprechend erfolgt nach der Zugabe eines Li⁺-Salzes keine Temperaturbehandlung, d.h. nach der Zugabe des Li⁺-Salzes zum Metalloxidsubstrat wird die Temperatur vor und während der Durchführung des Verfahrens unter 300 °C, bevorzugt unter 200 °C, noch bevorzugter unter 150 °C gehalten.

Die Zugabe während des Schrittes (1) des Verfahrens erfolgt durch die Zugabe des Li⁺-Salzes in fester Form, bevorzugt als Pulver, oder als Lösung in einem Lösungsmittel zu dem Metalloxidsubstrat in dem Verfahrensschritt (1) verwendeten Lösungsmittel, wobei die Zugabe vor, während oder nach der der Zugabe der organischen Säure erfolgen kann.

### Organische Säure

Bei dem erfindungsgemäßen Verfahren handelt es sich bei der organischen Säure, mit der das Metalloxidsubstrat in Schritt (1) in Kontakt gebracht wird, entweder um eine Carbonsäure, oder um eine vinyloge Carbonsäure.

Gemäß der vorliegenden Erfindung handelt es sich bei einer Carbonsäure um eine organische Verbindung, die mindestens eine Carboxylgruppe aufweist, und somit durch die allgemeine Formel

R-C(O)OH (I),

worin R eine beliebige Organylgruppe ist, und dementsprechend eine oder mehrere weitere Carboxylgruppe enthalten kann,

dargestellt werden kann.

Beispiele für organische Säuren, bei denen es sich um Carbonsäuren handelt, sind etwa Zitronensäure, Diethylentriaminpentaessigsäure, Oxalsäure, Ethylendiamintetraessigsäure, wobei Zitronensäure und Ethylendiamintetraessigsäure besonders bevorzugt sind.

Bei einer vinylogen Carbonsäure handelt es sich um eine organische Verbindung, bei der eine OH-Gruppe und eine Carbonylgruppe durch eine oder mehrere Doppelbindungen getrennt sind, jedoch analog zu Carbonsäuren eine Stabilisierung des durch Deprotonierung der OH-Gruppe gebildeten Anions durch mesomere Grenzstrukturen auftritt.

Beispiele für vinyloge Carbonsäuren sind Ascorbinsäure und Quadratsäure.

### In Kontakt bringen mit der organischen Säure:

Gemäß der vorliegenden Erfindung bedeutet "in Kontakt bringen", dass das Metalloxidsubstrat in Schritt (1) des Verfahrens mit der organischen Säure in Berührung kommt. Bevorzugt kann hierbei die gesamte Oberfläche des Metalloxidsubstrates mit den jeweiligen Säuren, die in dem verwendeten Lösungsmittel gelöst sind, in Berührung kommen. Das "In Kontakt Bringen" erfolgt so, dass ein Wechselwirken zwischen den Säuren und der Oberfläche des Metalloxidsubstrates bzw. sich dort befindlichen Teilchen oder Verbindungen in Form von chemischen Reaktionen und/oder physikalischen Veränderungen ermöglicht wird. Hierzu wird die organische Säure entweder in reiner Form oder ganz oder teilweise in einem Lösungsmittel gelöst zu dem Metalloxidsubstrat gegeben.

Im zweiten Verfahrensschritt (2) wird das Metalloxidsubstrat in Anwesenheit eines Lösungsmittels mit einer anorganischen Säure, bei der sich nicht um Fluorwasserstoff oder Flusssäure handelt, in Kontakt gebracht.

Es können die gleichen Lösungsmittel wie in Verfahrensschritt (1) gewählt werden. Bevorzugt wird das Lösungsmittel nach Verfahrensschritt (1) nicht gewechselt, und der zweite Verfahrensschritt (2) wird im aus Verfahrensschritt (1) erhaltenen System durchgeführt, indem die anorganische Säure zugesetzt wird, um sie mit dem Metalloxidsubstrat in Kontakt zu bringen.

### Anorganische Säure

Allgemein bezeichnet der Begriff der anorganischen eine Säure, die sich von einer oder mehreren anorganischen Verbindungen ableitet. Es handelt sich mit Ausnahme der Kohlensäure und von ihr abgeleiteten Säuren nur um Verbindungen, die keinen Kohlenstoff enthalten.

Gemäß der vorliegenden Erfindung handelt es sich bei der anorganischen Säure um eine Säure, die aus den Wasserstoffsäuren der Halogenide CI und Br, also HCl und HBr, sowie aus den Oxosäuren der Elemente Cl, Br, I, B, N, S, P und Si ausgewählt ist.

Beispiele für anorganische Säuren sind Phosphorsäure (H₃PO₄), Salpetersäure (HNO₃), Schwefelsäure (H₂SO₄), Chlorwasserstoffsäure (HCl), Perchlorsäure (HClO₄), schweflige Säure (H₂SO₃), salpetrige Säure (HNO₂), und Borsäure (H₃BO₃) , wobei die Verwendung von Phosphorsäure im erfindungsgemäßen Verfahren besonders bevorzugt ist.

In Analogie zu Schritt (1) bedeutet "in Kontakt bringen mit einer anorganischen Säure" in Schritt (2), dass das Metalloxidsubstrat mit einer anorganischen Säure in Berührung kommt, um ein Wechselwirken zwischen der anorganischen Säure und der Oberfläche des zuvor Verfahrensschritt (1) unterzogenen Metalloxidsubstrates zu ermöglichen. Dies wird bevorzugt durch die Zugabe der anorganischen Säure oder einer Lösung derselben in einem Lösungsmittel, bevorzugt dem im Verfahren verwendeten Lösungsmittel und/oder Wasser, zu dem Lösungsmittel, in dem sich das Metalloxidsubstrat in Schritt (2) befindet, erreicht.

Generell ist die Verwendung von wässrigen Lösungen der anorganischen Säuren gemäß der vorliegenden Erfindung bevorzugt.

Es ist bevorzugt, dass die Verfahrensschritte (1) und (2) direkt aufeinanderfolgend in dem gleichen Lösungsmittel durchgeführt werden. Es ist ebenfalls möglich, nach der Durchführung des ersten Verfahrensschrittes (1) das Lösungsmittel zu wechseln und den zweiten Verfahrensschritt (2) in Anwesenheit eines anderen Lösungsmittels durchzuführen. Dies kann hinsichtlich der Kompatibilität der anorganischen Säure mit dem in Schritt (1) verwendeten Lösungsmittel und der Löslichkeit der bei der Zugabe der anorganischen Säure zu organischen Lithiumsalzen gebildeten Niederschläge günstig sein.

Die Temperatur, bei denen das Verfahren durchgeführt werden kann, ist nicht in besonderer Weise beschränkt, dennoch ist ein bestimmter Temperaturbereich für die nachfolgend beschriebenen Ausführungsformen bevorzugt.

Allgemein wird das Verfahren bevorzugt im Bereich von -70 °C bis 300 °C durchgeführt, bevorzugter im Bereich von -20 °C bis 200 °C, noch bevorzugter im Bereich von 0 °C bis 120 °C, noch bevorzugter im Bereich von10 °C bis 100 °C, weiter bevorzugt im Bereich von 20 °C bis 90 °C, noch weiter bevorzugt im Bereich von 30 °C bis 80 °C, und am bevorzugtesten im Bereich von 45 °C bis 70 °C.

Das Verfahren kann in einem offenen oder geschlossenen Reaktionsraum, etwa einem Kolben, einem Reaktor, einem Tank, einem Schüttler oder einer Mahlvorrichtung durchgeführt werden, wobei der Luftdruck bei der Durchführung des Verfahrens nicht in besonderer Weise beschränkt ist. Bevorzugt ist die Durchführung in einem Bereich von 1kPa (0,01 bar) bis 10000kPa (100 bar), bevorzugter im Bereich von 10 kPa bis 5000 kPa, noch bevorzugter im Bereich von 50 kPa bis 1000 kPa, noch weiter bevorzugt im Bereich von 80 kPa bis 300 kPa, am bevorzugtesten im Bereich von 85 kPa bis 110 kPa, also im Bereich um den mittleren Atmosphärendruck von 101,3 kPa.

Im Folgenden werden verschiedene Ausführungsformen der Erfindung näher beschrieben.

In einer bevorzugten Ausführungsform des erfindungsgemäßen Verfahrens beträgt die Menge des Lösungsmittels 1 Gewicht-% oder mehr, bevorzugter 2 Gewichts-% oder mehr, noch bevorzugter 5 Gewichts-% oder mehr, weiter bevorzugt 10 Gewichts-% oder mehr, noch weiter bevorzugt 20 Gewichts-% oder mehr, noch weiter bevorzugt 50 Gewichts-% oder mehr, noch weiter bevorzugt 100 Gewichts-% oder mehr, und am bevorzugtesten 200 Gewichts-% oder mehr bezogen auf das Gewicht des eingesetzten Metalloxidsubstrates.

Die Menge des Lösungsmittels, das in den Verfahrensschritten (1) und (2) eingesetzt werden muss, hängt von der Art der Säuren und von der Form des Metalloxidsubstrates ab. Die Aufgabe des Lösungsmittels ist es, die Säuren zu lösen bzw. zu verdünnen und durch das vollständige Bedecken der Oberfläche des Metalloxidsubstrates eine Wechselwirkung des Metalloxidsubstrates in der Gegenwart von Li⁺-Ionen mit den Säuren zu ermöglichen. Die Menge des benötigten Lösungsmittels ist somit beispielsweise von der Teilchengröße eines Metalloxidsubstratpulvers abhängig. Die Mengenangaben beziehen sich auf die Menge des Lösungsmittels, die sowohl in Schritt (1) als auch in Schritt (2) vorliegt.

In einer Ausführungsform des Verfahrens handelt es sich bei dem Lösungsmittel um Wasser, Methanol, Ethanol, n-Propanol, Isopropanol oder ein Gemisch derselben.

Die Verwendung eines polaren, protischen Lösungsmittels hat sich als vorteilhaft zur Erzielung der gewünschten Oberflächenmodifikation erwiesen. Maßgeblich ist hierbei vermutlich die relativ hohe Löslichkeit von Li-Salzen, von organischen und anorganischen Säuren und Salzen in diesen Reaktionsmedien. Zudem sind Wasser, die kurzkettigen Alkohole sowie Wasser-Alkohol-Gemische technisch gut handhabbar und kostengünstig, weshalb diese Verbindungen und ihre Gemische bevorzugte Lösungsmittel des erfindungsgemäßen Verfahrens sind.

In einer bevorzugten Ausführungsform der Erfindung handelt es sich bei dem Lösungsmittel um Ethanol oder ein Ethanol-haltiges Gemisch, bevorzugt um Ethanol oder ein Ethanol-Wasser Gemisch.

Sowohl Ethanol als auch Wasser-Ethanol-Mischungen sind für die Anwendung im erfindungsgemäßen Verfahren zur Oberflächenmodifikation besonders gut geeignet und liefern ausgezeichnete Ergebnisse bei der Verwendung. Hierbei ist die Verwendung von Ethanol für Li⁺-haltige Metalloxidsubstrate besonders bevorzugt, und die Verwendung von Ethanol-Wassergemische für nicht-Li⁺-haltige Metalloxidsubstrate. Darüber hinaus sind Ethanol und Ethanol-Wassergemische gut und kostengünstig verfügbar, im bevorzugten Temperaturbereich des Verfahrens technisch gut handhabbar, und weisen eine vergleichsweise geringe Toxizität für Menschen sowie eine gute Umweltverträglichkeit auf.

In einer weiteren Ausführungsform des Verfahrens liegt das Metalloxidsubstrat in Form von energietechnischen oder elektrochemischen Bauelementen, Pellets, Granulaten, oder als Pulver vorliegt, bevorzugt als Pulver mit einer mittleren Teilchengröße d50 von 100 µm oder weniger, gemessen mittels Laserdiffraktometrie (nach ISO-13320, Gerät: Horiba LA-950-V2, Software Version: 9.3).

Energietechnische oder elektrochemische Bauelemente sind grundsätzlich makroskopische Teile, die in energietechnischen und elektrochemischen Vorrichtungen verwendet werden, zum Beispiel Separatormembranen für Batterien und Elektrolyseure, Sensoren, Elektroden, Separatoren, Dünnschichten, Bauelemente mit Metalloxidbeschichtungen und aus Metalloxid bestehende Schichtstrukturen, beispielsweise als geträgertes Material, oder dichte und poröse Separatorenmembranen.

Als Pellets werden gemäß der vorliegenden Erfindung kleine Körper aus verdichtetem Material in Kugel- oder Zylinderform bezeichnet, deren mittlerer Durchmesser 5 mm und 20 mm, bevorzugt zwischen 10 mm und 15 mm beträgt. Die Pellets können durch Pelletierung von Metalloxidpulver unter Befeuchtung, Trocknung der grünen Pellets und anschließendes Brennen zu Pellets erhalten werden. Zur Bestimmung des mittleren Durchmessers von Metalloxidsubstratpellets werden mindestens 20 Pellets in zufälliger Weise als Probenkörper gewählt, und der Durchmesser der Pellets senkrecht zur Längsrichtung der Pellets an der Stelle mit dem größten Durchmesser mit einem Messschieber bestimmt. Die so erhaltenen Werte werden durch die Anzahl der Messungen gemittelt, um den mittleren Durchmesser der der Pellets zu berechnen. Die Längsrichtung ist bei zylindrischen und näherungsweise zylindrischen Pellets die Richtung, die möglichst senkrecht zur kreisförmigen Querschnittsfläche des Zylinders verläuft.

Gemäß der vorliegenden Erfindung besteht ein Granulat aus vielen kleinen, festen Partikeln wie Körnern oder Kugeln. Im Vergleich zu einem Pulver weisen Granulate eine höhere mittlere Teilchengröße und infolgedessen eine kleinere Oberfläche im Verhältnis zum Volumen der Teilchen auf. Die mittlere Teilchengröße d50 der Granulate beträgt > 0,1 mm bis 5 mm, bevorzugt 0,5 mm bis 3 mm, noch bevorzugter 1 mm bis 2 mm, gemessen mittels Laserdiffraktometrie (nach ISO-13320, Gerät: Horiba LA-950-V2, Software Version: 9.3).

Gemäß der vorliegenden Erfindung besteht ein Pulver aus kleinen Teilchen mit einer mittleren Teilchengröße d50 von 100 µm oder weniger.

In einer Ausführungsform des Verfahrens handelt es sich bei dem Metalloxidsubstrat um ein Li⁺-Ionen-haltiges Metalloxidsubstrat (Li⁺-haltiges Substrat).

Gemäß der vorliegenden Erfindung wird jedes Metalloxidsubstrat, das Li⁺-Ionen enthält, als Li⁺-haltiges Substrat bezeichnet. Die entsprechenden Pulver dieser Metalloxidsubstrate sind oftmals aktive Metalloxidsubstrate, die potentiell als aktive Füllstoffe, d.h. als Füllstoffe, die über Lithiumionenleitfähigkeit verfügen, genutzt werden können. Metalloxidsubstrate, die Li⁺-Ionen enthalten, können außerdem, wenn sich durch einen Alterungsprozess, beispielsweise durch Aufbewahren in CO₂- und/oder H₂O-haltiger Umgebungsluft, an der Oberfläche des Materials Li₂CO₃ und/oder LiOH gebildet hat, dem erfindungsgemäßen Verfahren erfolgreich unterzogen werden, ohne dass zur Gewährleistung der Anwesenheit von Li⁺-Ionen in Schritt (1) eine Li⁺-Ionen-haltiges Salz zugegeben werden muss.

Bevorzugte Li+-lonenhaltige Metalloxidsubstrate sind Lithium-Granat-Verbindungen, beispielsweise Lithium-Granat-Verbindungen mit der nominellen Formel Li₅La₃M₂O₁₂, worin M = Nb, Ta,
oder mit der Formel LiₓA₃B₂O₁₂ , worin
x = 5-7;
A = La, Bi, Y, Al;
B = Sc, Zr, Ti, Hf, Ta, Nb.

Bevorzugt sind Li-Granate, die in kubischer Form vorliegen, da diese verglichen mit der tetragonalen Modifikation eine etwa 100-fach höhere Leitfähigkeit der Li-Ionen verglichen mit der aufweist.

Besonders bevorzugt sind Lithium-LLZO-Granate. Hierbei handelt es sich um eine große Familie von Mischoxiden der Metalle Lithium, Lanthan, Zirkonium, die darüber hinaus Metall-Dopanden, ausgewählt aus Al, Ta, Ga, Nb, Ca und weiteren Metallen enthalten können. Die kubischen LLZO-Granate, kurz als c-LLZOs bezeichnet, weisen eine hohe Lithiumionenleitfähigkeit auf und sind daher besonders bevorzugte aktive Li⁺-haltige Metalloxidsubstrate gemäß der vorliegenden Erfindung. Bei Umgebungstemperatur liegen praktisch nur dotierte LLZO-Granate in kubischer Form vor, da sich kubisches Li₇La₃Zr₂O₁₂ (c-LLZO) beim Abkühlen auf solche Temperaturen in tetraedrisches LLZO (t-LLZO) umwandelt, wenn es nicht durch eine ausreichende Menge geeigneter Dopanden stabilisiert wird. Nur bei 1000 °C und mehr liegt reines LLZO kubisch vor.

Bevorzugt handelt es sich um Granate mit kubischer Kristallstruktur der allgemeinen Formel

Li_{7-3x-z}BₓLa_{3-y}A_{y}Zr_{2-z}M_{z}O₁₂,

wobei
A = Ba, Ca, Mg,
B = Al, Ga und
M = Nb, Ta,
0 ≤y <1,
0,05 ≤ x < 0,5, und
0 ≤ z <2.

Li, Zr und das Metall B liegen neben La also zwingend vor, während A und M optional sind.

Nicht einschränkende Beispiele für die genannten Lithium-Granat-Materialien umfassen Lithium-Granat-Materialien, dotierte Lithium-Granat-Materialien, Lithium-Granat-Verbundwerkstoffe und Kombinationen davon.

Nicht einschränkende Beispiele für Lithium-Granat-Materialien umfassen Li₃-Phasen-Lithium-Granat-Festphasenelektrolyt-Materialien wie z.B. Li₃M¹Te₂O₁₂, worin M¹ ein Lanthanid wie Y, Pr, Nd, Sm, Eu, Gd, Tb, Dy, Ho, Er, Tm, Yb, Lu, Zr, Ta oder eine Kombination davon ist, und Li₃₊ₓNd₃Te₂₋ₓO₁₂, worin x 0,05 bis 1,5 ist,
Li₅-Phasen-Lithium-Granat-Festphasenelektrolyt-Materialien wie z.B. Li₅La₃M²₂O₁₂, worin M² Nb, Zr, Ta, Sb oder eine Kombination davon ist,
Kationen-substituiertes Li₅La₃M²₂O₁₂, wie z. B. Li₆ M¹La₃M²₂O₁₂, wobei M¹ Mg,
Ca, Sr, Ba oder Kombinationen davon darstellt, und Li₇La₃M²₂O₁₂, worin M² Zr, Sn oder eine Kombination davon ist;
Li₆-Phasen-Lithium-Granat-Festphasenelektrolyt-Materialien, wie z.B. Li₆M¹La₂M²₂O₁₂, wobei M¹ Mg, Ca, Sr, Ba oder eine Kombination davon ist und M² Nb, Ta oder eine Kombination davon ist;
Kationen-dotiertes Li₆La₂BaTa₂O₁₂ oder Kationen-dotiertes Li₆BaY₂M²₂O₁₂, wobei M² Nb, Ta oder eine Kombination davon, und die Kationen-Dotierstoffe Barium, Yttrium, Zink oder Kombinationen davon sind,
Li₇-Phasen-Lithium-Granat-Festphasenelektrolyt-Materialien, wie z.B. Li₇Y₃Zr₂O₁₂; Kationen-dotiertes kubisches Li₇La₃Zr₂O₁₂; Li₅₊₂xLa₃Ta₂₋ₓO₁₂, worin x 0,1 bis 1 ist, Li_{6,8}(La_{2,95}, Ca_{0,05})(Zr_{1,75.}Nb_{0,25})O₁₂ (LLCZN), Li_{6,4}Y₃Zr_{1,4}Ta_{0,6}O₁₂, Li_{6,5}La_{2,5}Ba_{0,5}TaZrO₁₂, Li₆BaY₂M¹2O₁₂, Li₇Y₃Zr₂O₁₂,
Li_{6,75}BaLa₂Nb_{1,75}Zn_{0,25}O_{12,} oder Li_{6,75}BaLa₂Ta_{1,75}Zn_{0,25}O₁₂,
Lithium-Granat-Verbundwerkstoffe, z.B. Lithium-Granat/leitender Kohlenstoff-Matrix oder Verbundwerkstoffe mit anderen Materialien.

Andere Beispiele für Lithium-Ionen-leitende Festphasenelektrolyt-Materialien sind kubische Materialien vom Granat-Typ wie
mit 3 mol-% YSZ-dotiertes Li_{7,06}La₃Zr_{1,94}Y_{0,06}O₁₂ und mit 8 mol-% YSZ-dotiertes Li_{7,16}La₃Zr_{1,94}Y_{0,06}O₁₂ (YSZ steht hierin für Yttrium-stabilisiertes Zirkonoxid). Weitere Beispiele für geeignete Lithium-Granat Festphasenelektrolyt-Materialien sind unter anderem, ohne darauf beschränkt zu sein,
Li₅La₃Nb₂O₁₂, Li₅La₃Ta₂O₁₂, Li₆La₂SrNb₂O₁₂, Li₆La₂Ba₁Nb₂O₁₂, Li₆La₂SrTa₂O_{12,} Li₆La₂BaTa₂O_{12,} Li₇Y₃Zr₂O₁₂, Li_{6,4}Y₃Zr_{1,4}Ta_{0.6}O_{12,} Li_{6,5}La_{2,5}Ba_{0,5}TaZrO_{12,} Li₇Y₃Zr₂O₁₂, Li_{6,75}BaLa₂Nb_{1,75}Zn_{0,25}O₁₂, oder Li_{6,75}BaLa₂Ta_{1,75}Zn_{0,25}O₁₂.

Bevorzugt handelt es sich bei den Li⁺-Ionen-haltigen Metalloxidsubstraten um aktive Metalloxidsubstrate, die über eine Li-Ionenleitfähigkeit bei Raumpemperatur (25 °C) im Bereich von 1*10⁻⁷ bis 1*10⁻¹ S/cm, bevorzugt 1*10⁻⁵ bis 1*10⁻¹ S/cm, und am bevorzugtesten 1*10⁻³ bis 1*10⁻¹ S/cm, welche mittels Impedanzanalyse mit blockierenden Elektroden (z.B. Ni, Au oder Pt, bevorzugt Ni) am dichten Material (>90% theoretische Dichte) im Bereich 3 MHz bis 0.01 Hz mit einer Amplitude von 10 mV und mindestens 5 Messpunkten pro Dekade bei 25 °C gemessen wird (z.B. mit einem "VMP300 Potentiostat/EIS" der Firma "Biologic" und Analyse mittels der Software "RelaxIS Version 3")

In einer spezifischen Ausführungsform des erfindungsgemäßen Verfahrens wird die Anwesenheit von Li⁺-Ionen, insbesondere an der Oberfläche des Metalloxidsubstrates, durch vorherige Alterung des verwendeten Li⁺-Ionen-haltigen Metalloxidsubstrates erzielt.

Gemäß der vorliegenden Erfindung bezeichnet Altern eine Veränderung der Oberfläche des Metalloxidsubstrates in der Gegenwart von Umgebungsluft, die Feuchtigkeit und CO₂ enthält. Bevorzugt bezeichnet Altern eine Veränderung der Oberfläche des Metalloxidsubstrates in Anwesenheit von Luftfeuchtigkeit und CO₂ in der Umgebungsluft, nach der die Anwesenheit von Li₂CO₃ an der Oberfläche Raman-spektroskopisch detektierbar ist. Weiter bevorzugt wird das Metalloxidsubstrat als gealtert bezeichnet, wenn gegenüber einer Raman-spektroskopischen Messung vor der Alterung, also zu einem früheren Zeitpunkt vor dem weiteren Kontakt mit der Umgebungsluft, eine Zunahme der Li₂CO₃-Signale messbar ist, oder, in dem Fall, dass zuvor keine Li₂CO₃-Signale detektierbar waren, sobald Li₂CO₃-Signale an der Oberfläche des Metalloxidsubstrates Raman-spektroskopisch detektierbar sind.

Für die erfolgreiche Durchführung des erfindungsgemäßen Verfahrens ist die Anwesenheit von Li⁺-Ionen in Schritt (1) wesentlich. Bei der Verwendung von Li⁺-haltigen Metalloxidsubstraten ist eine Möglichkeit diese zu erreichen, die Oberfläche des Metalloxidsubstrates vor oder während der Durchführung des Verfahrensschrittes (1) zu altern. Alterung beschreibt hierbei wie oben erläutert einen Prozess, der zur Überführung von Li⁺-Ionen aus dem Material des Metalloxidsubstrates in Li₂CO₃ an der Oberfläche des Metalloxidsubstrates führt.

Es ist dem Fachmann bekannt, dass beispielsweise LLZO in feuchter Luft eine LiOH-Schicht bildet, die mit dem in der Luft vorliegenden CO₂ weiter zu Li₂CO₃ reagiert, was bei der Verwendung des LLZO in Festelektrolyten an der Grenzfläche zu Li zu erhöhtem Grenzflächenwiderstand führt.

Die Zeit, die für eine ausreichende Alterung eines frisch zerkleinerten Metalloxidsubstratmaterials an der Luft erforderlich ist, hängt von verschiedenen Faktoren wie der Teilchen- bzw. Oberflächengröße, der Temperatur, sowie dem Feuchtigkeits- und CO₂-Gehalt der Luft ab, außerdem von der Art des Metalloxidsubstrates, etwa der Konzentration und Mobilität von Li⁺-Ionen im Metalloxidsubstrat.

Auch wenn aufgrund von Alterung Li⁺-Ionen in Form von Kationen eines Salzes auf der Oberfläche des Substrates vorliegen, kann vor oder während Verfahrensschritt (1) zusätzlich ein weiteres Li⁺-Salz als Li⁺-Quelle zugegeben werden.

In einer anderen Ausführungsform des erfindungsgemäßen Verfahrens handelt es sich bei dem Metalloxidsubstrat um ein nicht-Li⁺-Ionen-haltiges Metalloxidsubstrat (nicht-Li⁺-haltiges Substrat).

Gemäß der vorliegenden Erfindung wird jedes Metalloxidsubstrat, dass keine Li⁺-Ionen enthält, als nicht-Li⁺-haltiges Substrat bezeichnet. Meist handelt es sich bei diesen Metalloxidsubstraten um inerte Metalloxidsubstrate da diese Metalloxidsubstrate keine oder eine sehr geringe Lithiumionenleitfähigkeit aufweisen. Da diese Metalloxidsubstrate keine aus dem Grundmaterial der Substrate stammenden Li⁺-Ionen an der Oberfläche aufweisen können, muss bei der Anwendung des erfindungsgemäßen Verfahrens zwingend eine Li⁺-Quelle zugeführt werden, um Verfahrensschritt (1) durchführen zu können und die Leitungseigenschaften der Teilchen durch die Oberflächenmodifikation zu verbessern.

Bevorzugt sind die nicht-Li⁺-haltigen Metalloxidsubstrate inerte Metalloxidsubstrate und weisen eine Li-Ionenleitfähigkeit bei Raumtemperatur (25 °C) unter 1*10⁻⁷ S/cm auf.

In einer bevorzugten Ausführungsform des erfindungsgemäßen Verfahrens wird die Anwesenheit von Li⁺-Ionen durch die Zugabe eines Li⁺-Ionen-haltigen Salzes vor oder während des in Kontakt Bringens des Metalloxidsubstrates mit der organischen Säure in Schritt (1) erzielt oder vergrößert.

Wie zuvor definiert bedeutet die Anwesenheit von Li⁺-Ionen die Anwesenheit von Li⁺-Ionen in dem Lösungsmittel und/oder an der Oberfläche des Metalloxidsubstrates.

Die Zugabe des Li⁺-Ionen-haltigen Salzes erfolgt vor oder während des in Kontakt Bringens des Metalloxidsubstrats mit der organischen Säure in Verfahrensschritt (1), und kann somit in Abwesenheit eines Lösungsmittels, in der Anwesenheit eines Lösungsmittels oder in der Anwesenheit eines Lösungsmittels und der organischen Säure erfolgen.

Im ersten Fall wird das Li⁺-haltige Salz als Feststoff mit dem Metalloxidsubstrat in Kontakt gebracht, etwa durch Mischen mit einem Granulat oder Pulver, zum Beispiel in einer Kugelmühle. Bevorzugt wird das Li⁺-haltige Salz jedoch entweder in dem verwendeten Lösungsmittel oder einem Teil davon vorgelöst und dann mit dem Metalloxidsubstrat in Kontakt gebracht, oder dem Lösungsmittel, in dem sich bereits das Metalloxidsubstrat befindet, zugegeben. Neben dem Metalloxidsubstrat kann sich auch bereits die organische Säure bei der Zugabe des Li⁺-Ionen-haltigen Salzes im Lösungsmittel befinden.

Bevorzugt sind Li⁺-Salze, die in Wasser und organischen Lösungsmitteln gut löslich sind. Es kann sich sowohl um anorganische als auch um organische Lithiumsalze handeln, etwa Salze ausgewählt aus der Gruppe bestehend aus Lithiumamiden, wie etwa Lithiumbis(trifluormethylsulfonyl)amid (LiTFSI) oder Lithiumhexamethyldisilazid (LiHMDS), Lithiumalkoxiden, wie etwa Lithiummethanolat, Lithiumethanolat, Lithium-n-propanolat, Lithium-isopropanolat, Lithium-n-butanolat oder Lithium-n-butanolat, Lithiumcarboxylaten, insbesondere Lithiumalkylmonocarboxylaten mit 2 bis 10 Kohlenstoffatomen, Lithiumsalzen der Oxosäuren der Elemente C, S, N, P, Cl und I, wie etwa Lithiumnitrat und Lithiumcarbonat, den Lithiumhalogeniden LiCI und LiBr, sowie den Lithiumsalzen LiBF₄ und LiPF₆.

In einer weiter bevorzugten Ausführungsform des erfindungsgemäßen Verfahrens handelt es sich bei dem zugegebenen Li⁺-Ionen-haltigen Salz um Lithiumhydroxid, Lithiumchlorid, oder Lithiumcarbonat, bevorzugt um Lithiumcarbonat.

Die Lithiumsalze gemäß dieser Ausführungsform zeichnen sich durch eine gute Löslichkeit in polaren Lösungsmitteln, zum Beispiel in Wasser, kurzkettigen Alkoholen wie Methanol, Ethanol oder Propanol oder auch in Sulfoxiden und Gemischen dieser Lösungsmittel aus, und zeigen gute Ergebnisse im erfindungsgemäßen Verfahren. Darüber hinaus sind die Salze gut zugänglich und preisgünstig kommerziell verfügbar.

In einer weiteren bevorzugten Ausführungsform des erfindungsgemäßen Verfahrens handelt es sich bei dem Metalloxidsubstrat um ein Li⁺-Ionen-haltiges Metalloxidsubstrat (Li⁺-haltiges Substrat), das aus der Gruppe ausgewählt ist, die aus c-LLZO, t-LLZO, LLTO, LTO, LATP und dotiertem c-LLZO, LLTO, LTO und LATP besteht.

Grundsätzlich ist gemäß einem Aspekt der vorliegenden Erfindung die Verwendung von solchen Metalloxidsubstraten bevorzugt, die Lithiumionen enthalten und eine Granatstruktur aufweisen. Diese Metalloxidsubstrate finden auch ohne spezielle Oberflächenbehandlung oder mit anderen Oberflächenbeschichtungen aufgrund ihrer Li⁺-Ionenleitfähigkeit in Feststoffbatterien und Elektrolysatoren, insbesondere als energietechnische oder elektrochemische Bauelemente oder Teilchen verschiedener Größen zu deren Herstellung, Verwendung.

Bei der Verwendung dieser Metalloxidsubstrate im Verfahren der vorliegenden Erfindung werden Bauteile und Teilchen, bevorzugt Pulver, mit besonders günstigen Eigenschaften erhalten, wobei die Li⁺-Ionenleitfähigkeit der Metalloxidgrundmaterialien durch die Oberflächenmodifikation durch besondere Beständigkeit der Leitereigenschaften und eine weitere Verbesserung der Leitfähigkeit durch die Oberflächenmodifikation bei den modifizierten Metalloxidsubstraten ergänzt wird. Durch das Vorliegen von Li⁺-Ionen im Metalloxidgrundmaterial ist die Zugabe einer Li⁺-Quelle nur erforderlich, wenn an der Oberfläche des Metalloxidmaterials keine verfügbaren Li⁺-Ionen vorliegen, beispielsweise wenn ein Pulver frisch durch Zerkleinerung größerer Teile des Materials hergestellt wurde und die Oberflächen der erhaltenen Teilchen nicht zur Alterung der Umgebungsluft ausgesetzt waren

In einer besonders bevorzugten Ausführungsform des erfindungsgemäßen Verfahrens handelt es sich bei dem Li⁺-Ionen-haltigen Metalloxidsubstrat um c-LLZO oder dotiertes c-LLZO, bevorzugt um Al-, Ta- oder Ga-dotiertes c-LLZO.

Die Verwendung von c-LLZO und den dotierten Varianten ist bevorzugt, da die daraus erhaltenen oberflächenmodifizierten Metalloxidsubstrate besonders vorteilhafte Leitungs- und Beständigkeitseigenschaften aufweisen. Die Verwendung eines c-LLZO-Pulvers oder eines dotierten c-LLZO-Pulvers ist besonders bevorzugt, wobei die Umsetzung eines solchen Pulvers in Ethanol mit Citronensäure als organischer Säure und einer wässrigen Phosphorsäurelösung als anorganische Säure noch weiter bevorzugt ist.

In einer anderen bevorzugten Ausführungsform des erfindungsgemäßen Verfahrens handelt es sich bei dem Metalloxidsubstrat um ein nicht-Li⁺-Ionen-haltiges Metalloxidsubstrat, dass aus der Gruppe ausgewählt ist, die aus Al₂O₃, TiO₂, ZrO₂, MgO und SiO₂ besteht.

Die genannten Metalloxidsubstrate finden als Bauelemente oder als Teilchen zu deren Herstellung aufgrund ihres inerten elektrochemischen Verhaltens, ihrer chemischen Beständigkeit, ihrer guten Verfügbarkeit und insbesondere ihrer mechanischen Festigkeit Verwendung. Durch die Oberflächenmodifikation durch das erfindungsgemäße Verfahren werden die Leitungseigenschaften der oberflächenmodifizierten Substrate und der damit hergestellten Bauelemente verbessert. Durch die Oberflächenmodifikation der nicht-Li⁺-haltigen Metalloxidsubstrate ist es möglich, die oftmals teureren oder aufwendiger zu produzierenden Li⁺-haltigen Metalloxidsubstrate ganz oder teilweise durch die gemäß dem erfindungsgemäßen Verfahren modifizierten oben genannten inerten, nicht-Li⁺-haltigen Metalloxidsubstrate zu ersetzen.

In einer besonders bevorzugten Ausführungsform des erfindungsgemäßen Verfahrens handelt es sich bei dem nicht-Li⁺-Ionen-haltigen Metalloxidsubstrat um Al₂O₃.

In einer weiteren bevorzugten Ausführungsform des erfindungsgemäßen Verfahrens handelt es sich bei dem Metalloxidsubstrat um ein Pulver mit einer mittleren Teilchengröße der Teilchen des Metalloxidsubstrates d50 im Bereich von 10 nm bis 100 µm, bevorzugt im Bereich von 100 nm bis 10 µm, und bevorzugter im Bereich von 500 nm bis 2 µm, gemessen mittels Laserdiffraktometrie (nach ISO-13320, Gerät: Horiba LA-950-V2, Software Version: 9.3).

In einer anderen Ausführungsform des erfindungsgemäßen Verfahrens handelt es sich bei dem Metalloxidsubstrat um ein poröses Material für Bauelemente oder Filtermembranen, wobei die mittlerer Porengröße des Metalloxidsubstrats im Bereich von 10 nm bis 100 µm, bevorzugt im Bereich von 100 nm bis 10 µm, und ideal im Bereich von 500 nm bis 5 µm liegt, wobei die Bestimmung der Porengröße durch Quecksilberporosimetrie (Thermo Scientific, Pascal140/440, Software: SOL.I.D (Solver of Intrusion Data), Version 1.6.6 3/10/2018) erfolgt.

Bei dieser Ausführungsform liegt das Metalloxidsubstrat in Form aus einem porösen Material bestehender makroskopischer Einheiten, nämlich von Bauelementen oder Filtermembranen, die für energietechnische oder elektrochemische Zwecke eingesetzt werden können, vor. Porös bezeichnet gemäß der vorliegenden Erfindung den Zustand offener Porosität, das poröse Material ist somit für Flüssigkeiten permeabel. Das aus pulverförmigem Ausgangsmaterial gesinterte poröse Material des Metalloxidsubstrates weist Poren auf der Oberfläche auf, deren Größe etwa im Bereich der Teilchengröße der gesinterten Partikel liegt. Die Bestimmung der Porengröße kann durch verschiedene Verfahren bestimmt werden, wobei gemäß der vorliegenden Erfindung die Bestimmung durch Quecksilberporosimetrie (Thermo Scientific, Pascal140/440, Software: SOL.I.D (Solver of Intrusion Data), Version 1.6.6 3/10/2018) erfolgt.

In einer speziellen Ausführungsform des erfindungsgemäßen Verfahrens wird das Metalloxidsubstrat durch Aufmahlen für die Oberflächenmodifikation in den Verfahrensschritten (1) und (2) vorbereitet, und ein Li⁺-Ionen-haltigen Salz wird vor oder während des in Kontakt Bringens des Metalloxidsubstrates mit der organischen Säure in Schritt (1) zugegeben.

Gemäß der vorliegenden Erfindung bezeichnet Aufmahlen einen Prozess zur Zerkleinerung von Metalloxidsubstratmaterial, einschließlich der Zerkleinerung der Primärpartikel eines Pulvers. Die Begriffe Aufmahlen und Mahlen werden bei der Beschreibung der Erfindung bedeutungsgleich verwendet. Durch das Aufmahlen bzw.

Mahlen wird die mittlere Teilchengröße d50 des Metalloxidsubstrates verringert, und die Oberfläche der Teilchen in Relation zum Volumen vergrößert. Das Mahlen kann in jeder dem Fachmann bekannten Mahlvorrichtung erfolgen, beispielsweise in einem Mörser, einer Kugelmühle, einem Mahlwerk, einer Hammermühle, einer Rotormühle oder einer Mahlmühle mit Walzenstuhl.

In einer Ausführungsform des erfindungsgemäßen Verfahrens enthält die organische Säure 1 bis 20 Kohlenstoffatome, bevorzugt 2 bis 12 Kohlenstoffatome, noch bevorzugter 3 bis 10 Kohlenstoffatome.

In einer weiteren Ausführungsform des erfindungsgemäßen Verfahrens enthält die organische Säure 1 bis 6 Carboxylgruppen, bevorzugt 2 bis 5 Carboxylgruppen, noch bevorzugter 2, 3 oder 4 Carboxylgruppen.

Organische Säure, die zwei oder mehr Carboxylgruppen enthalten sind bevorzugt, da diese als Chelatbildner fungieren können. Weiter bevorzugt sind organische Säuren, die zwei oder drei Carboxylgruppen enthalten, noch weiter bevorzugt sind organische Säuren, die zwei oder drei Carboxylgruppen enthalten und mindestens eine Hydroxygruppe oder Aminogruppe.

In einer bevorzugten Ausführungsform des erfindungsgemäßen Verfahrens weist die organische Säure einen pKs-Wert im Bereich größer 2,5 auf, bevorzugt einen pKs-Wert im Bereich von 3,0 bis 5,0.

Gemäß der vorliegenden Erfindung bezeichnet der pKs-Wert den negativen dekadischen Logarithmus der Säurekonstante K_{S}. Diese ist eine Stoffkonstante, die Aufschluss darüber gibt, in welchem Maße eine Verbindung in einer Gleichgewichtsreaktion mit Wasser unter Protolyse reagiert:

HA + H₂O 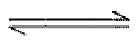 H₃O⁺ + A⁻

Im vorliegenden Fall steht HA für die organische Säure, die ein Proton H⁺ an Wasser abgeben kann.

Bei organischen Säuren, die über mehrere Carboxylgruppen verfügen und die somit schrittweise mehrere Protonen abgeben können, bezieht sich der pKs-Wert gemäß dieser Ausführungsform auf den pKs-Wert des ersten Protolyse-Schritts, bei dem das erste Proton abgespalten wird, auch als pKs₁ bezeichnet.

Die organischen Säuren gemäß dieser Ausführungsform sind bevorzugt, da sie beispielsweise das Carbonat-Anion aus einem Lithiumsalz verdrängen können, und ihrerseits von den anorganischen Säuren aus ihren Salzen verdrängt werden können.

In einer weiter bevorzugten Ausführungsform des erfindungsgemäßen Verfahrens ist die organische Säure aus der Gruppe ausgewählt ist, die aus Zitronensäure, Essigsäure, Propionsäure, Malonsäure, Oxalsäure, Fumarsäure, Benzoesäure, Bernsteinsäure, Maleinsäure, Salicylsäure, Glycolsäure, Hydroxypropionsäure, Äpfelsäure, Weinsäure, Valeriansäure, Pivalinsäure, Ascorbinsäure, Phthalsäure, Isophthalsäure, Terephthalsäure, Phenylessigsäure, o-Toluylsäure, m-Toluylsäure, p-Toluylsäure, Mandelsäure, Suberinsäure, Octansäure, Zimtsäure, Dihydroxyweinsäure, cis-Aconitsäure, Oxalessigsäure, Oxoglutarsäure, Brenztraubensäure, Gentisinsäure, Methylmalonsäure, Mesaconsäure, Glyoxylsäure, Isozitronensäure, Glycerinsäure, Ameisensäure, Milchsäure besteht, besonders bevorzugt handelt es sich bei der organischen Säure um Zitronensäure.

Besonders bevorzugt sind die Carbonsäuren, die mindestens zwei Carboxylgruppen aufweisen und/oder zusätzlich zu der oder den Carboxylgruppen noch eine oder mehrere Hydroxygruppen aufweisen.

In einer Ausführungsform des erfindungsgemäßen Verfahrens ist die organische Säure eine Monocarbonsäure, bevorzugt eine Monocarbonsäure ausgewählt aus der Gruppe, die aus C2-C10-Alkancarbonsäuren, C3-C10-Alkencarbonsäuren, Benzoe- und Toluylcarbonsäuren, C2-C10-Hydroxycarbonsäuren und C3-C10-Oxocarbonsäuren besteht, ist.

Beispiele für bevorzugte Säuren gemäß der Ausführungsform sind Ethansäure, Propansäure, Butansäure, Pentansäure, Hexansäure, Octansäure, Nonansäure und Decansäure, Acrylsäure, Methacrylsäure, Butensäure, Pentensäure, Hexensäure, Benzoesäure, Glycolsäure, Milchsäure, β-Hydroxybuttersäure, Mevalonsäure, Mandelsäure, 4-Hydroxybutansäure, 4-Hydroxybenzoesäure, Gallussäure, Salicylsäure, 2-Oxopropansäure, 3-Oxopropansäure, und 4-Oxopentansäure.

In einer anderen Ausführungsform des erfindungsgemäßen Verfahrens ist die organische Säure eine Dicarbonsäure ist, bevorzugt ausgewählt aus der Gruppe, die aus C2-C10-Alkandicarbonsäuren, C4-C10-Alkendicarbonsäuren, Phthalsäuren, C3-C10-Hydroxydicarbonsäuren, C4-C10-Oxodicarbonsäure besteht.

Beispiele für bevorzugte Säuren gemäß der Ausführungsform sind Ethandisäure, Propandisäure, Butandisäure, Pentandisäure, Hexandisäure, Octandisäure, Nonandisäure und Decandisäure, Maleinsäure, Fumarsäure, Phthalsäure, Isophthalsäure, Äpfelsäure, Tartronsäure und Weinsäure.

In einer weiteren Ausführungsform des erfindungsgemäßen Verfahrens enthält die organische Säure drei oder mehr Carboxylgruppen, bevorzugt ist es eine organische Säure ausgewählt aus der Gruppe, die aus C3-C10-Alkantricarbonsäuren, C4-C10-Alkentricarbonsäuren, Benzoltricarbonsäuren, C3-C10-Hydroxytricarbonsäuren, insbesondere Zitronensäure und Isozitronensäure, und C4-C10-Oxotricarbonsäuren, sowie Benzoltetracarbonsäuren besteht.

Bevorzugte Beispiele für Säuren der Ausführungsform sind Zitronensäure und Isozitronensäure sowie Trimesinsäure.

In einer bevorzugten Ausführungsform enthält die organische Säure mindestens ein Heteroatom ausgewählt aus O, N, S und P, bevorzugt mindestens ein O-Atom oder mindestens ein N-Atom, noch bevorzugter handelt es sich bei der organischen Säure mit mindestens einem Heteroatom um Zitronensäure.

Die Verwendung einer organischen Säure, die über die Sauerstoffatome der einen oder mehreren Carboxylgruppen hinaus mindestens ein Heteroatom enthält, ist bevorzugt, da mit Verbindungen der Ausführungsform gute Ergebnisse erzielt werden, mutmaßlich weil die Anwesenheit von Heteroatomen zu einer Koordination von Li⁺-Ionen führt und/oder zu einem vorteilhaften Adsorptionsverhalten an der Oberfläche des Metalloxidsubstrates führt.

Im Sinn dieser Ausführungsform bedeutet "eine organische Säure, die mindestens einem Heteroatom, das ein O-Atom ist, enthält", dass es sich um eine organische Säure handelt, die mindestens ein Sauerstoffatom über die Sauerstoffatome, die Teil von einer oder mehreren Carboxylgruppen sind, hinaus enthält. Bevorzugt handelt es sich bei dem mindestens einen Heteroatomen um Sauerstoffatome, die Teil einer oder mehrerer Hydroxygruppen sind, oder um Stickstoffatome, die Teil einer oder mehrerer Amingruppen sind.

Gemäß der vorliegenden Erfindung sind Carbonsäuren, die zusätzlich zu der oder den Carboxylgruppen noch eine oder mehrere Hydroxygruppen aufweisen, bevorzugt, weiter bevorzugt sind Carbonsäuren, die mindestens eine Hydroxygruppe und mindestens zwei Carboxylgruppen aufweisen.

Ebenfalls bevorzugt sind Carbonsäuren, die zusätzlich zu der oder den Carboxylgruppen noch eine oder mehrere Mercaptogruppen aufweisen.

Außerdem bevorzugt sind Carbonsäuren, die zusätzlich zu der oder den Carboxylgruppen noch ein oder mehrere Stickstoffatome in Amingruppen aufweisen, weiter bevorzugt sind Carbonsäuren, die ein oder mehrere Stickstoffatome enthalten, die über Kohlenstoffatome mit mindestens zwei Carboxylgruppen verbunden sind, also Aminopolycarbonsäuren, noch bevorzugter sind Carbonsäuren, die zwei oder mehr tertiäre Aminogruppen und zwei oder mehr Carboxylgruppen enthalten.

Durch das Vorliegen mindestens einer Carboxylgruppe und mindestens eines weiteren Heteroatoms können die Verbindungen als Chelatbildner fungieren und in besonderer Weise mit Metallionen und Oberflächen von Metalloxidsubstraten interagieren.

In einer besonders bevorzugten Ausführungsform der erfindungsgemäßen Ausführungsform ist die organische Säure ein Chelatbildner, bevorzugt eine Verbindung ausgewählt aus der Gruppe bestehend aus Iminodiessigsäure, Nitrilotriessigsäure, Ethylendiamintriessigsäure, Ethylendiamintetraessigsäure, Diethylentriaminpenta-essigsäure, Triethylentetraminhexaessigsäure, 1,4,7,10-Tetraazacyclododecan-1,4,7,10-tetraessigsäure, Oxalsäure, Weinsäure, Zitronensäure und Dimercaptobernsteinsäure.

Gemäß der vorliegenden Erfindung handelt es sich bei einem Chelatbildner um eine Verbindung, die als mehrzähnige Liganden mindestens zwei Koordinationsstellen eines Zentralatoms einnehmen können, da sie mehr als ein freies Elektronenpaar besitzen.

Es wird angenommen, dass die Verwendung einer organischen Säure, die mindestens zwei koordinative Bindungen eingehen kann, eine wichtige Rolle bei der Adsorption an der Oberfläche des Metalloxidsubstrates und die Ausbildung der spezifischen, durch das erfindungsgemäße Verfahren erzielten Oberflächenmodifikation spielt. Bevorzugt handelt es sich gemäß der vorliegenden Erfindung bei den organischen Säuren, die als Chelatbildner fungieren, um organische Säuren, die neben mindestens einer Carboxylgruppe oder vinyloger Carboxylgruppe mindestens eine weitere Gruppe ausgewählt aus COOH, OH, primären, sekundären oder tertiären Amingruppen, oder Mercaptogruppen enthält, bevorzugt mindestens eine OH- oder Amingruppe oder eine weitere Carboxylgruppe, weiter bevorzugt mindestens eine weitere OH- oder Amingruppe und mindestens eine weitere Carboxylgruppe.

Besonders bevorzugte Verbindungsarten, aus denen die Chelatbildner ausgewählt sind, sind Dicarbonsäuren, Amincarbonsäuren und Hydroxylsäuren. Amincarbonsäuren sind Carbonsäuren, die neben mindestens einer Carboxylgruppe mindestens eine primäre Amingruppe (Aminogruppe), sekundäre oder tertiäre Amingruppe enthalten.

In einer bevorzugten Ausführungsform des erfindungsgemäßen Verfahrens wird die organische Säure in einem Gewichtsverhältnis (m/m) der organischen Säure zum Metalloxidsubstrat im Bereich von 0,05 : 1 bis 100 : 1, bevorzugt im Bereich von 0,1 : 1 bis 40 : 1, bevorzugter im Bereich von 0,2 : 1 bis 10 : 1, noch bevorzugter im Bereich von 0,4 : 1 bis 5 : 1, und am bevorzugtesten im Bereich von 0,6 : 1 bis 3 : 1 zugegeben.

In einer Ausführungsform des erfindungsgemäßen Verfahrens ist die anorganische Säure aus der Gruppe ausgewählt die aus Phosphorsäure H₃PO₄, Salpetersäure HNO₃, Schwefelsäure H₂SO₄, Chlorwasserstoffsäure HCl, Perchlorsäure HClO₄, schwefliger Säure H₂SO₃, salpetriger Säure HNO₂, und Borsäure H₃BO₃ besteht.

Durch die Auswahl der anorganischen Säure können die Eigenschaften der Oberflächenmodifikation gesteuert werden, etwa die Ionenleitfähigkeit der Beschichtung sowie die chemische Stabilität gegenüber Lösungsmitteln und Bindungseigenschaften zu Polymeren. Durch die Verwendung von Salpetersäure gebildete Nitrate weisen eine höhere Ionenleitfähigkeit als Phosphate und Sulfate auf, während durch die Verwendung von Phosphorsäure gebildete Phosphate eine in vielen Anwendungen vorteilhafte höhere Stabilität gegenüber Lösungsmitteln oder ein besseres Bindungsverhalten zu Polymeren aufweist.

In einer bevorzugten Ausführungsform des erfindungsgemäßen Verfahrens umfasst die anorganische Säure Phosphorsäure H₃PO₄.

Gemäß dieser Ausführungsform handelt es sich noch bevorzugter bei der anorganischen Säure um wässrige Phosphorsäure, noch weiter bevorzugt um 30 %ige bis 85 %-ige wässrige Phosphorsäure (Gew.-% H₃PO₄ bezogen auf das Gesamtgewicht der Phosphorsäure-Lösung).

Die Verwendung von Phosphorsäure als anorganische Säure führt zur Bildung einer spezifischen Form einer Li₃PO₄-haltigen Schicht an der Oberfläche des Metalloxidsubstrates, welche die Leitungseigenschaften und die Stabilität des Metalloxidsubstrates verbessert.

In einer weiteren Ausführungsform des erfindungsgemäßen Verfahrens wird die anorganische Säure in einem Stoffmengen-Verhältnis (mol/mol) zur organischen Säure im Bereich von 0,2 : 1 bis 30 : 1, bevorzugt von 0,5 : 1 bis 20 : 1, bevorzugter im Verhältnis von 1 : 1 bis 10 : 1, am bevorzugtesten im Verhältnis von 1,5 : 1 bis 5 : 1 zugegeben.

Es ist bevorzugt, dass die Menge der anorganischen Säure nach Stoffmenge in mol mindestens einem wesentlichen Teil der Menge der organischen Säure in mol entspricht, bevorzugt mindestens 50 % der Menge, oder die Menge mindestens genauso groß oder größer ist als die Menge der organischen Säure.

In einer anderen Ausführungsform des erfindungsgemäßen Verfahrens werden vor oder während des ersten Schrittes 0,05 bis 20 Gewichts-%, bevorzugt 0,1 bis 12 Gewichts-%, bevorzugter 0,2 bis 8 Gewichts-% und noch bevorzugter 0,3 bis 5 Gewichts-% eines Li⁺-Salzes bezogen auf das Gewicht des Metalloxidsubstrates zu dem Metalloxidsubstrat zugegeben, wobei es sich bei dem Li⁺-Salz bevorzugt um Li₂CO₃ handelt.

Die Zugabe des Lithiumsalzes zu dem Metalloxidsubstrat kann entweder in Lösung oder in Form des festen Salzes vor dem ersten Verfahrensschritt (1) erfolgen, oder die Zugabe erfolgt während des ersten Verfahrensschritt (1) durch Zugabe einer Lithiumsalz-Lösung oder des Lithiumsalzes als Feststoff zu dem Lösungsmittel, das in Kontakt mit dem Metalloxidsubstrat steht.

In einer weiteren Ausführungsform des erfindungsgemäßen Verfahrens wird das Metalloxidsubstrat vor oder während den Verfahrensschritten (1) und (2) in einer Aufschlämmung einer Deagglomeration unterzogen.

Gemäß der vorliegenden Erfindung bezeichnet Deagglomeration ein Verfahren zum Aufbrechen von Sekundärpartikeln in Primärpartikel, wodurch die mittlere Teilchengröße von Pulvern verringert und die Gesamtoberfläche vergrößert wird. Im Unterschied zum Mahlen oder Aufmahlen erfolgt keine Zerkleinerung der Primärpartikel. Die Deagglomeration kann durch Hochenergierühren, Ultraschallbehandlung, oder eine Mahlbehandlung unter Bedingungen, bei denen es zu keiner Zerkleinerung der Primärpartikel kommt, erfolgen.

Die Durchführung der Deagglomeration des Metalloxidsubstrates ist vor dem erfindungsgemäßen Verfahren oder während des Verfahrens möglich, wobei die Durchführung vor dem Verfahren bevorzugt ist. Es ist ebenfalls möglich, die Deagglomeration vor und/oder während der Durchführung des Verfahrens im Mahlbehälter durchzuführen, wobei fortwährend gerührt wird.

In noch einer weiteren Ausführungsform des erfindungsgemäßen Verfahrens wird das nach den Verfahrensschritten (1) und (2) erhaltene oberflächenmodifizierte Metalloxidsubstrat anschließend in einem weiteren Schritt
(3) optional mit Wasser, Methanol, oder Ethanol, bevorzugt mehrere Male, gewaschen, dann optional abfiltriert, und
getrocknet, wobei die Trocknungstemperatur bevorzugt 350 °C nicht übersteigt.

Das erfindungsgemäße Verfahren zur Oberflächenmodifikation von Metalloxidsubstraten erfordert keinen Schritt des Brennens oder des starken Erhitzens in einer speziellen Atmosphäre nach dem Durchführen des nasschemischen Verfahrens, um die gewünschten Effekte der Oberflächenmodifikation zu erzielen. Dies stellt eine enorme Energie-, Aufwands- und damit Kostenersparnis gegenüber anderen Verfahren zur Beschichtung von Metalloxidsubstraten dar. Die Trocknung findet weiter bevorzugt in einem Temperaturbereich zwischen 30 °C und 250 °C, noch weiter bevorzugt zwischen 50 °C und 180 °C, und am bevorzugtesten zwischen 80 °C und 120 °C statt, optional unter vermindertem Druck, also einem Druck unterhalb des Atmosphärendrucks von 101,325 kPa. Bei der Verwendung eines verminderten Drucks beim Trocknen beträgt der Druck bevorzugt weniger als 70 kPa, bevorzugter weniger als 10 kPa, noch bevorzugter weniger als 1 kPa, noch bevorzugter weniger als 0,1 kPa.

In einer anderen Ausführungsform des erfindungsgemäßen Verfahrens wird in Schritt (1) vor oder während der Zugabe der organischen Säure bei einer Temperatur von 0 °C bis 80 °C während 1 Minute bis 48 Stunden, bevorzugt 10 min bis 24 h, bevorzugter 15 min bis 3h gerührt und/oder deagglomeriert.

Die Durchführung der Deagglomeration während des ersten Verfahrensschrittes (1) führt zu einer besseren Durchmischung und der Zugänglichkeit aller Oberflächen des Metalloxidsubstrates.

Gemäß der vorliegenden Erfindung wird das Verfahren gemäß der hier beschriebenen Ausführungsformen im Bereich von -70 °C bis 300 °C durchgeführt. In einer bevorzugten Ausführungsform wird das Verfahren im Bereich von -20 °C bis 200 °C, bevorzugter im Bereich von 0 °C bis 120 °C, noch bevorzugter im Bereich von10 °C bis 100 °C, weiter bevorzugt im Bereich von 20 °C bis 90 °C, noch weiter bevorzugt im Bereich von 30 °C bis 80 °C, und am bevorzugtesten im Bereich von 45 °C bis 70 °C durchgeführt.

Hierbei wird das Verfahren bevorzugt unterhalb des Siedepunktes des verwendeten Lösungsmittels bei Normaldruck (1,01325 bar) durchgeführt.

In einer Ausführungsform des erfindungsgemäßen Verfahrens, in der das Metalloxidsubstrat vor Schritt (1) des Verfahrens durch die Zugabe eines Li⁺-Salzes und wahlweise nachfolgende mechanische Bearbeitung vorbereitet wird, übersteigt die Temperatur bei und nach der Zugabe des Li⁺-Salzes 300 °C, bevorzugt 200 °C, noch bevorzugter 150 °C nicht.

Im erfindungsgemäßen Verfahren können Li⁺-Salze vor Schritt 1 zu dem Metalloxidsubstrat zugegeben werden, um zu gewährleisten, dass in Schritt 1 im Lösungsmittel und/oder an der Oberfläche des Metalloxidsubstrates Li⁺-Ionen vorliegen, und zwar unabhängig davon, ob das Metalloxidsubstrat ein Li⁺-Ionen-haltiges Material ist oder nicht, und falls ja, ob es gealtert wurde oder nicht.

Hierbei ist jedoch keine Bildung einer neuen Phase mit dem Material des Metalloxidsubstrates, welche unter Hochtemperaturbedingungen nach der Zugabe von Li⁺-Salzen stattfinden kann, erwünscht. Daher wird die Temperatur bei der Wahl einer solchen Vorbereitung des Metalloxidsubstrates in dem angegebenen Bereich gehalten.

In einer bevorzugten Ausführungsform des erfindungsgemäßen Verfahrens ist das Verfahren dadurch gekennzeichnet, dass es sich bei dem Metalloxidsubstrat um ein nicht-Li⁺-Ionen-haltiges Metalloxidsubstrat ausgewählt aus Al₂O₃, TiO₂, ZrO₂, MgO, und SiO₂, bevorzugt Al₂O₃, handelt,
dass es sich bei der organischen Säure in Verfahrensschritt (1) um eine organische Säure mit einem pKs-Wert im Bereich größer 2,5, bevorzugt mit einem pKs-Wert im Bereich von 3,0 bis 5,0 handelt,
dass es sich bei der anorganischen Säure in Verfahrensschritt (2) um eine anorganische Säure aus der Gruppe, die aus Phosphorsäure H₃PO₄, Salpetersäure HNO₃, Schwefelsäure H₂SO₄, Chlorwasserstoffsäure HCl, Perchlorsäure HClO₄, schwefliger Säure H₂SO₃, salpetriger Säure HNO₂, und Borsäure H₃BO₃ besteht, bevorzugt H₃PO₄, handelt,
dass es sich bei dem Lösungsmittel in beiden Verfahrensschritten (1) und (2) um Wasser, Methanol, Ethanol, n-Propanol, Isopropanol oder ein Gemisch derselben handelt, und dass die Anwesenheit von Li⁺-Ionen durch die Zugabe eines Li⁺-Ionen-haltigen Salzes vor oder während des in Kontakt Bringens mit der organischen Säure in Schritt (1) erzielt wird, bei dem es sich um Lithiumhydroxid, Lithiumchlorid, Lithiumoxid Li₂O oder Lithiumcarbonat, bevorzugt um Lithiumcarbonat, handelt.

Durch die Kombination der genannten Ausgangsmaterialien, Lösungsmittel, Zusatzstoffe und Säuren in den Verfahrensschritten (1) und (2) werden oberflächenmodifizierte Metalloxidsubstrate mit verbesserter Beständigkeit und/oder verbesserter Grenzflächenleitfähigkeit erhalten, wobei die nicht-Li-Ionen-haltigen oberflächenmodifizierten Metalloxidsubstrate der Ausführungsform durch die Oberflächenmodifizierung eine verbesserte Grenzflächenleitfähigkeit aufweisen und teurere und weniger beständige Komponenten auf der Grundlage Li⁺-haltiger Metalloxide ersetzen können

In einer weiteren bevorzugten Ausführungsform des erfindungsgemäßen Verfahrens ist das Verfahren dadurch gekennzeichnet, dass es sich bei dem Metalloxidsubstrat um ein nicht-Li⁺-Ionen-haltiges Metalloxidsubstrat gewählt aus Al₂O₃, TiO₂ oder ZrO₂, bevorzugt Al₂O₃, handelt,
dass es sich bei der organischen Säure in Verfahrensschritt (1) um eine organische Säure ausgewählt aus der Gruppe bestehend aus Zitronensäure, Essigsäure, Propionsäure, Malonsäure, Oxalsäure, Fumarsäure, Benzoesäure, Bernsteinsäure, Maleinsäure, Salicylsäure, Glycolsäure, Hydroxypropionsäure, Äpfelsäure, Weinsäure, Valeriansäure, Pivalinsäure, Ascorbinsäure, Phthalsäure, Isophthalsäure, Terephthalsäure, Phenylessigsäure, o-Toluylsäure, m-Toluylsäure, p-Toluylsäure, Mandelsäure, Suberinsäure, Octansäure, Zimtsäure, Dihydroxyweinsäure, cis-Aconitsäure, Oxalessigsäure, Oxoglutarsäure, Brenztraubensäure, Gentisinsäure, Methylmalonsäure, Mesaconsäure, Glyoxylsäure, Isozitronensäure, Glycerinsäure, Ameisensäure, Milchsäure, Iminodiessigsäure, Nitrilotriessigsäure, Ethylendiamintriessigsäure, Ethylendiamintetraessigsäure, Diethylentriaminpenta-essigsäure, Triethylentetraminhexaessigsäure, 1,4,7,10-Tetraazacyclododecan-1,4,7,10-tetraessigsäure, Oxalsäure, Weinsäure, Zitronensäure und Dimercaptobernsteinsäure, bevorzugt Zitronensäure oder Oxalsäure, handelt,
dass es sich bei der anorganischen Säure in Verfahrensschritt (2) um Phosphorsäure H₃PO₄ handelt, dass es sich bei dem Lösungsmittel in beiden Verfahrensschritten (1) und (2) um Wasser, Methanol, Ethanol, n-Propanol, Isopropanol oder ein Gemisch derselben handelt, und dass die Anwesenheit von Li⁺-Ionen durch die Zugabe eines Li⁺-Ionen-haltigen Salzes vor oder während des in Kontakt Bringens mit der organischen Säure in Schritt (1) erzielt wird, bei dem es sich um Lithiumhydroxid, Lithiumchlorid, Lithiumoxid Li₂O, oder Lithiumcarbonat, bevorzugt um Lithiumcarbonat, handelt.

Die in der Ausführungsform verwendeten Säuren sind einfach zugänglich und gewährleisten die Bereitstellung der oberflächenmodifizierten Metalloxidsubstrate mit verbesserten Eigenschaften wie oben beschrieben, insbesondere verbesserter Grenzflächenleitfähigkeit.

In einer anderen bevorzugten Ausführungsform des erfindungsgemäßen Verfahrens ist das Verfahren dadurch gekennzeichnet, dass es sich bei dem Metalloxidsubstrat um ein Li⁺-Ionen-haltiges Metalloxidsubstrat (Li⁺-haltiges Substrat) handelt, das aus der Gruppe ausgewählt ist, die aus c-LLZO, t-LLZO, LLTO, LTO, LATP und dotiertem c-LLZO, LLTO, LTO und LATP besteht,
dass es sich bei der organischen Säure in Verfahrensschritt (1) um eine organische Säure mit einem pKs-Wert im Bereich größer 2,5, bevorzugt mit einem pKs-Wert im Bereich von 3,0 bis 5,0 handelt,
dass es sich bei der anorganischen Säure in Verfahrensschritt (2) um eine anorganische Säure aus der Gruppe, die aus Phosphorsäure H₃PO₄, Salpetersäure HNO₃, Schwefelsäure H₂SO₄, Chlorwasserstoffsäure HCl, Perchlorsäure HClO₄, schwefliger Säure H₂SO₃, salpetriger Säure HNO₂, und Borsäure H₃BO₃ besteht, bevorzugt H₃PO₄, handelt,
dass es sich bei dem Lösungsmittel in beiden Verfahrensschritten (1) und (2) um Wasser, Methanol, Ethanol, n-Propanol, Isopropanol oder ein Gemisch derselben handelt, und dass optional die Anwesenheit von Li⁺-Ionen durch die Zugabe eines Li⁺-Ionen-haltigen Salzes vor oder während des in Kontakt Bringens mit der organischen Säure in Schritt (1) vergrößert wird, bei dem es sich um Lithiumhydroxid, Lithiumchlorid, Lithiumoxid Li₂O oder Lithiumcarbonat, bevorzugt um Lithiumcarbonat, handelt.

Durch die Kombination der genannten Ausgangsmaterialien, Lösungsmittel, Zusatzstoffe und Säuren in den Verfahrensschritten (1) und (2) werden oberflächenmodifizierte Metalloxidsubstrate mit verbesserter Beständigkeit und/oder verbesserter Grenzflächenleitfähigkeit erhalten, wobei die Li⁺-Ionen-haltigen oberflächenmodifizierten Metalloxidsubstrate der Ausführungsform durch die Oberflächenmodifizierung eine verbesserte Beständigkeit gegenüber Feuchtigkeit, protischen Lösungsmitteln allgemein und Atmosphärenluft aufweisen.

In einer weiteren bevorzugten Ausführungsform des erfindungsgemäßen Verfahrens ist das Verfahren dadurch gekennzeichnet, dass es sich bei dem Metalloxidsubstrat um ein Li⁺-Ionen-haltiges Metalloxidsubstrat (Li⁺-haltiges Substrat) handelt, bei dem es sich um c-LLZO oder dotiertes c-LLZO handelt, bevorzugt um Al-, Ta- oder Ga-dotiertes c-LLZO,
dass es sich bei der organischen Säure in Verfahrensschritt (1) um eine organische Säure ausgewählt aus der Gruppe bestehend aus Zitronensäure, Essigsäure, Propionsäure, Malonsäure, Oxalsäure, Fumarsäure, Benzoesäure, Bernsteinsäure, Maleinsäure, Salicylsäure, Glycolsäure, Hydroxypropionsäure, Äpfelsäure, Weinsäure, Valeriansäure, Pivalinsäure, Ascorbinsäure, Phthalsäure, Isophthalsäure, Terephthalsäure, Phenylessigsäure, o-Toluylsäure, m-Toluylsäure, p-Toluylsäure, Mandelsäure, Suberinsäure, Octansäure, Zimtsäure, Dihydroxyweinsäure, cis-Aconitsäure, Oxalessigsäure, Oxoglutarsäure, Brenztraubensäure, Gentisinsäure, Methylmalonsäure, Mesaconsäure, Glyoxylsäure, Isozitronensäure, Glycerinsäure, Ameisensäure, Milchsäure, Iminodiessigsäure, Nitrilotriessigsäure, Ethylendiamintriessigsäure, Ethylendiamintetraessigsäure, Diethylentriaminpentaessigsäure, Triethylentetraminhexaessigsäure, 1,4,7,10-Tetraazacyclododecan-1,4,7,10-tetraessigsäure, Oxalsäure, Weinsäure, Zitronensäure und Dimercaptobernsteinsäure, bevorzugt Zitronensäure oder Oxalsäure, handelt,
dass es sich bei der anorganischen Säure in Verfahrensschritt (2) um Phosphorsäure H₃PO₄ handelt,
dass es sich bei dem Lösungsmittel in beiden Verfahrensschritten (1) und (2) um Wasser, Methanol, Ethanol, n-Propanol, Isopropanol oder ein Gemisch derselben handelt, und dass optional die Anwesenheit von Li⁺-Ionen durch die Zugabe eines Li⁺-Ionen-haltigen Salzes vor oder während des in Kontakt Bringens mit der organischen Säure in Schritt (1) verbessert wird, bei dem es sich um Lithiumhydroxid, Lithiumchlorid, Lithiumoxid Li₂O oder Lithiumcarbonat, bevorzugt um Lithiumcarbonat, handelt.

Die in der Ausführungsform verwendeten Säuren sind einfach zugänglich und gewährleisten die Bereitstellung der oberflächenmodifizierten Metalloxidsubstrate mit verbesserten Eigenschaften wie oben beschrieben, insbesondere verbesserter Beständigkeit auf.

In einer besonders bevorzugten Ausführungsform des erfindungsgemäßen Verfahrens ist das Verfahren dadurch gekennzeichnet,
dass es sich bei dem Metalloxidsubstrat um gealtertes LLZO, nicht gealtertes LLZO oder Al₂O₃ handelt,
dass es sich bei dem in Schritt (1) und Schritt (2) verwendeten Lösungsmittel um eines ausgewählt aus EtOH, Isopropanol, Wasser, Ethylenglycol, THF oder einem Gemisch derselben, bevorzugt ein EtOH oder ein Wasser/EtOH-Gemisch, handelt,
dass es sich bei dem wahlweise zugegebenen Li⁺-Ionen-haltigen Salz um Li₂O, Li₂CO₃ oder LiOH handelt,
dass es sich bei der organischen Säure um eine ausgewählt aus Zitronensäure, Ethylendiamintetraessigsäure (EDTA), Milchsäure, Weinsäure, Ameisensäure, Essigsäure, Propionsäure, Buttersäure, Oxalsäure, Malonsäure, Bernsteinsäure oder Glutarsäure handelt, und dass es sich bei der anorganischen Säure um Phosphorsäure, Schwefelsäure oder Borsäure handelt.

Die Produkte dieses Verfahrens zeichnen sich durch vorteilhafte Eigenschaften hinsichtlich der Grenzflächenleitfähigkeit und/oder der Beständigkeit der oberflächenmodifizierten Metalloxidsubstrate aus, die verwendeten Reagenzien und Lösungsmitteln sind gut zugänglich, leicht zu handhaben und relativ umweltfreundlich.

In einer weiteren besonders bevorzugten Ausführungsform des erfindungsgemäßen ist das Verfahren dadurch gekennzeichnet, dass es sich bei dem in Schritt (1) und Schritt (2) verwendeten Lösungsmittel um EtOH oder ein Gemisch von Wasser und EtOH handelt, dass es sich bei der organischen Säure um Zitronensäure oder Oxalsäure handelt, und dass es sich bei der anorganischen Säure um Phosphorsäure handelt.

Die genannten Lösungsmittel und Säuren sind einfach zugänglich, sicher zu handhaben, vergleichsweise umweltfreundlich und gewährleisten in Kombination mit den Metalloxidsubstraten, gegebenenfalls Li⁺-Salzen und Reaktionsbedingungen wie in den weiteren Ausführungsformen beschrieben die Bereitstellung von oberflächenmodifizierten Metalloxidsubstraten mit verbesserter Stabilität und/oder Grenzflächenleitfähigkeit.

In einer spezifischen bevorzugten Ausführungsform des erfindungsgemäßen Verfahrens ist das Verfahren dadurch gekennzeichnet, dass es sich bei dem Metalloxidsubstrat um gealtertes LLZO handelt,
dass als Lösungsmittel in den Verfahrensschritten (1) und (2) EtOH, Isopropanol, Wasser, Ethylenglycol, THF oder ein Gemisch derselben, bevorzugt EtOH oder ein Wasser/EtOH-Gemisch, verwendet wird, und dass bevorzugt kein zusätzliches Li⁺-Ionen-haltiges Salz zugegeben wird.

Bei dem gealterten LLZO kann es sich um jede Art von LLZO wie in der Beschreibung definiert handeln. Aufgrund der Alterung der LLZO-Metalloxidsubstrate liegt an der Oberfläche der Substrate eine Li⁺-haltige Schicht vor, die mindestens teilweise in den Lösungsmitteln der Ausführungsform löslich ist, wodurch die Anwesenheit von Li⁺-Ionen in Verfahrensschritt (1) gewährleistet ist und die Zugabe eines zusätzliche Li⁺-Salzes nicht notwendig und daher nicht bevorzugt ist.

In einer weiteren spezifischen bevorzugten Ausführungsform des erfindungsgemäßen Verfahrens ist das Verfahren dadurch gekennzeichnet, dass es sich bei dem Metalloxidsubstrat um nicht gealtertes LLZO handelt, dass als Lösungsmittel in den Verfahrensschritten (1) und (2) EtOH, Isopropanol, Wasser, Ethylenglycol, THF oder einem Gemisch derselben, bevorzugt EtOH oder ein Wasser/EtOH-Gemisch, verwendet wird, und dass entweder kein zusätzliches Li⁺-Ionen-haltiges Salz oder eines gewählt aus Li₂O, LiCI, Li₂CO₃ oder LiOH zugegeben wird, bevorzugt Li₂CO₃.

Nicht gealtertes LLZO weist an der Oberfläche zunächst keine oder nur wenige lösliche Li⁺-Ionen auf, wobei in der Gegenwart protischer und wässriger Lösungsmittel Alterung stattfinden und sich eine Schicht löslicher Li⁺-Salze bilden kann. Um eine direkte Oberflächenmodifikation durch das erfindungsgemäße Verfahren zu gewährleisten wird daher bei der Durchführung des Verfahrens gemäß der Ausführungsform bevorzugt ein Li⁺-Salz zugegeben, es ist jedoch nicht unbedingt erforderlich.

In noch einer weiteren spezifischen bevorzugten Ausführungsform des erfindungsgemäßen Verfahrens ist das Verfahren dadurch gekennzeichnet, dass es sich bei dem Metalloxidsubstrat um Al₂O₃ handelt, dass als Lösungsmittel in den Verfahrensschritten (1) und (2) EtOH, Isopropanol, Wasser, Ethylenglycol, THF oder einem Gemisch derselben, bevorzugt EtOH oder ein Wasser/EtOH-Gemisch, verwendet wird, und dass als Li⁺-Ionen-haltiges Salz eines gewählt aus Li₂O, LiCI, Li₂CO₃ oder LiOH zugegeben wird.

Da die Metalloxidsubstrate gemäß der Ausführungsform keine Li⁺-Ionen erhalten, die Zugabe eines Li⁺-Salzes zwingend erforderlich, um das erfindungsgemäße Verfahren durchzuführen. Die Li+-Salze, die in der Ausführungsform verwendet werden, sind in den Lösungsmitteln der Ausführungsform gut löslich und können daher gut mit dem Al₂O₃-Substrat in Kontakt gebracht werden.

Gemäß der Ausführungsform ist die Verwendung von Oxalsäure oder Zitronensäure besonders bevorzugt, als anorganische Säuren sind Phosphorsäure, Schwefelsäure und Borsäure bevorzugt, besonders bevorzugt ist die Verwendung von Zitronensäure in Verfahrensschritt (1) und von Phosphorsäure in Verfahrensschritt (2).

In einer bevorzugten Ausführungsform des erfindungsgemäßen Verfahrens ist das Verfahren dadurch gekennzeichnet, dass die Konzentration der organischen Säure im Lösungsmittel in Schritt (1) des Verfahrens von 0,3 bis 6,0 mol/l, bevorzugt 0,5 bis 3 mol/l, noch bevorzugter 1 bis 2,0 mol/l beträgt.

In noch einer bevorzugten Ausführungsform des erfindungsgemäßen Verfahrens ist das Verfahren dadurch gekennzeichnet, dass die Konzentration der anorganischen Säure im Lösungsmittel in Schritt (2) des Verfahrens von 0,05 bis 3,0 mol/l, bevorzugt 0,1 bis 2 mol/l, noch bevorzugter 0,30 bis 1,0 mol/l beträgt.

In dem angegebenen Bereich ist die Konzentration der anorganischen Säure ausreichend, um eine Oberflächenmodifikation des Metalloxidsubstrates zu bewirken, wobei auch bei der Verwendung starker anorganischer Säuren die Ätzung, das heißt wesentlicher Abtrag des Metalloxidsubstrats, vermieden wird.

In einer weiteren bevorzugten Ausführungsform des erfindungsgemäßen Verfahrens ist das Verfahren dadurch gekennzeichnet, dass das Metalloxidsubstrat in Schritt (1) 1 min bis 24 h, bevorzugt 10 min bis 6 h, bevorzugter 15 min bis 1h mit der organischen Säure in Kontakt gebracht wird, bevor mit Schritt (2) fortgefahren wird.

In noch einer bevorzugten Ausführungsform des erfindungsgemäßen Verfahrens ist das Verfahren dadurch gekennzeichnet, dass das Metalloxidsubstrat in Schritt (2) 1 min bis 24 h, bevorzugt 10 min bis 6 h, bevorzugter 15 min bis 1 h mit der anorganischen Säure in Kontakt gebracht wird.

Durch die Wahl der Dauer des in Kontakt Bringens gemäß der Ausführungsform wird die Erzielung einer Oberflächenmodifikation durch das erfindungsgemäße Verfahren gewährleistet und auch bei der Verwendung starker anorganischer Säuren ein Abtrag durch Ätzung des Metalloxidsubstrates vermieden.

In einer besonders bevorzugten Ausführungsform des erfindungsgemäßen Verfahrens beträgt die Konzentration der organischen Säure im Lösungsmittel in Schritt (1) des Verfahrens von 0,3 bis 6,0 mol/l, bevorzugt 0,5 bis 3 mol/l, noch bevorzugter 1 bis 2,0 mol/l, die Konzentration der anorganischen Säure im Lösungsmittel in Schritt (2) des Verfahrens beträgt von 0,05 bis 3,0 mol/l, bevorzugt 0,1 bis 2 mol/l, noch bevorzugter 0,30 bis 1,0 mol/l,
das Metalloxidsubstrat wird in Schritt (1) 1 min bis 24 h, bevorzugt 10 min bis 6 h, bevorzugter 15 min bis 1 h mit der organischen Säure in Kontakt gebracht wird, bevor mit Schritt (2) fortgefahren wird, und das Metalloxidsubstrat wird in Schritt (2) 1 min bis 24 h, bevorzugt 10 min bis 6 h, bevorzugter 15 min bis 1h mit der anorganischen Säure in Kontakt gebracht.

Bevorzugt ist die organische Säure hierbei aus Oxalsäure und Zitronensäure, insbesondere Zitronensäure, und die anorganische Säure aus Phosphorsäure, Schwefelsäure und Borsäure, insbesondere Phosphorsäure, gewählt.

Ein weiterer Aspekt der Erfindung betrifft ein oberflächenmodifiziertes Metalloxidsubstrat, das durch das in dem zuvor beschriebenen erfindungsgemäßen Verfahren und seinen Ausführungsformen erhalten wird.

Hierbei handelt es sich bevorzugt um ein oberflächenmodifiziertes Metalloxidsubstratpulver, noch bevorzugter mit einer mittleren Teilchengröße d50 im Bereich von 10nm bis 100 µm.

Ebenfalls bevorzugt handelt es sich um ein durch Sintern erhaltenes Bauelement bestehend aus dem Metalloxidsubstrat, das als Ganzes dem erfindungsgemäßen Verfahren unterworfen wurde, bevorzugt um ein ein- oder mehrlagiges Bauteil bestehend aus Schichten, welche porös oder dicht sein können, und in der Batteriezelle als Separator oder Elektrode dient.

Wie oben definiert bezeichnet der Begriff porös offene Porosität, bei der das Material für Flüssigkeiten permeabel ist. Im Gegensatz dazu handelt es sich bei dichten Metalloxidsubstraten bzw. dichten Bauteilen um solche, die keine für Flüssigkeiten permeablen Poren oder sonstige Öffnungen aufweisen und folglich nicht permeabel sind.

Weiter bevorzugt handelt es sich bei dem oberflächenmodifizierten Metalloxidsubstrat um einen dünnen Separator mit einer Dicke von 10 bis 100 µm, bevorzugt 20 bis 60 µm, noch bevorzugter um einen solchen Separator auf Basis von c-LLZO, noch bevorzugter mit einer Dichte von > 90% der theoretischen Dichte, wobei die < 10% Restporosität aus geschlossenen Poren bestehen. Solche mittels des erfindungsgemäßen Verfahrens oberflächenmodifizierte Bauelemente weisen, wenn sie in Kombination mit einer Polymeren-Elektrode (z.B. basierend auf PVDF als Polymer, dem Leitsalz LiTFSI und einem Aktivmaterial, z.B. Lithiumeisenphosphat (LiFePO₄, LFP) eingesetzt werden, verbesserte Leitungs- und Stabilitätseigenschaften auf.

Ebenfalls bevorzugt ist eine poröse c-LLZO-Schicht mit 20 bis 300, bevorzugt 50 bis 220, noch bevorzugter 100 bis 180 140 Dicke, noch bevorzugter ist eine solche Schicht mit <70% theoretischer Dichte und >30% Porosität vorliegend als offene Poren. Nach Behandlung durch das erfindungsgemäße Verfahren weist ein solches Bauelementnach einer anschließenden Infiltration eines Polymers (z.B. PEO) mit einem Lösungsmittel (z.B. DMSO), einem Leitsalz (z.B. LiTFSI) und einem Aktivmaterial, z.B. Lithium-Kobalt-Oxid (LiCoO₂, LCO), verbesserte Leitungs- und Stabilitätseigenschaften gegenüber einem nicht erfindungsgemäßen analogen Bauelement auf.

Noch ein weiterer Aspekt der Erfindung betrifft die Verwendung des oberflächenmodifizierten Metalloxidsubstrates gemäß dem vorstehenden Aspekt der Erfindung zur Herstellung einer Batterie oder einer Batteriekomponente.

Oberflächenmodifizierte Metalloxidsubstrate, bei denen es sich um Pulver und Granulate handelt, werden als Komponente eines Bauteils einer Batterie (Elektrode oder Separator), bevorzugt als Füllstoff in einem Polymer-basierten Separator oder einer Polymer-basierten Elektrode (Anode oder Kathode) verwendet, um deren mechanische Stabilität und elektrochemische Leistungsfähigkeit zu erhöhen.

Zum anderen werden diese Formen von gemäß dem erfindungsgemäßen Verfahren oberflächenmodifizierten Metalloxidsubstraten verwendet, da sie gegenüber herkömmlichem Material, wie z.B. c-LLZO, erhöhte Lagerfähigkeit und Prozessierbarkeit der Li-lonen-leitfähigen Pulver aufweisen, und damit die Herstellung der Bauteile überhaupt erst zu ermöglichen (Prozessfenster) und/oder die Eigenschaften der gesinterten Bauteile positiv beeinflussen, z.B. indem sie diesen eine höhere Dichte, bessere Leitfähigkeit oder bessere mechanische Eigenschaften verleihen.

Bei Bauelementen, die zusammenhängend dem erfindungsgemäßen Verfahren unterzogen wurden, handelt es sich um gesinterte, keramische Bauteile einer Batterie, bevorzugt um ein- oder mehrlagige Schichten, welche porös oder dicht sein können und in der Batteriezelle als Separator oder Elektrode dienen. Diese werden nach der Anwendung des erfindungsgemäßen Verfahrens mit Polymeren oder flüssigen Komponenten vereint, um die Funktionsfähigkeit der Zelle überhaupt erst zu ermöglichen. Die Verwendung der nach dem erfindungsgemäßen Verfahren oberflächenmodifizierten Metalloxidsubstratbauteile verbessert hierbei die Leistung der finalen Bauteile.

Schließlich betrifft ein weiterer Aspekt der Erfindung eine Batterie oder Batteriekomponente, die das oberflächenmodifizierte Metalloxidsubstrat, das in dem zuvor beschriebenen erfindungsgemäßen Verfahren und seinen Ausführungsformen erhalten wird, umfasst.

Bei einer Batterie gemäß diesem Aspekt der Erfindung handelt es sich um eine elektrochemische Zelle, in der wenigstens eine der Komponenten Elektrode (Anode bzw. Kathode) und/oder Separator ein oberflächenmodifiziertes Metalloxidsubstrat gemäß der vorliegenden Erfindung enthält. Bevorzugt sind Zellen mit hybriden Elektrolyten, bei denen Pulver oder poröse oder dichte keramische Schichten, die nach dem erfindungsgemäßen Verfahren behandelt wurden, mit Polymeren oder flüssigen Elektrolytkomponenten verbunden werden, um den finalen Zellaufbau zu realisieren. Außerdem bevorzugt ist eine vollkeramische Zelle, bei deren Herstellung in wenigstens einem Prozessschritt ein nach dem erfindungsgemäßen Verfahren behandeltes Metalloxidsubstrat verwendet wird.

### Zusammenfassung der Ausführungsformen der Erfindung

Im Folgenden werden die Ausführungsformen der Erfindung zusammengefasst:
1. Verfahren zur Oberflächenmodifikation von Metalloxidsubstraten, dadurch gekennzeichnet, dass das Metalloxidsubstrat
   (1) zunächst in Anwesenheit von Li⁺-Ionen mit einer organischen Säure, bei der es sich um eine Carbonsäure oder eine vinyloge Carbonsäure handelt, in Kontakt gebracht wird, und anschließend
   (2) mit einer anorganischen Säure, bei der sich nicht um Fluorwasserstoff oder Flusssäure handelt, in Kontakt gebracht wird,
      und dass die Verfahrensschritte (1) und (2) in Anwesenheit eines Lösungsmittels durchgeführt werden.
2. Das Verfahren gemäß Ausführungsform 1, dadurch gekennzeichnet, dass die Menge des Lösungsmittels 1 Gewicht-% oder mehr, bevorzugter 2 Gewichts-% oder mehr, noch bevorzugter 5 Gewichts-% oder mehr, weiter bevorzugt 10 Gewichts-% oder mehr, noch weiter bevorzugt 20 Gewichts-% oder mehr, noch weiter bevorzugt 50 Gewichts-% oder mehr, noch weiter bevorzugt 100 Gewichts-% oder mehr, und am bevorzugtesten 200 Gewichts-% oder mehr bezogen auf das Gewicht des eingesetzten Metalloxidsubstrates beträgt.
3. Das Verfahren gemäß Ausführungsform 1 oder 2, dadurch gekennzeichnet, dass es sich bei dem Lösungsmittel um Wasser, Methanol, Ethanol, n-Propanol, Isopropanol oder ein Gemisch derselben handelt.
4. Das Verfahren gemäß einer beliebigen der Ausführungsformen 1 bis 3, dadurch gekennzeichnet, dass es sich bei dem Lösungsmittel um Ethanol oder ein Ethanol-haltiges Gemisch handelt, bevorzugt um Ethanol oder ein Ethanol-Wasser-Gemisch.
5. Das Verfahren gemäß einer beliebigen der Ausführungsformen 1 bis 4, dadurch gekennzeichnet, dass das Metalloxidsubstrat in Form von energietechnischen oder elektrochemischen Bauelementen, Pellets, Granulaten, oder als Pulver vorliegt, bevorzugt als Pulver mit einer mittleren Teilchengröße d50 von 100 µm oder weniger, gemessen mittels Laserdiffraktometrie (nach ISO-13320, Gerät: Horiba LA-950-V2, Software Version: 9.3).
6. Das Verfahren gemäß einer beliebigen der Ausführungsformen 1 bis 5, dadurch gekennzeichnet, dass es sich bei dem Metalloxidsubstrat um ein Li⁺-Ionen-haltiges Metalloxidsubstrat (Li⁺-haltiges Substrat) handelt.
7. Das Verfahren gemäß der vorhergehenden Ausführungsform 6, dadurch gekennzeichnet, dass die Anwesenheit von Li⁺-Ionen durch vorherige Alterung des verwendeten Li⁺⁻Ionen-haltigen Metalloxidsubstrates erzielt wird.
8. Das Verfahren gemäß einer beliebigen der Ausführungsformen 1 bis 5, dadurch gekennzeichnet, dass es sich bei dem Metalloxidsubstrat um ein nicht-Li⁺-Ionen-haltiges Metalloxidsubstrat handelt (nicht-Li⁺-haltiges Substrat).
9. Das Verfahren gemäß einer beliebigen der Ausführungsformen 1 bis 8, dadurch gekennzeichnet, dass die Anwesenheit von Li⁺-Ionen durch die Zugabe eines Li⁺-Ionen-haltigen Salzes vor oder während des in Kontakt Bringens mit der organischen Säure in Schritt (1) erzielt oder vergrößert wird.
10. Verfahren gemäß der vorhergehenden Ausführungsform 9, dadurch gekennzeichnet, dass es sich bei dem zugegebenen Li⁺-Ionen-haltigen Salz um Lithiumhydroxid, Lithiumchlorid, oder Lithiumcarbonat, bevorzugt um Lithiumcarbonat, handelt.
11. Das Verfahren gemäß einer beliebigen der Ausführungsformen 1 bis 7, 9 und 10, dadurch gekennzeichnet, dass es sich bei dem Metalloxidsubstrat um ein Li⁺-Ionen-haltiges Metalloxidsubstrat (Li⁺-haltiges Substrat) handelt, das aus der Gruppe ausgewählt ist, die aus c-LLZO, t-LLZO, LLTO, LTO, LATP und dotiertem c-LLZO, LLTO, LTO und LATP besteht.
12. Das Verfahren gemäß der vorherigen Ausführungsform 11, dadurch gekennzeichnet, dass es sich bei dem Li⁺-Ionen-haltigen Metalloxidsubstrat um c-LLZO oder dotiertes c-LLZO handelt, bevorzugt um Al-, Ta- oder Ga-dotiertes c-LLZO.
13. Das Verfahren gemäß einer beliebigen der Ausführungsformen 1 bis 5 und 8 bis 10, dadurch gekennzeichnet, dass es sich bei dem Metalloxidsubstrat um ein nicht-Li⁺-Ionen-haltiges Metalloxidsubstrat handelt, dass aus der Gruppe ausgewählt ist, die aus Al₂O₃, TiO₂, ZrO₂, MgO, und SiO₂ besteht.
14. Das Verfahren gemäß der vorherigen Ausführungsform 13, dadurch gekennzeichnet, dass es sich bei dem nicht-Li⁺-Ionen-haltigen Metalloxidsubstrat um Al₂O₃ handelt.
15. Das Verfahren gemäß einem beliebigen der Ausführungsformen 1 bis 14, dadurch gekennzeichnet, dass es sich bei dem Metalloxidsubstrat um ein Pulver mit einer mittleren Teilchengröße d50 der Teilchen des Metalloxidsubstrates im Bereich von 10 nm bis 100 µm, bevorzugt im Bereich von 100 nm bis 10 µm, und bevorzugter im Bereich von 500 nm bis 2 µm handelt, gemessen mittels Laserdiffraktometrie.
16. Das Verfahren gemäß einer beliebigen der Ausführungsformen 1 bis 14, dadurch gekennzeichnet, dass es sich bei dem Metalloxidsubstrat um ein poröses Material für Bauelemente oder Filtermembranen handelt, wobei die mittlerer Porengröße des Metalloxidsubstrats 10 nm bis 100 µm, bevorzugt im Bereich von 100 nm bis 10 µm, und ideal im Bereich von 500 nm bis 5 µm liegt, wobei die Bestimmung der Porengröße durch Quecksilberporosimetrie erfolgt.
17. Das Verfahren gemäß einer beliebigen der Ausführungsformen 1 bis 15, dadurch gekennzeichnet, dass das Metalloxidsubstrat durch Aufmahlen für die Oberflächenmodifikation in den Verfahrensschritten (1) and (2) vorbereitet wird, und ein Li⁺-Ionen-haltiges Salzes vor oder während des in Kontakt Bringens des Metalloxidsubstrates mit der organischen Säure in Schritt (1) zugegeben wird.
18. Das Verfahren gemäß einer beliebigen der Ausführungsformen 1 bis 17, dadurch gekennzeichnet, dass die organische Säure 1 bis 20 Kohlenstoffatome enthält, bevorzugt 2 bis 12 Kohlenstoffatome, noch bevorzugter 3 bis 10 Kohlenstoffatome.
19. Das Verfahren gemäß einer beliebigen der Ausführungsformen 1 bis 18, dadurch gekennzeichnet, dass die organische Säure 1 bis 6 Carboxylgruppen enthält, bevorzugt 2 bis 5 Carboxylgruppen, noch bevorzugter 2, 3 oder 4 Carboxylgruppen.
20. Das Verfahren gemäß einer beliebigen der Ausführungsformen 1 bis 19, dadurch gekennzeichnet, dass die organische Säure einen pKs-Wert im Bereich größer 2,5 aufweist, bevorzugt einen pKs-Wert im Bereich von 3,0 bis 5,0.
21. Das Verfahren gemäß einer beliebigen der Ausführungsformen 1 bis 20, dadurch gekennzeichnet, dass die organische Säure aus der Gruppe ausgewählt ist, die aus Zitronensäure, Essigsäure, Propionsäure, Malonsäure, Oxalsäure, Fumarsäure, Benzoesäure, Bernsteinsäure, Maleinsäure, Salicylsäure, Glycolsäure, Hydroxypropionsäure, Äpfelsäure, Weinsäure, Valeriansäure, Pivalinsäure, Ascorbinsäure, Phthalsäure, Isophthalsäure, Terephthalsäure, Phenylessigsäure, o-Toluylsäure, m-Toluylsäure, p-Toluylsäure, Mandelsäure, Suberinsäure, Octansäure, Zimtsäure, Dihydroxyweinsäure, cis-Aconitsäure, Oxalessigsäure, Oxoglutarsäure, Brenztraubensäure, Gentisinsäure, Methylmalonsäure, Mesaconsäure, Glyoxylsäure, Isozitronensäure, Glycerinsäure, Ameisensäure, Milchsäure, besonders bevorzugt Zitronensäure.
22. Das Verfahren gemäß einer beliebigen der Ausführungsformen 1 bis 21, dadurch gekennzeichnet, dass die organische Säure eine Monocarbonsäure ist, bevorzugt ausgewählt aus der Gruppe, die aus C2-C10-Alkancarbonsäuren, C3-C10-Alkencarbonsäuren, Benzoe- und Toluylcarbonsäuren, C2-C10-Hydroxycarbonsäuren und C3-C10-Oxocarbonsäuren besteht.
23. Das Verfahren gemäß einer beliebigen der Ausführungsformen 1 bis 21, dadurch gekennzeichnet, dass die organische Säure eine Dicarbonsäure ist, bevorzugt ausgewählt aus der Gruppe, die aus C2-C10-Alkandicarbonsäuren, C4-C10-Alkendicarbonsäuren, Phthalsäuren, C3-C10-Hydroxydicarbonsäuren, C4-C10-Oxodicarbonsäure besteht.
24. Das Verfahren gemäß einer beliebigen der Ausführungsformen 1 bis 21, dadurch gekennzeichnet, dass die organische Säure drei oder mehr Carboxylgruppen enthält, bevorzugt ausgewählt aus der Gruppe, die aus C3-C10-Alkantricarbonsäuren, C4-C10-Alkentricarbonsäuren, Benzoltricarbonsäuren, C3-C10-Hydroxytricarbonsäuren, insbesondere Zitronensäure und Isozitronensäure, und C4-C10-Oxotricarbonsäuren sowie Benzoltetracarbonsäuren besteht.
25. Das Verfahren gemäß einer beliebigen der Ausführungsformen 1 bis 24, dadurch gekennzeichnet, dass die organische Säure mindestens ein Heteroatom ausgewählt aus O, N, S und P enthält, bevorzugt mindestens ein O- Atom oder mindestens ein N-Atom.
26. Das Verfahren gemäß einer beliebigen der Ausführungsformen 1 bis 25, dadurch gekennzeichnet, dass die organische Säure ein Chelatbildner ist, bevorzugt eine Verbindung ausgewählt aus der Gruppe bestehend aus Iminodiessigsäure, Nitrilotriessigsäure, Ethylendiamintriessigsäure, Ethylendiamintetraessigsäure, Diethylentriaminpenta-essigsäure, Triethylentetraminhexaessigsäure, 1,4,7,10-Tetraazacyclododecan-1,4,7,10-tetraessigsäure, Oxalsäure, Weinsäure, Zitronensäure und Dimercaptobernsteinsäure.
27. Das Verfahren gemäß einer beliebigen der Ausführungsformen 1 bis 26, dadurch gekennzeichnet, dass die organische Säure in einem Gewichtsverhältnis der organischen Säure zum Metalloxidsubstrat im Bereich von 0,05 : 1 bis 100 : 1, bevorzugt im Bereich von 0,1 : 1 bis 40 : 1, bevorzugter im Bereich von 0,2 : 1 bis 10 : 1, noch bevorzugter im Bereich von 0,4 : 1 bis 5 : 1, und am bevorzugtesten im Bereich von 0,6 : 1 bis 3 : 1 zugegeben wird.
28. Das Verfahren gemäß einer beliebigen der Ausführungsformen 1 bis 27, dadurch gekennzeichnet, dass die anorganische Säure aus der Gruppe ausgewählt ist, die aus Phosphorsäure H₃PO₄, Salpetersäure HNO₃, Schwefelsäure H₂SO₄, Chlorwasserstoffsäure HCl, Perchlorsäure HClO₄, schwefliger Säure H₂SO₃, salpetriger Säure HNO₂, und Borsäure H₃BO₃ besteht.
29. Das Verfahren gemäß der vorherigen Ausführungsform 28, dadurch gekennzeichnet, dass die anorganische Säure Phosphorsäure H₃PO₄ umfasst.
30. Das Verfahren gemäß einer beliebigen der Ausführungsformen 1 bis 29, dadurch gekennzeichnet, dass die anorganische Säure in einem Stoffmengen-Verhältnis (mol/mol) zur organischen Säure im Bereich von 0.2 : 1 bis 30 : 1, bevorzugt von 0,5 : 1 bis 20 : 1, bevorzugter im Verhältnis von 1 : 1 bis 10 : 1, am bevorzugtesten im Verhältnis von 1,5 : 1 bis 5 : 1 zugegeben wird.
31. Das Verfahren gemäß einer beliebigen der Ausführungsformen 1 bis 30, dadurch gekennzeichnet, dass vor oder während des ersten Schrittes 0,05 bis 20 Gewichts-%, bevorzugt 0,1 bis 12 Gewichts-%, bevorzugter 0,2 bis 8 Gewichts-% und noch bevorzugter 0,3 bis 5 Gewichts-% eines Li⁺-Salzes bezogen auf das Gewicht des Metalloxidsubstrates zu dem Metalloxidsubstrat zugegeben werden, wobei es sich bei dem Li⁺-Salz bevorzugt um Li₂CO₃ handelt.
32. Das Verfahren gemäß einer beliebigen der Ausführungsformen 1 bis 15 und 17 bis 31, dadurch gekennzeichnet, dass das Metalloxidsubstrat vor oder während den Verfahrensschritten (1) und (2) in einer Aufschlämmung einer Deagglomeration unterzogen wird.
33. Das Verfahren gemäß einer beliebigen der Ausführungsformen 1 bis 32, dadurch gekennzeichnet, dass das nach den Verfahrensschritten (1) und (2) erhaltene oberflächenmodifizierte Metalloxidsubstrat anschließend in einem weiteren Schritt (3) optional mit Wasser, Methanol, oder Ethanol, bevorzugt mehrere Male, gewaschen, dann optional abfiltriert, und getrocknet wird, wobei die Trocknungstemperatur bevorzugt 350 °C nicht übersteigt.
34. Das Verfahren gemäß einer beliebigen der Ausführungsformen 1 bis 33, dadurch gekennzeichnet, dass in Schritt (1) vor oder während der Zugabe der organischen Säure bei einer Temperatur von 0 °C bis 80 °C während 1 Minute bis 48 Stunden, bevorzugt 10 min bis 24 h, bevorzugter 15 min bis 3 h gerührt und/oder deagglomeriert wird.
35. Das Verfahren gemäß einer beliebigen der Ausführungsformen 1 bis 34, dadurch gekennzeichnet, dass das Verfahren im Bereich von -70 °C bis 300 °C durchgeführt, bevorzugter im Bereich von -20 °C bis 200 °C, noch bevorzugter im Bereich von 0 °C bis 120 °C, noch bevorzugter im Bereich von10 °C bis 100 °C, weiter bevorzugt im Bereich von 20 °C bis 90 °C, noch weiter bevorzugt im Bereich von 30 °C bis 80 °C, und am bevorzugtesten im Bereich von 45 °C bis 70 °C durchgeführt wird.
36. Das Verfahren gemäß einer beliebigen der Ausführungsformen 1 bis 35, dadurch gekennzeichnet, dass das Metalloxidsubstrat vor Schritt (1) des Verfahrens durch die Zugabe eines Li⁺-Salzes und wahlweise nachfolgende mechanische Bearbeitung vorbereitet wird, wobei die Temperatur bei und nach der Zugabe des Li⁺-Salzes 300 °C, bevorzugt 200 °C, noch bevorzugter 150 °C nicht übersteigt.
37. Das Verfahren gemäß einer beliebigen der Ausführungsformen 1 bis 5, 8 bis 10, oder 13 bis 36 handelt, dadurch gekennzeichnet, dass es sich bei dem Metalloxidsubstrat um ein nicht-Li⁺-Ionen-haltiges Metalloxidsubstrat ausgewählt aus Al₂O₃, TiO₂, ZrO₂, MgO, und SiO₂, bevorzugt Al₂O₃, handelt,
   dass es sich bei der organischen Säure in Verfahrensschritt (1) um eine organische Säure mit einem pKs-Wert im Bereich größer 2,5, bevorzugt mit einem pKs-Wert im Bereich von 3,0 bis 5,0 handelt,
   dass es sich bei der anorganischen Säure in Verfahrensschritt (2) um eine anorganische Säure aus der Gruppe, die aus Phosphorsäure H₃PO₄, Salpetersäure HNO₃, Schwefelsäure H₂SO₄, Chlorwasserstoffsäure HCl, Perchlorsäure HClO₄, schwefliger Säure H₂SO₃, salpetriger Säure HNO₂, und Borsäure H₃BO₃ besteht, bevorzugt H₃PO₄, handelt,
   dass es sich bei dem Lösungsmittel in beiden Verfahrensschritten (1) und (2) um Wasser, Methanol, Ethanol, n-Propanol, Isopropanol oder ein Gemisch derselben handelt, und dass die Anwesenheit von Li⁺-Ionen durch die Zugabe eines Li⁺-Ionen-haltigen Salzes vor oder während des in Kontakt Bringens mit der organischen Säure in Schritt (1) erzielt wird, bei dem es sich um Lithiumhydroxid, Lithiumchlorid, Lithiumoxid Li₂O oder Lithiumcarbonat, bevorzugt um Lithiumcarbonat, handelt.
38. Das Verfahren gemäß einer beliebigen der Ausführungsformen 1 bis 5, 8 bis 10, oder 13 bis 37, dadurch gekennzeichnet, dass es sich bei dem Metalloxidsubstrat um ein nicht-Li⁺-Ionen-haltiges Metalloxidsubstrat gewählt aus Al₂O₃, TiO₂ oder ZrO₂, bevorzugt Al₂O₃, handelt,
   dass es sich bei der organischen Säure in Verfahrensschritt (1) um eine organische Säure ausgewählt aus der Gruppe bestehend aus Zitronensäure, Essigsäure, Propionsäure, Malonsäure, Oxalsäure, Fumarsäure, Benzoesäure, Bernsteinsäure, Maleinsäure, Salicylsäure, Glycolsäure, Hydroxypropionsäure, Äpfelsäure, Weinsäure, Valeriansäure, Pivalinsäure, Ascorbinsäure, Phthalsäure, Isophthalsäure, Terephthalsäure, Phenylessigsäure, o-Toluylsäure, m-Toluylsäure, p-Toluylsäure, Mandelsäure, Suberinsäure, Octansäure, Zimtsäure, Dihydroxyweinsäure, cis-Aconitsäure, Oxalessigsäure, Oxoglutarsäure, Brenztraubensäure, Gentisinsäure, Methylmalonsäure, Mesaconsäure, Glyoxylsäure, Isozitronensäure, Glycerinsäure, Ameisensäure, Milchsäure, Iminodiessigsäure, Nitrilotriessigsäure, Ethylendiamintriessigsäure, Ethylendiamintetraessigsäure, Diethylentriaminpenta-essigsäure, Triethylentetraminhexaessigsäure, 1,4,7,10- Tetraazacyclododecan-1,4,7,10-tetraessigsäure, Oxalsäure, Weinsäure, Zitronensäure und Dimercaptobernsteinsäure, bevorzugt Zitronensäure oder Oxalsäure, handelt,
   dass es sich bei der anorganischen Säure in Verfahrensschritt (2) um Phosphorsäure H₃PO₄ handelt, dass es sich bei dem Lösungsmittel in beiden Verfahrensschritten (1) und (2) um Wasser, Methanol, Ethanol, n-Propanol, Isopropanol oder ein Gemisch derselben handelt, und dass die Anwesenheit von Li⁺-Ionen durch die Zugabe eines Li⁺-Ionen-haltigen Salzes vor oder während des in Kontakt Bringens mit der organischen Säure in Schritt (1) erzielt wird, bei dem es sich um Lithiumhydroxid, Lithiumchlorid, Lithiumoxid Li₂O, oder Lithiumcarbonat, bevorzugt um Lithiumcarbonat, handelt.
39. Das Verfahren gemäß einer beliebigen der Ausführungsformen 1 bis 7, 9 bis 12, 15 bis 36, dadurch gekennzeichnet, dass es sich bei dem Metalloxidsubstrat um ein Li⁺-Ionen-haltiges Metalloxidsubstrat (Li⁺-haltiges Substrat) handelt, das aus der Gruppe ausgewählt ist, die aus c-LLZO, t-LLZO, LLTO, LTO, LATP und dotiertem c-LLZO, LLTO, LTO und LATP besteht,
   dass es sich bei der organischen Säure in Verfahrensschritt (1) um eine organische Säure mit einem pKs-Wert im Bereich größer 2,5, bevorzugt mit einem pKs-Wert im Bereich von 3,0 bis 5,0 handelt,
   dass es sich bei der anorganischen Säure in Verfahrensschritt (2) um eine anorganische Säure aus der Gruppe, die aus Phosphorsäure H₃PO₄, Salpetersäure HNO₃, Schwefelsäure H₂SO₄, Chlorwasserstoffsäure HCl, Perchlorsäure HClO₄, schwefliger Säure H₂SO₃, salpetriger Säure HNO₂, und Borsäure H₃BO₃ besteht, bevorzugt H₃PO₄, handelt,
   dass es sich bei dem Lösungsmittel in beiden Verfahrensschritten (1) und (2) um Wasser, Methanol, Ethanol, n-Propanol, Isopropanol oder ein Gemisch derselben handelt, und dass optional die Anwesenheit von Li⁺-Ionen durch die Zugabe eines Li⁺-Ionen-haltigen Salzes vor oder während des in Kontakt Bringens mit der organischen Säure in Schritt (1) vergrößert wird, bei dem es sich um Lithiumhydroxid, Lithiumchlorid, Lithiumoxid Li₂O oder Lithiumcarbonat, bevorzugt um Lithiumcarbonat, handelt.
40. Das Verfahren gemäß einer beliebigen der Ausführungsformen 1 bis 7, 9 bis 12, 15 bis 36 oder 39, dadurch gekennzeichnet, dass es sich bei dem Metalloxidsubstrat um ein Li⁺-Ionen-haltiges Metalloxidsubstrat (Li⁺-haltiges Substrat) handelt, bei dem es sich um c-LLZO oder dotiertes c-LLZO handelt, bevorzugt um Al-, Ta- oder Ga-dotiertes c-LLZO,
   dass es sich bei der organischen Säure in Verfahrensschritt (1) um eine organische Säure ausgewählt aus der Gruppe bestehend aus Zitronensäure, Essigsäure, Propionsäure, Malonsäure, Oxalsäure, Fumarsäure, Benzoesäure, Bernsteinsäure, Maleinsäure, Salicylsäure, Glycolsäure, Hydroxypropionsäure, Äpfelsäure, Weinsäure, Valeriansäure, Pivalinsäure, Ascorbinsäure, Phthalsäure, Isophthalsäure, Terephthalsäure, Phenylessigsäure, o-Toluylsäure, m-Toluylsäure, p-Toluylsäure, Mandelsäure, Suberinsäure, Octansäure, Zimtsäure, Dihydroxyweinsäure, cis-Aconitsäure, Oxalessigsäure, Oxoglutarsäure, Brenztraubensäure, Gentisinsäure, Methylmalonsäure, Mesaconsäure, Glyoxylsäure, Isozitronensäure, Glycerinsäure, Ameisensäure, Milchsäure, Iminodiessigsäure, Nitrilotriessigsäure, Ethylendiamintriessigsäure, Ethylendiamintetraessigsäure, Diethylentriaminpenta-essigsäure, Triethylentetraminhexaessigsäure, 1,4,7,10-Tetraazacyclododecan-1,4,7,10-tetraessigsäure, Oxalsäure, Weinsäure, Zitronensäure und Dimercaptobernsteinsäure, bevorzugt Zitronensäure oder Oxalsäure, handelt,
   dass es sich bei der anorganischen Säure in Verfahrensschritt (2) um Phosphorsäure H₃PO₄ handelt,
   dass es sich bei dem Lösungsmittel in beiden Verfahrensschritten (1) und (2) um Wasser, Methanol, Ethanol, n-Propanol, Isopropanol oder ein Gemisch derselben handelt, und dass optional die Anwesenheit von Li⁺-Ionen durch die Zugabe eines Li⁺-Ionen-haltigen Salzes vor oder während des in Kontakt Bringens mit der organischen Säure in Schritt (1) verbessert wird, bei dem es sich um Lithiumhydroxid, Lithiumchlorid, Lithiumoxid Li₂O oder Lithiumcarbonat, bevorzugt um Lithiumcarbonat, handelt.
41. Das Verfahren gemäß einer beliebigen der Ausführungsformen 1 bis 40, dadurch gekennzeichnet,
   dass es sich bei dem Metalloxidsubstrat um gealtertes LLZO, nicht gealtertes LLZO oder Al₂O₃ handelt,
   dass es sich bei dem in Schritt (1) und Schritt (2) verwendeten Lösungsmittel um eines ausgewählt aus EtOH, Isopropanol, Wasser, Ethylenglycol, THF oder einem Gemisch derselben, bevorzugt ein EtOh oder ein Wasser/EtOH-Gemisch, handelt,
   dass es sich bei dem wahlweise zugegebenen Li⁺-Ionen-haltigen Salz um Li₂O, Li₂CO₃ oder LiOH handelt,
   dass es sich bei der organischen Säure um eine ausgewählt aus Zitronensäure, Ethylendiamintetraessigsäure (EDTA), Milchsäure, Weinsäure, Ameisensäure, Essigsäure, Propionsäure, Buttersäure, Oxalsäure, Malonsäure, Bernsteinsäure oder Glutarsäure handelt, und dass es sich bei der anorganischen Säure um Phosphorsäure, Schwefelsäure oder Borsäure handelt.
42. Das Verfahren gemäß einer beliebigen der Ausführungsformen 1 bis 41, dadurch gekennzeichnet, dass es sich bei dem in Schritt (1) und Schritt (2) verwendeten Lösungsmittel um EtOH oder ein Gemisch von Wasser und EtOH handelt, dass es sich bei der organischen Säure um Zitronensäure oder Oxalsäure handelt, und dass es sich bei der anorganischen Säure um Phosphorsäure handelt.
43. Das Verfahren gemäß einer beliebigen der Ausführungsformen 1 bis 7, 9 bis 12, 15 bis 36 oder 39 bis 42, dadurch gekennzeichnet, dass es sich bei dem Metalloxidsubstrat um gealtertes LLZO handelt, dass als Lösungsmittel in den Verfahrensschritten (1) und (2) EtOH, Isopropanol, Wasser, Ethylenglycol, THF oder ein Gemisch derselben, bevorzugt EtOH oder ein Wasser/EtOH-Gemisch, verwendet wird, und dass bevorzugt kein zusätzliches Li⁺-Ionen-haltiges Salz zugegeben wird.
44. Das Verfahren gemäß einer beliebigen der Ausführungsformen 1 bis 7, 9 bis 12, 15 bis 36 oder 39 bis 42, dadurch gekennzeichnet, dass es sich bei dem Metalloxidsubstrat um nicht gealtertes LLZO handelt, dass als Lösungsmittel in den Verfahrensschritten (1) und (2) EtOH, Isopropanol, Wasser, Ethylenglycol, THF oder einem Gemisch derselben, bevorzugt EtOH oder ein Wasser/EtOH-Gemisch, verwendet wird, und dass entweder kein zusätzliches Li⁺-Ionen-haltiges Salz eines gewählt aus Li₂O, LiCI, Li₂CO₃ oder LiOH zugegeben wird, bevorzugt Li₂CO₃.
45. Das Verfahren gemäß einer der Ausführungsformen 1 bis 5, 8 bis 10, 13 bis 38, 41 oder 42, dadurch gekennzeichnet, dass es sich bei dem Metalloxidsubstrat um Al₂O₃ handelt, dass als Lösungsmittel in den Verfahrensschritten (1) und (2) EtOH, Isopropanol, Wasser, Ethylenglycol, THF oder einem Gemisch derselben, bevorzugt EtOH oder ein Wasser/EtOH-Gemisch, verwendet wird, und dass als Li⁺-Ionen-haltiges Salz eines gewählt aus Li₂O, LiCI, Li₂CO₃ oder LiOH zugegeben wird.
46. Das Verfahren gemäß einer beliebigen der Ausführungsformen 1 bis 45, dadurch gekennzeichnet, dass die Konzentration der organischen Säure im Lösungsmittel in Schritt (1) des Verfahrens von 0,3 bis 6,0 mol/l, bevorzugt 0,5 bis 3 mol/l, noch bevorzugter 1,0 bis 2,0 mol/l beträgt.
47. Das Verfahren gemäß einer beliebigen der Ausführungsformen 1 bis 46, dadurch gekennzeichnet, dass die Konzentration der anorganischen Säure im Lösungsmittel in Schritt (2) des Verfahrens von 0,05 bis 3,0 mol/l, bevorzugt 0,1 bis 2 mol/l, noch bevorzugter 0,30 bis 1,0 mol/l beträgt.
48. Das Verfahren gemäß einer beliebigen der Ausführungsformen 1 bis 47, dadurch gekennzeichnet, dass das Metalloxidsubstrat in Schritt (1) 1 min bis 24 h, bevorzugt 10 min bis 6 h, bevorzugter 15 min bis 1 h mit der organischen Säure in Kontakt gebracht wird, bevor mit Schritt (2) fortgefahren wird.
49. Das Verfahren gemäß einer beliebigen der Ausführungsformen 1 bis 48, dadurch gekennzeichnet, dass das Metalloxidsubstrat in Schritt (2) 1 min bis 24 h, bevorzugt 10 min bis 6 h, bevorzugter 15 min bis 1h mit der anorganischen Säure in Kontakt gebracht wird.
50. Ein oberflächenmodifiziertes Metalloxidsubstrat, das durch das in den Ausführungsformen 1 bis 49 beschriebene Verfahren erhalten wird.
51. Die Verwendung des oberflächenmodifizierten Metalloxidsubstrates gemäß der vorhergehenden Ausführungsform 50 zur Herstellung einer Batterie oder einer Batteriekomponente.
52. Eine Batterie oder Batteriekomponente, die das oberflächenmodifizierte Metalloxidsubstrat gemäß der Ausführungsform 50 umfasst.

### Beispiele

Bei dem in den nachfolgenden Beispielen verwendeten Li⁺-haltigen Metalloxidsubstrat handelt es sich um ein kubisches dotiertes LLZO-Substrat mit der stöchiometrischen Formel Li_{6,45}Al_{0,05}La₃Zr_{1,6}Ta_{0,4}O₁₂.

Das Material wurde nach der Vorschrift "Preparation of LLZ:Ta discs" im Abschnitt "Experimental methods" in der linken Spalte auf Seite 283 der Veröffentlichung "A garnet structure-based all-solid-state Li battery without interface modification: resolving incompatibility issues on positive electrodes" von Tsai et al. in Sustainable Energy Fuels, 2019, 3, S. 280-291, hergestellt, wobei die in den Beispielen eingesetzten Pulver durch Mahlen der nach der Vorschrift hergestellten Scheiben mit einem elektrischen Mörser erhalten wurden. Da es sich um ein Ta-dotiertes kubisches LLZO-Substrat handelt, wird neben der Bezeichnung "c-LLZO" nachfolgend auch der Begriff "c-LLZTO" verwendet.

Die mittleren Teilchengrößen d10, d50, und d90 wurden mittels Laserdiffraktometrie nach ISO-13320 mit dem Gerät Horiba LA-950-V2 und der zugehörigen Software Version 9.3 bestimmt.

Bei dem in den nachfolgenden Beispielen verwendeten nicht-Li⁺-haltigen Metalloxidsubstrat handelt es sich um käuflich erworbenes Al₂O₃-Pulver.

### Beispiel 1: Herstellung von oberflächenmodifizierten Li⁺-haltigen keramischen Füllstoffen

Oberflächenmodifizierte c-LLZO-Teilchen, die eine Li⁺- und Phosphat-Ionen-enthaltende Oberflächenmodifikation umfassen (LPO-c-LLZO), oder die eine Li⁺- und Sulfat-Ionen-enthaltende Oberflächenmodifikation, oder eine Li⁺- und Borat-Ionen-enthaltende Oberflächenmodifikation umfassen:

### Beispiel 1a) (Phosphorsäure als anorganische Säure, LPO-c-LLZO):

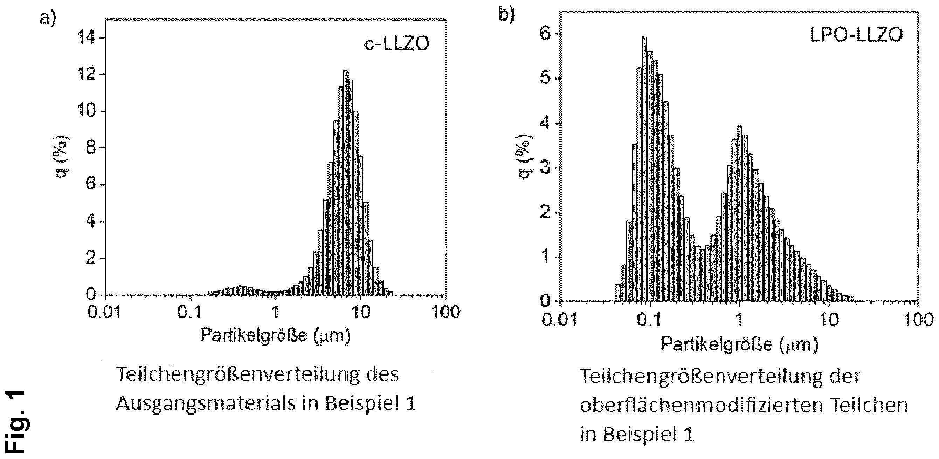

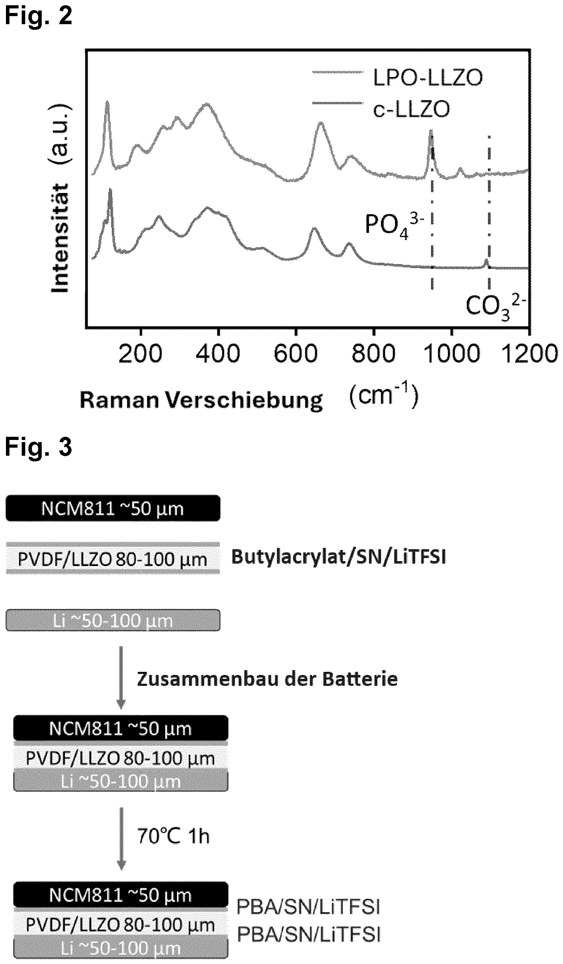

In einem ersten Schritt wurde c-LLZO (Teilchengrößenverteilung: s. Fig. 1a); d50: 2,968 µm), welches im Anschluss an die Herstellung und das Mahlen zu Pulver 5 h an der Umgebungsluft gelagert wurde und an der Oberfläche Li₂CO₃ aufwies (Nachweis mittels Raman-Spektroskopie: s. Fig. 2, unterer Graph) mittels eines Nassmahlschrittes weiter zerkleinert, indem 10 g des c-LLZO mit 50 g Ethanol und 120 g ZrO₂-Mahlkugeln mit einem Durchmesser von 3 mm vermischt wurden, und das Gemisch anschließend in einer Hochleistungsmühle (Emax, Hersteller: Retsch GmbH) für 3 mal 10 min mit je 5 min Pause bei 500 Umdrehungen pro Minute gemahlen wurde. Die Mahlkugeln wurden anschließend abgesiebt. Die Mischung wurde dann mit Ethanol aufgefüllt, bis ein Verhältnis von 1g c-LLZO auf 5 mL Ethanol vorlag.

Anschließend wurden 1,2 g Zitronensäure in 5 ml Ethanol bei 50 °C aufgelöst. Es wurden 0,01 g Li₂CO₃ unter Rühren in die Lösung gegeben, und das Rühren fortgesetzt, bis sich das gesamte Pulver aufgelöst hatte. Anschließend wurde 1 g c-LLZO in 5 mL Ethanol aus Schritt 1 unter kräftigem Rühren für 30 Minuten in die Mischung gegeben, und 0,228 g wässrige Phosphorsäure (~85 Gew.-%, Sigma-Aldrich) wurde in die Lösung gegeben, und es wurde 6 Stunden lang mit einem Magnetrührer gerührt. Schließlich wurden die mit einer Li⁺-und Phosphat-Ionen enthaltenden Oberflächenmodifikation versehenen c-LLZO-Teilchen durch Zentrifugieren, Waschen mit Ethanol und Trocknen im Vakuumofen bei 80 °C und einem Luftdruck von 0.01 hPa über Nacht gewonnen. Nach der Behandlung war kein Li₂CO₃ mehr auf der Oberfläche nachweisbar, dafür ein Peak, der PO₄³⁻ Bindungen zugeordnet werden kann (s. Fig. 2 oberer Graph). Die so erhaltenen oberflächenmodifizierten Teilchen wiesen einen d50-Wert von 0,276 µm auf.

### Beispiel 1b) (Schwefelsäure als anorganische Säure):

Wie in Beispiel 1a) beschrieben wurde in einem ersten Schritt c-LLZO (Teilchengrößenverteilung: s. Fig. 1a); d50: 2,968 µm), welches im Anschluss an die Herstellung und das Mahlen zu Pulver 5 h an der Umgebungsluft gelagert wurde und an der Oberfläche Li₂CO₃ aufwies (Nachweis mittels Raman-Spektroskopie: s. Fig. 2, unterer Graph) mittels eines Nassmahlschrittes weiter zerkleinert, indem 10 g des c-LLZO mit 50 g Ethanol und 120 g ZrO₂-Mahlkugeln mit einem Durchmesser von 3 mm vermischt wurden, und das Gemisch anschließend in einer Hochleistungsmühle (Emax, Hersteller: Retsch GmbH) für 3 mal 10 min mit je 5 min Pause bei 500 Umdrehungen pro Minute gemahlen wurde. Die Mahlkugeln wurden anschließend abgesiebt. Die Mischung wurde dann mit Ethanol aufgefüllt, bis ein Verhältnis von 1g c-LLZO auf 5 mL Ethanol vorlag.

Anschließend wurden 1,14 g Zitronensäure in 4 ml Ethanol aufgelöst und auf 50 °C erwärmt. Anschließend wurde 1 g des gealterten c-LLZO in 5 mL Ethanol aus Schritt 1 in die Mischung gegeben und anschließend für 30 min kräftig gerührt. Als nächstes wurde 1 mL einer wässrigen Schwefelsäurelösung mit einer Konzentration von 3 mol/L zu der Mischung gegeben und 2 h kräftig gerührt. Schließlich wurden die mit einer Oberflächenmodifikation versehenen c-LLZO-Teilchen mit einer Lösung von Li₂CO₃ in Ethanol mit einer Konzentration von 0,05 mol/L gewaschen, um die Säure vollständig zu entfernen, bei hoher Geschwindigkeit zentrifugiert, und über Nacht bei 70 °C in einem Vakuumofen getrocknet, um Säure-behandelte Teilchen zu erhalten.

### Beispiel 1c) (Borsäure als anorganische Säure):

Wie in den Beispielen 1a) und 1b) beschrieben wurde eine Mischung von gealtertem c-LLZO in Ethanol hergestellt, bei der ein Verhältnis von 1g c-LLZO auf 5 mL Ethanol vorlag.

Anschließend wurden 1,14 g Zitronensäure in 4 ml Ethanol aufgelöst und auf 50 °C erwärmt. Anschließend wurde 1 g des gealterten c-LLZO in 5 mL Ethanol aus Schritt 1 in die Mischung gegeben und anschließend für 30 min kräftig gerührt. Als nächstes wurden 0,185 g H₃BO₃ zu der Mischung gegeben und 6 h kräftig gerührt. Schließlich wurde die Mischung dreimal mit reinem Ethanol gewaschen und dreimal mit einer Lösung von Li2CO3 in Ethanol mit einer Konzentration von 0,05 mol/L gewaschen, um die Säure vollständig zu entfernen bei hoher Geschwindigkeit zentrifugiert, und über Nacht bei 70 °C in einem Vakuumofen getrocknet, um Säure-behandelte Teilchen zu erhalten.

### Beispiel 2: Herstellung eines nicht-Li⁺-haltigen keramischen Füllstoffes

Oberflächenmodifizierte Al₂O₃-Teilchen, die eine Li⁺- und Phosphat-Ionen-enthaltende Oberflächenmodifikation umfassen (LPO-Al₂O₃):
1,2 g Zitronensäure wurden in 5 ml H₂O bei 50 °C aufgelöst. Anschließend wurden 0,1 g Li₂CO₃ unter Rühren in die Lösung gegeben, bis sich das gesamte Pulver aufgelöst hatte. Anschließend wurde 1 g Al₂O₃ ("500 nm High Purity 99.99% Alpha Aluminum Oxide Nanoparticles", von MSE PRO; d50: 500 nm, 99,99% Reinheit nach Metallen) unter kräftigem Rühren in die Mischung gegeben und für weitere 30 Minuten gerührt, dann wurden 0,228 g wässrige Phosphorsäure (~85 Gew.-%, Sigma Aldrich) unter magnetischem Rühren in die Lösung gegeben und für weitere 6 Stunden gerührt. Schließlich wurden die mit einer Li⁺-und Phosphat-Ionen enthaltenden Oberflächenmodifikation versehenen LPO-Al₂O₃-Teilchen durch Zentrifugieren, Waschen mit reinem Wasser und Trocknen im Vakuumofen bei 80 °C und einem Luftdruck von 0.01 hPa über Nacht erhalten.

### Beispiel 3: Herstellung eines Li⁺-haltigen keramischen Füllstoffes in größerem Maßstab

Oberflächenmodifizierte c-LLZO-Teilchen, die eine Li⁺- und Phosphat-Ionen-enthaltende Oberflächenmodifikation umfassen (LPO-c-LLZO): 30 g c-LLZO (d10: 0,31 µm, d50: 5,37 µm, d90: 14,04 µm, bestimmt durch Laserdiffraktometrie), 0,30 g Li₂CO₃ und 84 g trockenes Ethanol wurden mit 40 Wolframcarbid (WC)-Mahlkugeln (d=10 mm) in ein 250 mL WC-Mahlgefäß gegeben und in einer Planeten-Kugelmühle (PM400, Retsch) mit 250 U/min für 5 min gemahlen. 37,4 g Zitronensäure-Monohydrat wurden zugegeben und das Gemisch in der Mühle mit 70 U/min für 15 min gerührt. 8,05 g wässrige Phosphorsäure (~85 Gew.-%, Sigma-Aldrich) wurden zugegeben und das Gemisch in der Mühle mit 70 U/min für 30 min gerührt. Die Mahlkugeln wurden in einem Küchensieb aufgefangen und mit 30 mL trockenem Ethanol gewaschen. Die aufgefangene Suspension wurde mit einer Keramikfritte mit der Porengröße 4 filtriert und zweimal mit jeweils 20 mL trockenem Ethanol gewaschen. Die oberflächenmodifizierten c-LLZO-Teilchen wurden erhalten, nachdem der Filterkuchen über Nacht in einem Vakuumofen bei 80 °C g und einem Luftdruck von 0.01 hPa getrocknet und die Teilchen 30 Minuten lang bei 250 °C wärmebehandelt wurden.

### Beispiel 4: Herstellung eines LPO-c-LLZO-Teilchen-haltigen Hybridelektrolyten sowie einer Separatorenmembran

Herstellung des Komposit-Polymerelektrolyten:
Zunächst wurden 0,4 g PVDF-HFP-Pellets (Poly(vinylidenfluorid-co-hexafluorpropylen); durchschnittliches Mw -455.000, durchschnittliches Mn -110.000, Pellets von Sigma-Aldrich) in 3,6 ml DMF unter kräftigem Rühren für 6 h eingelegt. 0,08 g LPO-c-LLZO aus Beispiel 1a) wurden in die Mischung gegeben und durch Ultraschallbehandlung für 30 min dispergiert, um die Dispersion zu verbessern. Danach wurden 0,6 g Lithiumbis(trifluormethylsulfonyl)amid (LiTFSI) in das Gemisch gegeben und 12 Stunden lang bei 50 °C gerührt. Die erhaltene Aufschlämmung wurden mittels Folienguss auf eine silikonierte PET-Kunststofffolie aufgebracht, dabei wurde eine Schlitzhöhe von 400 µm verwendet. Die Größe der PVDF-HFP/LPO-c-LLZO-Hybridmembran betrug 25 cm x 10 cm. Die Membran wurde durch Entfernen des DMF-Lösungsmittels bei 80 °C und einem Luftdruck von 0.01 hPa im Vakuumofen über Nacht getrocknet, die Dicke nach der Trocknung betrug 55 µm.

### Beispiel 5: Herstellung einer LPO-c-LLZO-Teilchen-haltigen Komposit-Kathode

NCM811-Komposit-Kathode:
0,7 g NCM811 (LiNi_{0,8}Co_{0,1}Mn_{0,1}O₂, 0,05 g LPO-c-LLZO aus Beispiel 1a), 0,1 g Super P (Kohlenstoffschwarz, 99+% (Reinheit nach Metallen), BET-spezifische Oberfläche: 57.0-67.0 m²/g, Thermo Scientific Chemicals, "Super P^{™} conductive"), 0,05 g LiTFSI und 0,1 g PVDF-HFP (Poly(vinylidenfluorid-co-hexafluorpropylen); durchschnittliches Mw ~455.000, durchschnittliches Mn ~110.000, Pellets von Sigma-Aldrich) wurden zu 3,2 g 1-Methyl-2-Pyrrolidon (NMP)-Lösungsmittel gegeben und 4 Stunden lang mechanisch gerührt. Die so vorbereitete Kathodenpaste wurde mittels Folienguss gleichmäßig auf eine Aluminiumfolie (Dicke: 30 µm) aufgetragen und nach einer 4-stündigen Strahltrocknung bei 80 °C noch 12 Stunden bei 80 °C und einem Luftdruck von 0.01 hPa vakuumgetrocknet. Die Beladung (Menge an Aktivmaterial NCM 811) betrug dabei 2.28 mg/cm², die Größe der Folie betrug 25x10 cm².

### Beispiel 6: Herstellung einer LPO-c-LLZO-Teilchen-haltigen Batteriezelle

Um eine Vollzelle gemäß Fig. 3 herzustellen, wurden aus der in Beispiel 4 erfindungsgemäß hergestellten Separatormembran kreisrunde Membranstücke mit 16 mm Durchmesser (für Vollzellbau) bzw. 12 mm (für Leitfähigkeitstests) ausgeschnitten. Die Membran mit 16 mm Durchmesser wurde sodann in eine wie im Folgenden beschrieben hergestellte Lösung gelegt:
2,91 g LiTFSI wurden in 10 g Succinonitril gegeben. Die Konzentration von LiTFSI betrug 1 mol/L, und es wurden 0,5 g FEC (Fluorethylencarbonat) als Additiv für die Bildung der SEI (Festelektrolyt-Interphase) hinzugefügt. 0,104 g PEGDA (Polyethylenglycoldiacrylat), 0,064 g AIBN (Azobis(isobutyronitril)) und 3,2 g LiTFSI-Pulver wurden in 10 g Butylacrylat gegeben. Die beiden vorbereiteten flüssigen Lösungen wurden mit dem gleichen Volumen (1 ml: 1 ml) bei 50 °C homogen gemischt und die PVDF/LPO-LLZO-Membran aus Beispiel 4 für 1 Stunde in die so vorbereitete Lösung gelegt.

Anschließend wurde die so vorbereitete Separatormembran mit den Elektroden kombiniert. Hierfür wurde die erfindungsgemäß hergestellte Mischkathode (Beispiel 5) mit einem Durchmesser von 10 mm ausgeschnitten. Eine Li-Metallanode wurde durch Auswalzen eines Li Metall-Stranges (Hersteller: Sigma Aldrich, 99.9% Reinheit nach Metallen) in Ar-Atmosphäre auf eine Enddicke von 100 µm und Zurechtschneiden auf 12 mm Durchmesser hergestellt.

Die drei Komponenten wurden wie in Fig. 3 dargestellt übereinander in ein Knopfzellengehäuse (CR 2032) gelegt und dieses wurde mit einem Crimper (MSK-160D Knopfzellenpresse, Hersteller: MTI Corp. USA) verschlossen. Alle Arbeitsschritte für den Zellenaufbau wurden in einer mit Argon gefüllten Glovebox durchgeführt. Die Zellen wurden anschließend 2 Stunden lang bei 60 °C in den Ofen gestellt und anschließend getestet.

### Beispiel 7: Herstellung eines LPO-Al₂O₃-Teilchen-haltigen Polymerelektrolyten sowie einer Separatorenmembran

Herstellung des Komposit-Polymerelektrolyten:
Zunächst wurden 0,4 g PVDF-HFP-Pellets (Poly(vinylidenfluorid-co-hexafluorpropylen); durchschnittliches Mw -455.000, durchschnittliches Mn -110.000, Pellets von Sigma-Aldrich) in 3,6 ml DMF unter kräftigem Rühren für 6 h eingelegt. 0,08 g LPO-Al₂O₃ aus Beispiel 2 wurden in die Mischung gegeben und durch Ultraschallbehandlung für 30 min dispergiert, um die Dispersion zu verbessern. Danach wurden 0,2 g Lithiumbis(trifluormethylsulfonyl)amid (LiTFSI) in das Gemisch gegeben und 12 Stunden lang bei 50 °C gerührt. Die erhaltene Aufschlämmung wurde mittels Folienguss auf eine silikonierte PET-Kunststofffolie aufgebracht, dabei wurde eine Schlitzhöhe von 400 µm verwendet. Die Größe der PVDF-HFP/LPO-Al₂O₃-Hybridmembran betrug 25 cm x 10 cm. Die Membran wurde durch Entfernen des DMF-Lösungsmittels bei 80 °C und einem Luftdruck von 0.01 hPa im Vakuumofen über Nacht getrocknet, die Dicke nach Trocknung betrug 60 µm.

### Beispiel 8: Herstellung einer LPO- Al₂O₃-Teilchen -haltigen Batteriezelle

Um eine Vollzelle in Analogie zu der in Beispiel 6 beschriebenen und in Fig. 3 dargestellten LPO-c-LLZO-Teilchen-haltigen Zelle herzustellen, wurde aus der in Beispiel 7 erfindungsgemäß hergestellten Separatormembran basierend auf LPO-Al₂O₃ ein kreisrundes Membranstück mit 16 mm Durchmesser ausgeschnitten.

Diese wurde sodann in einer Lösung bestehend aus folgenden Komponenten ausgelagert:
2,91 g LiTFSI wurden in 10 g Succinonitril gegeben. Die Konzentration von LiTFSI betrug 1 mol/L, und es wurden 0,5 g FEC (Fluorethylencarbonat) als Additiv für die Bildung der SEI (Festelektrolyt-Interphase) hinzugefügt. 0,104 g PEGDA (Polyethylenglycoldiacrylat), 0,064 g AIBN (Azobis(isobutyronitril)) und 3,2 g LiTFSI-Pulver wurden in 10 g Butylacrylat gegeben. Die beiden vorbereiteten flüssigen Lösungen wurden mit dem gleichen Volumen (1 ml : 1 ml) bei 50 °C homogen gemischt und die PVDF/LPO-Al₂O₃-Membran aus Beispiel 7 für 1 Stunde in die vorbereitete Lösung gelegt.

Als Kathode wurde eine konventionelle NCM-basierte Kathode hergestellt. Dafür wurden 0,8 g NCM811 (LiNi_{0,8}Co_{0,1}Mn_{0,1}O₂), 0,1 g Super P (Kohlenstoffschwarz, 99+% (Reinheit nach Metallen), BET-spezifische Oberfläche: 57.0-67.0 m²/g, Thermo Scientific Chemicals, "Super P^{™} conductive"), und 0,1 g PVDF (Poly(vinylidenfluorid-co-hexafluorpropylen); durchschnittliches Mw ~455.000, durchschnittliches Mn ~110.000, Pellets von Sigma-Aldrich) zu 3,2 g 1-Methyl-2-Pyrrolidon (NMP)-Lösungsmittel gegeben und 4 Stunden lang mechanisch gerührt. Anschließend wurde die Kathodenpaste gleichmäßig auf Aluminiumfolie (Dicke: 30 µm) aufgetragen und nach einer 4-stündigen Strahltrocknung bei 80 °C nochmals 12 Stunden bei 80 °C und einem Luftdruck von 0.01 hPa vakuumgetrocknet.

Anschließend wurde die vorbereitete Separatormembran mit den Elektroden kombiniert. Hierfür wurde die konventionelle Kathode mit einem Durchmesser von 10 mm ausgeschnitten. Eine Li-Metallanode wurde durch Auswalzen eines Li Metall-Stranges (Hersteller: Sigma Aldrich, 99.9% Reinheit nach Metallen) in Ar-Atmosphäre auf einen Enddicke von 100 µm und zurechtschneiden auf 12 mm Durchmesser hergestellt.

Die drei Komponenten wurden übereinander in einem Knopfzellengehäuse (CR 2032) gelegt und dieses wurde mit einem Crimper (MSK-160D Knopfzellenpresse, Hersteller: MTI Corp. USA) verschlossen. Alle Arbeitsschritte für den Zellenaufbau wurden in einer mit Argon gefüllten Glovebox durchgeführt. Die Zellen wurden anschließend 2 Stunden lang bei 60 °C in den Ofen gestellt und anschließend getestet.

### Stabilitätstests

### Beispiel 9: Vergleich der Stabilität von c-LLZO und LPO-c-LLZO in a) einer Polymerpaste, b) einer getrockneten Polymerpaste, und c) bei der Verwendung der getrockneten Polymerpaste als Separatormembran

**a)**
   Um die Stabilität von oberflächenmodifizierten Metalloxidsubstratpulvern zu zeigen, wurde eine Paste zur Herstellung einer Batteriekomponente mittels Foliengießen aus PVDF und c-LLZO bzw. PVDF und LPO-c-LLZO aus Beispiel 1a) in DMF angefertigt - entsprechend der Vorschrift in Beispiel 4.

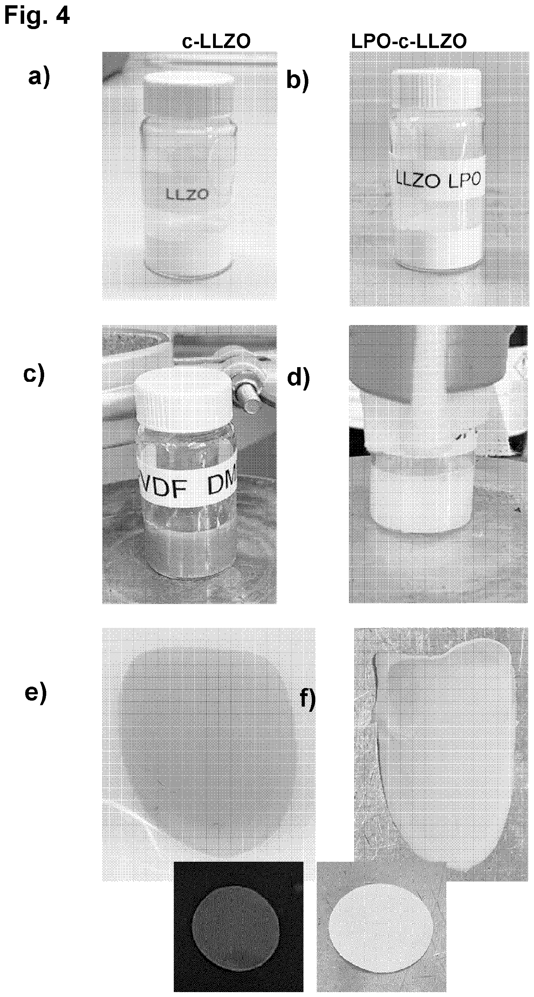

Sowohl das unbeschichtete c-LLZO-Ausgangspulver (Fig. 4 a)) als auch das beschichtete LPO-c-LLZO (Fig. 4 b)) sind rein weiß. Vor dem Schritt des Foliengusses in Beispiel 4 wurde die Paste jedoch bei unbeschichtetem c-LLZO braun (Fig. 4 c)), während die Farbe der Paste des oberflächenmodifizierten LPO-c-LLZO unverändert weiß blieb (Fig. 4 d)).
**b)** Als nächstes wurden die in Beispiel 9a) erhaltenen Pasten wie in Beispiel 4 beschrieben mittels Foliengusses zu Separatoren verarbeitet, und das Lösungsmittel wurde verdampft.

Die gegossenen Streifen sind in Fig. 4 e) für unbeschichtetes c-LLZO und in f) und für oberflächenmodifiziertes LPO-c-LLZO photographisch dargestellt. Der Farbunterschied ist auch hier klar erkennbar.
**c)**
Aus den gegossenen Streifen aus Beispiel 9b) wurden Separatoren für elektrochemische Leitfähigkeitstests hergestellt, indem runde Proben mit 12 mm Durchmesser ausgeschnitten wurden.

Photographische Aufnahmen des PVDF-Separators mit c-LLZO und eines Separators mit oberflächenmodifiziertem LPO-c-LLZO sind ebenfalls in Fig. 4 e) und f) zu sehen. Während der PVDF-Separator mit LPO-LLZO reinweiß (Fig. 4f)) ist, hat der PVDF-Separator mit unmodifiziertem c-LLZO eine braune Farbe (Fig. 4e)).

Die Leitfähigkeit der Separatoren aus c-LLZO-haltigem Polymer und LPO-c-LLZO-haltigem Polymer wurde in Abhängigkeit von der Temperatur gemessen. Dafür wurden diese mit einer Presskraft von 10 N zwischen zwei Ni-Metallplättchen mit 12mm Durchmesser und 0.5 mm Dicke in einer Swagelok-Zelle verbaut.

Anschließend wurde elektrochemische Impedanzspektroskopie (EIS) mit einer Frequenz von 7 MHz bis 1 Hz und einer elektrischen Feldstörung von 10 mV mm⁻¹ durchgeführt. Der Test wurde auf dem BioLogic VMP-300 Multi-Potentiostat durchgeführt. Die lonenleitfähigkeiten σ wurden nach der Formel σ=dR/A berechnet, wobei R der Widerstand, d die Probendicke und A die Probenfläche ist.

Die nachfolgende Tabelle 1 zeigt die Ergebnisse dieser Messungen.

**Tabelle 1**

| Temperatur (°C) | Li⁺-Leitfähigkeit (S/cm⁻¹) | |
|---|---|---|
| | PVDF-HFP/LPO-c-LLZO | PVDF-HFP/c-LLZO |
| 20 | 1,45 E-04 | 3,02E-05 |
| 25 | 1,91 E-04 | 4,07E-05 |
| 30 | 2,29 E-04 | 5,62E-05 |
| 40 | 3,89 E-04 | 9,55E-05 |
| 50 | 5,62 E-04 | 1,62E-04 |
| 60 | 8,13 E-04 | 3,02E-04 |

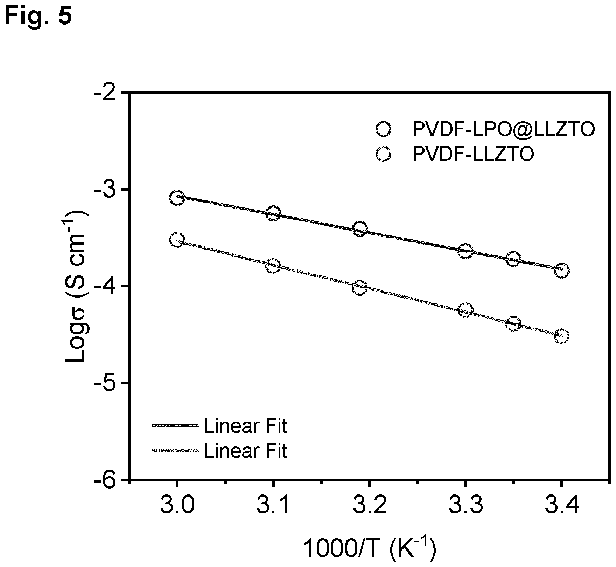

Eine graphische Darstellung der Messergebnisse für den Separator aus Polymer mit LPO-c-LLZO und des Vergleichsbeispiels des Polymers mit c-LLZO ist in Fig. 5 wiedergegeben. Da die Leitfähigkeit durch die Oberflächenmodifikation deutlich verbessert wurde, bilden die Messpunkte des LPO-c-LLZO-haltigen Polymers ("PVDF-LPO@LLZTO") den oberen Graph, während der untere Graph die Leitfähigkeit des unbehandeltes c-LLZO enthaltenden Polymers ("PVDF-LLZTO") wiedergibt.

### Beispiel 10: Elektrochemische Charakterisierung der Zyklenstabilität

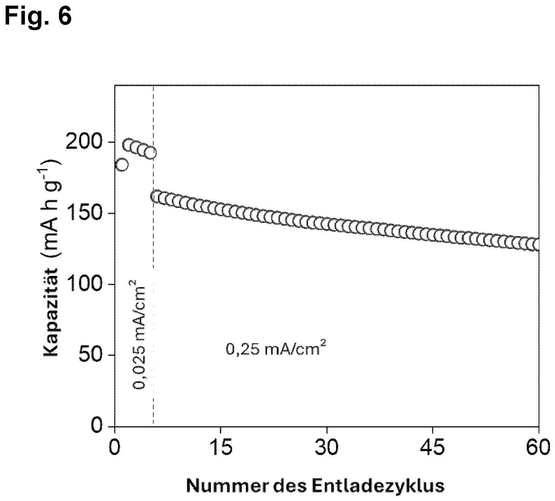

Eine Knopfzelle des Typs CR2032 wurde mit der NCM811-Kathode, der PVDF-HFP/LPO-c-LLZO-Membran und der Lithiumfolienanode nach der Vorschrift in Beispiel 6 für Zyklustests zusammengebaut. Die galvanostatischen Entlade- und Ladetests der Batterien wurden bei 25°C in einem Spannungsfenster von 3,0 V bis 4,3 V an einem BioLogic VMP-300 Multi-Potentiostat mit einer Stromstärke von 0.025 mA/cm² für die Zyklen 1 bis 5 und 0.25 mA/cm² für die Zyklen 6 bis 60 gemessen. Die erhaltenen Entladekapazitäten der Zelle sind in Fig. 6 dargestellt.

Die in der Messung erhaltenen Werte sind in der nachfolgenden Tabelle 2 zusammengefasst.

**Tabelle 2**

| **Nummer des Entladezyklus** | **Kapazität (mA h g⁻¹)** | | **Nummer des Entladezyklus** | **Kapazität (mA h g⁻¹)** | | **Nummer des Entladezyklus** | **Kapazität (mA h g⁻¹)** |
|---|---|---|---|---|---|---|---|
| 1 | 184.2 | | 21 | 148.0 | | 41 | 136.8 |
| 2 | 198.2 | | 22 | 147.4 | | 42 | 136.3 |
| 3 | 196.5 | | 23 | 146.8 | | 43 | 135.7 |
| 4 | 194.7 | | 24 | 146.1 | | 44 | 135.3 |
| 5 | 192.7 | | 25 | 145.4 | | 45 | 134.8 |
| 6 | 161.9 | | 26 | 144.7 | | 46 | 134.3 |
| 7 | 160.7 | | 27 | 143.9 | | 47 | 133.9 |
| 8 | 159.7 | | 28 | 143.4 | | 48 | 133.2 |
| 9 | 158.6 | | 29 | 143.0 | | 49 | 132.7 |
| 10 | 157.4 | | 30 | 142.4 | | 50 | 132.5 |
| 11 | 156.3 | | 31 | 141.9 | | 51 | 132.0 |
| 12 | 155.5 | | 32 | 141.3 | | 52 | 131.5 |
| 13 | 154.6 | | 33 | 140.8 | | 53 | 131.0 |
| 14 | 153.6 | | 34 | 140.4 | | 54 | 130.5 |
| 15 | 152.8 | | 35 | 139.9 | | 55 | 130.1 |
| 16 | 151.9 | | 36 | 139.4 | | 56 | 129.6 |
| 17 | 151.2 | | 37 | 139.0 | | 57 | 129.2 |
| 18 | 150.4 | | 38 | 138.5 | | 58 | 128.7 |
| 19 | 149.6 | | 39 | 137.8 | | 59 | 128.2 |
| 20 | 148.8 | | 40 | 137.3 | | 60 | 127.8 |

## Patentansprüche

1. Verfahren zur Oberflächenmodifikation von Metalloxidsubstraten, **dadurch gekennzeichnet, dass** das Metalloxidsubstrat
(1) zunächst in Anwesenheit von Li⁺-Ionen mit einer organischen Säure, bei der es sich um eine Carbonsäure oder eine vinyloge Carbonsäure handelt, in Kontakt gebracht wird, und anschließend
(2) mit einer anorganischen Säure, bei der sich nicht um Fluorwasserstoff oder Flusssäure handelt, in Kontakt gebracht wird,
und dass die Verfahrensschritte (1) und (2) in der Anwesenheit eines Lösungsmittels durchgeführt werden.

2. Das Verfahren gemäß Anspruch 1, weiter **dadurch gekennzeichnet, dass** es sich bei dem Lösungsmittel um Wasser, Methanol, Ethanol, n-Propanol, Isopropanol oder ein Gemisch derselben handelt,
bevorzugt um Ethanol oder ein Ethanol-haltiges Gemisch, bevorzugter um Ethanol oder ein Ethanol-Wasser-Gemisch
und/oder optional weiter **dadurch gekennzeichnet, dass** das nach den Verfahrensschritten (1) und (2) erhaltene oberflächenmodifizierte Metalloxidsubstrat anschließend in einem weiteren Schritt
(3) optional mit Wasser, Methanol, oder Ethanol, bevorzugt mehrere Male, gewaschen, dann optional abfiltriert wird,
und getrocknet wird, wobei die Trocknungstemperatur 350 °C nicht übersteigt.

3. Das Verfahren gemäß Anspruch 1 oder 2, weiterhin **dadurch gekennzeichnet, dass** das Metalloxidsubstrat in Form von energietechnischen oder elektrochemischen Bauelementen, Pellets, Granulaten, oder als Pulver vorliegt, bevorzugt als Pulver mit einer mittleren Teilchengröße d50 von 100 µm oder weniger, gemessen mittels Laserdiffraktometrie (nach ISO-13320, Gerät: Horiba LA-950-V2, Software Version: 9.3)

4. Das Verfahren gemäß einem beliebigen der Ansprüche 1 bis 3, **dadurch gekennzeichnet, dass** es sich bei dem Metalloxidsubstrat um ein Li⁺-Ionen-haltiges Metalloxidsubstrat (Li⁺-haltiges Substrat) handelt, das aus der Gruppe ausgewählt ist, die aus c-LLZO, t-LLZO, LLTO, LTO, LATP und dotiertem c-LLZO, t-LLZO, LLTO, LTO und LATP besteht, bevorzugt handelt es sich bei dem Li⁺-Ionen-haltigen Metalloxidsubstrat um c-LLZO oder dotiertes c-LLZO, noch bevorzugter um Al-, Ta- oder Ga-dotiertes c-LLZO.

5. Das Verfahren gemäß einem beliebigen der Ansprüche 1 bis 3, **dadurch gekennzeichnet, dass** es sich bei dem Metalloxidsubstrat um ein nicht-Li⁺-Ionen-haltiges Metalloxidsubstrat handelt (nicht-Li⁺-haltiges Substrat), dass aus der Gruppe ausgewählt ist, die aus Al₂O₃, TiO₂, ZrO₂, MgO und SiO₂ besteht, bevorzugt handelt es sich bei dem nicht-Li⁺-Ionen-haltigen Metalloxidsubstrat um Al₂O₃.

6. Das Verfahren gemäß einem beliebigen der Ansprüche 1 bis 5, **dadurch gekennzeichnet, dass** die Anwesenheit von Li⁺-Ionen durch die Zugabe eines Li⁺-Ionen-haltigen Salzes vor oder während dem in Kontakt bringen mit der organischen Säure in Schritt (1) erzielt oder vergrößert wird, wobei es sich bei dem zugegebenen Li⁺-Ionen-haltigen Salz bevorzugt um Lithiumhydroxid, Lithiumchlorid, oder Lithiumcarbonat handelt, noch bevorzugter um Lithiumcarbonat.

7. Das Verfahren gemäß einem beliebigen der Ansprüche 1 bis 6, **dadurch gekennzeichnet, dass** es sich bei dem Metalloxidsubstrat um ein Pulver mit einer mittleren Teilchengröße d50 der Teilchen des Metalloxidsubstrates im Bereich von 10 nm bis 100 µm, bevorzugt im Bereich von 100 nm bis 10 µm, und bevorzugter im Bereich von 500 nm bis 2 µm handelt, gemessen mittels Laserdiffraktometrie (nach ISO-13320, Gerät: Horiba LA-950-V2, Software Version: 9.3).

8. Das Verfahren gemäß einem beliebigen der Ansprüche 1 bis 7, **dadurch gekennzeichnet, dass** die organische Säure 1 bis 20 Kohlenstoffatome enthält, bevorzugt 2 bis 12 Kohlenstoffatome, noch bevorzugter 3 bis 10 Kohlenstoffatome, und dass die organische Säure 1 bis 6 Carboxylgruppen enthält, bevorzugt 2 bis 5 Carboxylgruppen, noch bevorzugter 2, 3 oder 4 Carboxylgruppen.

9. Das Verfahren gemäß einem beliebigen der Ansprüche 1 bis 8, **dadurch gekennzeichnet, dass** die organische Säure einen pKs-Wert im Bereich größer 2,5 aufweist, bevorzugt einen pKs-Wert im Bereich von 3,0 bis 5,0.

10. Das Verfahren gemäß einem beliebigen der Ansprüche 1 bis 9, **dadurch gekennzeichnet, dass** die organische Säure mindestens ein Heteroatom ausgewählt aus O, N, S und P enthält, bevorzugt mindestens ein O- Atom oder mindestens ein N-Atom, noch bevorzugter handelt es sich um Zitronensäure.

11. Das Verfahren gemäß einem beliebigen der der Ansprüche 1 bis 10, **dadurch gekennzeichnet, dass** die anorganische Säure aus der Gruppe ausgewählt ist, die aus Phosphorsäure H₃PO₄, Salpetersäure HNO₃, Schwefelsäure H₂SO₄, Chlorwasserstoffsäure HCl, Perchlorsäure HClO₄, schwefliger Säure H₂SO₃, salpetriger Säure HNO₂, und Borsäure H₃BO₃ besteht.

12. Das Verfahren gemäß dem vorherigen Anspruch 11, **dadurch gekennzeichnet, dass** die anorganische Säure Phosphorsäure H₃PO₄ umfasst.

13. Ein oberflächenmodifiziertes Metalloxidsubstrat, das durch das in den Ansprüchen 1 bis 12 beanspruchte Verfahren erhalten wird.

14. Die Verwendung des oberflächenmodifizierten Metalloxidsubstrates gemäß dem vorherigen Anspruch 13 zur Herstellung einer Batterie oder einer Batteriekomponente.

15. Eine Batterie oder Batteriekomponente, die das oberflächenmodifizierte Metalloxidsubstrat gemäß Anspruch 13 umfasst.
